# EUROPEAN PATENT APPLICATION

(11) **EP 1 703 437 A2**
(43) Date of publication of application: **20.09.2006**
(21) Application number: 06110986.4
(22) Date of filing: 10.03.2006
(51) Int. Cl.: G06K 9/00

(54) **Monitoring system, monitoring device and method, recording medium, and program**

(30) Priority: 15.03.2005 JP 2005072796
(71) Applicant: OMRON CORPORATION, Kyoto-shi, Kyoto 600-8530 (JP)
(72) Inventor: ANDO, Tanichi, OMRON Corp., 801 Minamifudodo-cho, Kyoto-shi, Kyoto 600-8530 (JP)
(74) Representative: Weihs, Bruno Konrad

(57) **Abstract**

A suspicious individual can be detected more accurately. A face detecting unit detects a face image of an approaching individual from a monitor image, and a characteristic amount detecting unit detects the characteristic amount of the approaching individual from the face image. A collating unit identifies an approaching individual by collating the characteristic amount of the approaching individual with the characteristic amount of an authorized individual which is recorded in an authorized individual information recording unit and the characteristic amount of a previously detected individual which is recorded in an approach information recording unit. An approaching activity detecting unit and an abnormal activity detecting unit compute the degree of suspiciousness of the approaching individual on the basis of the frequency with which the approaching individual approaches a target of monitoring, time at which the approaching individual approaches a target of monitoring, distance by which the approaching individual approaches a target of monitoring, and the like. A suspiciousness degree judgment unit judges whether the approaching individual is a suspicious individual or not, on the basis the degree of suspiciousness. The present invention can be applied to an on-vehicle monitoring system.

## Description

### BACKGROUND OF THE INVENTION

### 1. Field of the Invention

The present invention relates to a monitoring system, monitoring device and method, recording medium, and program. Particularly the present invention relates to a monitoring system, monitoring device and method, recording medium, and program using image data.

### 2. Description of the Related Art

There has been conventionally proposed a vehicle monitoring device for, upon entry of an individual into a vehicle, permitting entry of the individual into the vehicle if a face image of the individual captured by a camera matches a face image of the individual registered previously after collating the two images, or for reporting unauthorized intrusion if detecting unauthorized intrusion into the vehicle. (For example, see Japanese Patent Application Laid-Open No. 2004-276782)

However, the invention described in Japanese Patent Application Laid-Open No. 2004-276782 cannot detect a suspicious individual before the suspicious individual enters a vehicle, thus it was difficult to prevent the occurrence of damage on and inside of the vehicle.

The present invention is contrived in view of such circumstances, and is to detect suspicious individuals more accurately.

### SUMMARY OF THE INVENTION

The monitoring system of the present invention comprises: an image pickup apparatus for imaging a monitoring region to output a monitor image; face detection means for detecting an image of the face of an approaching individual, who approaches an object which is target of monitoring, from the monitor image; characteristic amount detection means for detecting amount of characteristics of the approaching individual from the image of the face of the approaching individual; recording control means for controlling recording of characteristic amount data indicating the characteristic amount of the approaching individual, on recording means; identifying means for identifying the approaching individual by collating the characteristic amount data on the approaching individual with characteristic amount data on an approaching individual detected in the past and recorded on the recording means; and judging means for judging whether or not the approaching individual is a suspicious individual, on the basis of the frequency with which the image of the face of the identified approaching individual is detected within a predetermined period of time.

The image pickup apparatus is configured with an image pickup apparatus capable of imaging a subject in a dynamic range wider than a human eye by using a logarithm conversion type image pickup element such as an HDRC (High Dynamic Range CMOS (Complementary Metal Oxide Semiconductor)).

The face detection means, characteristic amount detection means, recording control means, identifying means, and judging means are configured with an arithmetic device such as a CPU (Central Processing Unit) and DSP (Digital Signal Processor).

The face detection means detects an image of the face of an approaching individual using a method such as a template matching method or a neural network method. It should be noted that the method of detecting an image of a face used in the face detection means is not limited to a particular method.

The characteristic amount includes a face or the position of each part of the face such as eyes, nose, mouth, eyebrows, ears, moles, fleck, and the like, the shape and size of the face, the proportion of the size of the each portion of the face, the colors of the skin, hair, eyes and the like, the shape of the iris, and the shape of the bone structure estimated by appearance.

In the monitoring system of the present invention, monitoring regions are imaged to output a monitor image comprising pixel values substantially proportional to the logarithm of incident light quantity, an image of the face of an approaching individual, who approaches a target of monitoring, is detected from the monitor images, amount of characteristics of the approaching individual is detected from the image of the face of the approaching individual, recording, on recording means, of characteristic amount data indicating the characteristic amount of the approaching individual is controlled, the approaching individual is identified by collating the characteristic amount data on the approaching individual with characteristic amount data on the approaching individual detected in the past and recorded on the recording means, and whether the approaching individual is a suspicious individual or not is judged on the basis of the frequency with which the image of the face of the identified approaching individual is detected within a predetermined period of time.

Therefore, a suspicious individual can be detected more accurately, and the occurrence and expansion of damage against a target of monitoring can be prevented.

In the monitoring system of the present invention, the image pickup apparatus can output the monitor image comprising pixel values substantially proportional to the logarithm of incident light quantity.

The monitoring device of the present invention comprises: face image detection means for detecting an image of the face of an approaching individual, who approaches a target of monitoring, from monitor images obtained by imaging monitoring regions; characteristic amount detection means for detecting amount of characteristics of the approaching individual from the image of the face of the approaching individual; first recording control means for controlling recording of characteristic amount data indicating the characteristic amount of the approaching individual, on first recording means; identifying means for identifying the approaching individual by collating the characteristic amount data on the approaching individual with characteristic amount data on the approaching individual detected in the past and recorded on the first recording means; and judging means for judging whether or not the approaching individual is a suspicious individual on the basis of the frequency with which the image of the face of the identified approaching individual is detected within a predetermined period of time.

The face image detection means, characteristic amount detection means, recording control means, identifying means, and judging means are configured with an arithmetic device such as a CPU (Central Processing Unit) and DSP (Digital Signal Processor) .

The face image detection means detects an image of the face of an approaching individual using a method such as a template matching method or a neural network method. It should be noted that the method of detecting an image of a face used in the face image detection means is not limited to a particular method.

The characteristic amount includes a face or the position of each part of the face such as eyes, nose, mouth, eyebrows, ears, moles, fleck, and the like, the shape and size of the face, the proportion of the size of the each portion of the face, the colors of the skin, hair, eyes and the like, the shape of the iris, and the shape of the bone structure estimated by appearance.

In the monitoring device of the present invention, an image of the face of an approaching individual, who approaches a target of monitoring, is detected from the monitor images obtained by imaging the imaging regions, amount of characteristics of the approaching individual is detected from the image of the face of the approaching individual, recording, on the first recording means, of characteristic amount data indicating the characteristic amount of the approaching individual is controlled, the approaching individual is identified by collating the characteristic amount data on the approaching individual with characteristic amount data on the approaching individual detected in the past and recorded on the first recording means, and whether the approaching individual is a suspicious individual or not is judged on the basis of the frequency with which the image of the face of the identified approaching individual is detected within a predetermined period of time.

Therefore, a suspicious individual can be detected more accurately, and the occurrence and expansion of damage against a target of monitoring can be prevented.

In the monitoring device of the present invention, the judging means can further judge whether the approaching individual is a suspicious individual or not, on the basis of a period of time in which the image of the face of the approaching individual is detected continuously.

Therefore, a suspicious individual, who, for example, attempts a suspicious activity on a target of monitoring, or remains in the vicinity of a target to be approached for a long period of time in an attempt to make a preliminary inspection before performing the suspicious activity, can be detected more securely before any damage is incurred.

In the monitoring device of the present invention, the judging means can further judge whether the approaching individual is a suspicious individual or not, on the basis of the distance between the approaching individual and the object.

Therefore, a suspicious individual, who, for example, attempts a suspicious activity on a target of monitoring, or approaches the target of monitoring in an attempt to make a preliminary inspection before performing the suspicious activity, can be detected more securely before any damage is incurred.

The monitoring device of the present invention further comprises sight line detection means for detecting the direction of the line of sight of the approaching individual, and the judging means can judge whether the approaching individual is a suspicious individual or not, on the basis of the rate at which the line of sight of the approaching individual focuses on the object within a predetermined period of time.

The sight line detection means is configured with an arithmetic device such as a CPU (Central Processing Unit) and DSP (Digital Signal Processor).

Therefore, a suspicious individual, who, for example, attempts a suspicious activity on a target of monitoring, or frequently turns his gaze on the target of monitoring in an attempt to make a preliminary inspection before performing the suspicious activity, can be detected more accurately before any damage is incurred.

The monitoring device of the present invention further comprises angle detection means for detecting an angle in which the approaching individual moves around the object, on the basis of the monitor images, and the judging means can further judge whether the approaching individual is a suspicious individual or not, on the basis of the angle.

Therefore, a suspicious individual, who, for example, attempts a suspicious activity on a target of monitoring, or prowls around the target of monitoring in an attempt to make a preliminary inspection before performing the suspicious activity, can be detected more accurately before any damage is incurred.

The monitoring device of the present invention can further comprise disguised suspicious individual detection means for detecting a disguised suspicious individual who is the approaching individual with face covered, on the basis of a period of time for which a state, in which the approaching individual is rendered in the monitor image but an image of the face of the approaching individual is not detected by the face detection means, lasts.

The disguised suspicious individual detection means is configured with an arithmetic device such as a CPU (Central Processing Unit) and DSP (Digital Signal Processor).

Therefore, a disguised suspicious individual, who is an approaching individual with face covered with, for example, a ski mask, hood of a jacket, full-face helmet or the like, can be detected more accurately.

The monitoring device of the present invention can further comprise protection control means for controlling operation of the object so as to protect the object from a suspicious individual, when judged that the approaching individual is a suspicious individual.

The protection control means is configured with an arithmetic device such as a CPU (Central Processing Unit) and DSP (Digital Signal Processor).

Therefore, the occurrence and expansion of damage against a target of monitoring can be prevented.

The monitoring device of the present invention can further comprise caution/warning/intimidating means for cautioning, warning, or intimidating the approaching individual to cause the approaching individual to stay away from the object, when judged that the approaching individual is a suspicious individual.

The caution/warning/intimidating means has, for example, a display device with an LED (Light Emitting Diode) or the like and a sound output device with a speaker or the like. For example, the caution/warning/intimidating means cautions, warns or intimates the approaching individual by displaying a message, outputting sound, or blinking or emitting light.

Therefore, execution of a suspicious activity by the approaching individual can be avoided.

The monitoring device of the present invention can further comprise transmission means for transmitting information on a suspicious individual to other device, when judged that the approaching individual is the suspicious individual.

The transmission means is configured with an arithmetic device such as a CPU (Central Processing Unit) and DSP (Digital Signal Processor), or various communication devices.

Therefore, the information on a suspicious individual can be reported or acquired promptly. Moreover, the information on the suspicious individual can be shared with other devices promptly.

In the monitoring device of the present invention, the identifying means can further identify an approaching individual by collating the characteristic amount data on the approaching individual with characteristic amount data on a non-targeted individual who is not a target of detection of the suspicious individual recorded on second recording means, and the judging means can judge that the approaching individual is not a suspicious individual when the approaching individual is identified as the non-targeted individual.

The non-targeted individual is, for example, an individual who is permitted to use an object which is a target of monitoring.

Accordingly, the accuracy of detecting a suspicious individual is improved.

It should be noted that the first recording means and the second recording means may be configured with, for example, one memory or a plurality of memories.

The monitoring device of the present invention can further comprise second recording control means for controlling recording of the characteristic amount data so as to record the characteristic amount data on the approaching individual, who is judged as a suspicious individual, on the second recording means through a user command.

The recording control means is configured with an arithmetic device such as a CPU (Central Processing Unit) and DSP (Digital Signal Processor).

Therefore, the approaching individual, who is judged as a suspicious individual, can be easily and promptly registered as the non-targeted individual.

In the monitoring device of the present invention, the monitor image can be captured by an image pickup apparatus which has a logarithm conversion type image pickup element for outputting a pixel value substantially proportional to the logarithm of incident light quantity.

Consequently, a monitor image faithful to the subject can be captured securely, and the accuracy of detecting the face of an approaching individual, identifying the face of the approaching individual (face recognition), and detecting movement of the approaching individual is improved, thus detection of a suspicious individual can be performed with a high degree of accuracy. Moreover, the limitation of the usage environment of the image pickup apparatus is small, and fill light or other light is not required in the image pickup apparatus, thus the convenience of the image pickup apparatus is improved. Further, an image of the face of an approaching individual can be securely acquired regardless of the conditions of the surrounding environment, thus the image is helpful in specifying a suspicious individual at a later time.

In the monitoring device of the present invention, the image pickup element can output a pixel value substantially proportional to the logarithm of incident light quantity by using a subthreshold characteristic of a semiconductor.

The monitoring method and program of the present invention comprise: a face image detection step of detecting an image of the face of an approaching individual, who approaches an object which is a target of monitoring, from monitor images obtained by imaging monitoring regions; a characteristic amount detection step of detecting amount of characteristics of the approaching individual from the image of the face of the approaching individual; a recording control step of controlling recording of characteristic amount data indicating the characteristic amount of the approaching individual, on recording means; an identifying step of identifying the approaching individual by collating the characteristic amount data on the approaching individual with characteristic amount data on an approaching individual detected in the past and recorded on the recording means; and a judging step of judging whether or not the approaching individual is a suspicious individual, on the basis of the frequency with which the image of the face of the identified approaching individual is detected within a predetermined period of time.

The characteristic amount includes a face or the position of each part of the face such as eyes, nose, mouth, eyebrows, ears, moles, fleck, and the like, the shape and size of the face, the proportion of the size of the each portion of the face, the colors of the skin, hair, eyes and the like, the shape of the iris, and the shape of the bone structure estimated by appearance.

In the monitoring method and program of the present invention, an image of the face of an approaching individual, who approaches a target of monitoring, is detected from the monitor images obtained by imaging the imaging regions, amount of characteristics of the approaching individual is detected from the image of the face of the approaching individual, recording, on the first recording means, of characteristic amount data indicating the characteristic amount of the approaching individual is controlled, the approaching individual is identified by collating the characteristic amount data on the approaching individual with characteristic amount data on the approaching individual detected in the past and recorded on the first recording means, and whether the approaching individual is a suspicious individual or not is judged on the basis of the frequency with which the image of the face of the identified approaching individual is detected within a predetermined period of time.

Therefore, a suspicious individual can be detected more accurately, and the occurrence and expansion of damage against a target of monitoring can be prevented.

According to the present invention, a suspicious individual can be detected. Moreover, according to the present invention, a suspicious individual can be detected more accurately, and the occurrence and expansion of damage against a target of monitoring can be prevented.

### BRIEF DESCRIPTION OF THE DRAWINGS

Fig. 1 is a block diagram showing an embodiment of a network monitoring system of the present invention;
Fig. 2 is a block diagram showing an embodiment of the monitoring system of Fig. 1;
Fig. 3 is a block diagram showing a configuration example of a function of an image pickup unit shown in Fig. 2;
Fig. 4 is a graph showing the sensitivity characteristic of a logarithm conversion type image pickup element and the like;
Fig. 5 is a block diagram showing a configuration example of a function of a peripheral information acquisition unit shown in Fig. 2;
Fig. 6 is a block diagram showing an embodiment of a user ID acquisition unit shown in Fig. 5;
Fig. 7 is a block diagram showing an example of connection of a target-of-monitoring information acquisition unit shown in Fig. 5;
Fig. 8 is a block diagram showing a configuration example of a function of an environmental information acquisition unit shown in Fig. 5;
Fig. 9 is a block diagram showing a configuration example of a function of a suspicious individual detecting unit shown in Fig. 2;
Fig. 10 is a block diagram showing a configuration example of a function of an approaching activity detecting unit and an abnormal activity detecting unit shown in Fig. 9;
Fig. 11 is a figure for explaining the degree of suspiciousness in approaching frequency;
Fig. 12 is a figure for explaining the degree of suspiciousness in approaching frequency;
Fig. 13 is a block diagram showing a configuration example of a function of a continuous activity information recording unit;
Fig. 14 is a block diagram showing a configuration example of a function of a coping operation unit shown in Fig. 2;
Fig. 15 is a block diagram showing a configuration example of a function of an authorized individual information recording unit shown in Fig. 2;
Fig. 16 is a table of a configuration example of an authorized individual information table;
Fig. 17 is a block diagram showing a configuration example of a function of an approach information recording unit shown in Fig. 2;
Fig. 18 is a table of a configuration example of an approach information table;
Fig. 19 is a flowchart for explaining monitoring processing which is executed by the monitoring system of Fig. 1;
Fig. 20 is a flowchart for explaining monitoring processing which is executed by the monitoring system of Fig. 1;
Fig. 21 is a figure showing an example of information displayed on a terminal device shown in Fig. 1;
Fig. 22 is a figure showing an example of the information displayed on the terminal device shown in Fig. 1;
Fig. 23 is a flowchart for explaining the detail of disguised suspicious individual detection processing which is a step S7 of Fig. 19;
Fig. 24 is a flowchart for explaining the detail of processing of judging the suspiciousness degree, which is a step S13 of Fig. 20;
Fig. 25 is a flowchart for explaining the detail of processing of judging the suspiciousness degree, which is a step S13 of Fig. 20;
Fig. 26 is a flowchart for explaining the detail of processing of computing the suspiciousness degree, which is a step S58 of Fig. 24 and a step S62 of Fig. 25;
Fig. 27 is a flowchart for explaining the detail of processing of computing the suspiciousness degree of approaching frequency, which is a step S83 of Fig. 26;
Fig. 28 is a flowchart for explaining the detail of processing of computing the suspiciousness degree of approaching distance, which is a step S84 of Fig. 26;
Fig. 29 is a flowchart for explaining the detail of processing of computing the suspiciousness degree of meeting time, which is a step S85 of Fig. 26;
Fig. 30 is a flowchart for explaining the detail of processing of computing the suspiciousness degree of the face direction, which is a step S86 of Fig. 26;
Fig. 31 is a flowchart for explaining the detail of processing of computing the suspiciousness degree of the direction of the line of sight, which is a step S87 of Fig. 26;
Fig. 32 is a flowchart for explaining the detail of processing of computing the suspiciousness degree of prowl, which is a step S88 of Fig. 26;
Fig. 33 is a flowchart for explaining the detail of processing of computing the suspiciousness degree of abnormal activity, which is a step S90 of Fig. 26;
Fig. 34 is a flowchart for explaining the detail of suspicious individual corresponding processing, which is a step S16 of Fig. 20;
Fig. 35 is a block diagram showing a part of a configuration example of a function of a control unit in a vehicle which is a target of monitoring;
Fig. 36 is a block diagram showing a part of a configuration example of a function of a control unit in a security device in a house which is a target of monitoring;
Fig. 37 is a flowchart for explaining an example of a flow of processing of the network monitoring system;
Fig. 38 is a figure showing an example of the information displayed by the terminal device shown in Fig. 1;
Fig. 39 is a flowchart for explaining an example of a flow of processing of the network monitoring system;
Fig. 40 is a figure schematically showing a configuration example of the appearance of the monitoring system of Fig. 1 in an embodiment;
Fig. 41 is a figure schematically showing a configuration example of the appearance of the monitoring system of Fig. 1 in another embodiment;
Fig. 42 is a block diagram showing a configuration example of the monitoring system of Fig. 1 in yet another embodiment;
Fig. 43 is a figure showing other example of the configuration of the function of the image pickup apparatus of the monitoring system;
Fig. 44 is a figure showing other example of the configuration of the function of the suspicious individual detecting unit of the monitoring system;
Fig. 45 is an example of the information displayed on the terminal device shown in Fig. 1;
Fig. 46 is an example of the information displayed on the terminal device shown in Fig. 1; and
Fig. 47 is a block diagram showing a configuration example of a personal computer.

### DESCRIPTION OF THE PREFERRED EMBODIMENTS

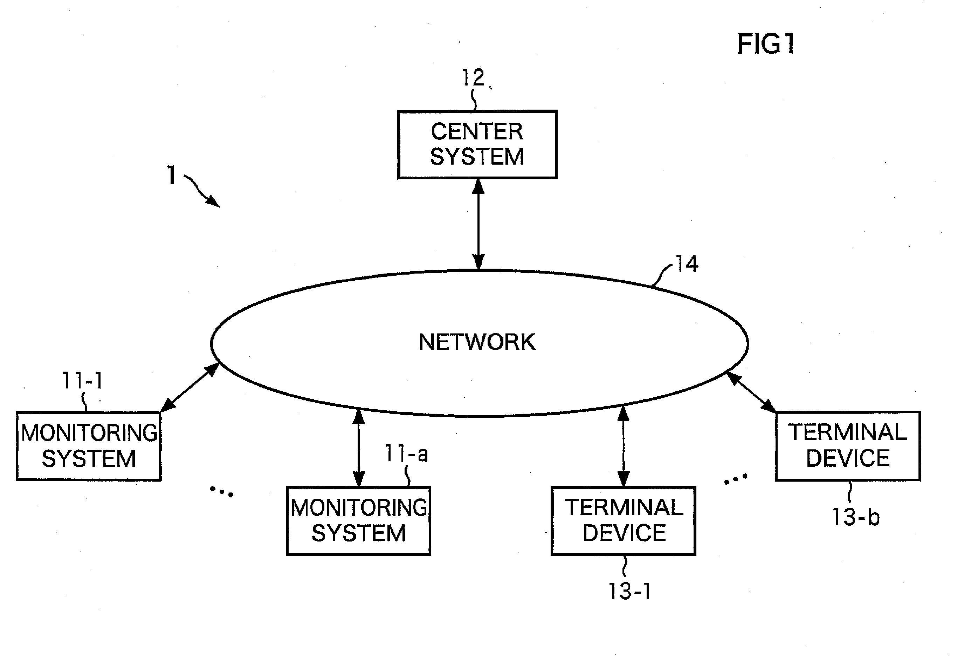

Fig. 1 is a block diagram showing an embodiment of a network monitoring system 1 to which the present invention is applied. The network monitoring system 1 comprises monitoring systems 11-1 through 11-a, a center system 12, and terminal devices 13-1 through 13-b. The monitoring systems 11-1 through 11-a, center system 12, and terminal devices 13-1 through 13-b are connected to one another via a network 14.

Hereinafter, the monitoring systems 11-1 through 11-a are simply referred to as "monitoring system 11" unless otherwise distinguished individually, and the terminal devices 13-1 through 13-b are simply referred to as a "terminal device 13" unless otherwise distinguished individually.

The monitoring systems 11-1 through 11-a, center system 12, and terminal devices 13-1 through 13-b carry out communications with one another via the network 14. It should be noted that the monitoring systems 11-1 through 11-a, center system 12, and terminal devices 13-1 through 13-b may carry out wire communication or wireless communication directly, instead of using the network 14.

The monitoring system 11 monitors an individual who approaches a target to be monitored (referred to as "target of monitoring" hereinafter) and suspicious activities on the target of monitoring in order to protect the target of monitoring from damages such as theft, vandalism, or intrusion. When a suspicious individual is detected, the monitoring system 11 reports the detection of the suspicious individual to other monitoring systems 11, the center system 12, or the terminal device 13 via the network 14. The monitoring system 11 further controls operation of the target of monitoring and cautions, warns, and intimidates the suspicious individual to cause the suspicious individual to stay away from the target of monitoring in order to prevent the occurrence and expansion of damage against a target of monitoring by the suspicious individual.

The target of monitoring which is monitored by the monitoring system 11 is, for example, a building, room, office, shop, administration building, vehicle, warehouse, locker, household article, real estate, animal, agricultural product, or the like, regardless of movable property or immovable property. Furthermore, a suspicious activity performed by a suspicious individual the monitoring system 11 monitors is, for example, a harmful activity against a human body, stalking activity, harassment, theft, vandalism, arson, unauthorized intrusion, or the like.

It should be noted that individuals who are detected by the monitoring system 11 as the individuals who approached the target of monitoring are classified as follows (these individuals are referred to as "approaching individual" hereinafter).

First, individuals who are authorized to use or approach the target of monitoring are referred to as "authorized individuals." Of the authorized individuals, those who are authorized to use the target of monitoring are referred to as "usage-authorized individuals." For example, when the target of monitoring is a vehicle, the usage-authorized individuals are drivers or passengers. On the other hand, of the authorized individuals, individuals who are not authorized to use the target of monitoring are referred to as "approach-authorized individuals." For example, if the target of monitoring is a vehicle, the approach-authorized individuals are those who use a nearby parking lot or neighbors.

Moreover, of the usage-authorized individuals, individuals who own the monitoring system 11 and individuals who use and operate the monitoring system 11 are also particularly referred to as "users" hereinafter.

On the other hand, individuals who are unauthorized to use or approach the target of monitoring are referred to as "unauthorized individuals." Further, of the unauthorized individuals, individuals who have been detected in the past as those who have approached the target of monitoring, and who have been recorded on the monitoring system 11 along with the information about the detected approaching activities of these individuals (referred to as "approach information" hereinafter) are referred to as "previously detected individuals." On the other hand, of the unauthorized individuals who have not been detected in the past as those who have approached the target of monitoring and thus are not recorded on the monitoring system 11 along with the approach information are referred to as "previously undetected individuals. "

The monitoring system 11 transmits the information about a detected suspicious individual, a state of the target of monitoring, a state of the monitoring region of the monitoring system 11 and the like to the other monitoring systems 11, center system 12, or terminal devices 13 via the network 14. The monitoring system 11 further receives information acquired by the other monitoring systems 11 from the other monitoring system 11 via the network 14. Moreover the monitoring system 11 receives commands for executing various processing and the information from the center system 12 via the network 14. The monitoring system 11 also receives commands for executing various processing, which are input by a user operating the terminal device 13, via the network 14.

The center system 12 is a system used by, for example, police, security firms and the like for providing various monitor services. The center system 12, for example, collects information acquired by each of the monitoring systems 11 via the network 14, and delivers the collected information to each of the monitoring systems 11 or the terminal devices 13 according to need. Accordingly, the information acquired by each of the monitoring systems 11 is shared promptly by all the monitoring systems 11 connected to the network 14, and, as a result, the detection rate is improved.

The center system 12 also transmits the commands for executing various processing to the monitoring systems 11 via the network 14. Further, the center system 12 receives the commands for executing various processing for the monitoring systems 11 from the terminal devices 13 via the network 14, and transfers the received commands for executing various processing to the monitoring systems 11. The center system 12 further receives information for requesting transmission of various information, from the monitoring systems 11 or the terminal devices 13 via the network 14, and transmits the requested information to the monitoring systems 11 or the terminal devices 13.

The terminal device 13 is an information processing terminal such as a computer, personal digital assistance, portable telephone, and PHS (Personal Handyphone System). The terminal device 13 receives various information from the monitoring system 11 or the center system 12 via the network 14. The terminal device 13, for example, displays the received information on an unshown display, or outputs the received information by sound. The terminal device 13 also transmits the commands for executing processing for the monitoring system 11 or center system 12, the commands being input by the user, to the monitoring system 1 or the center system 12 via the network 14.

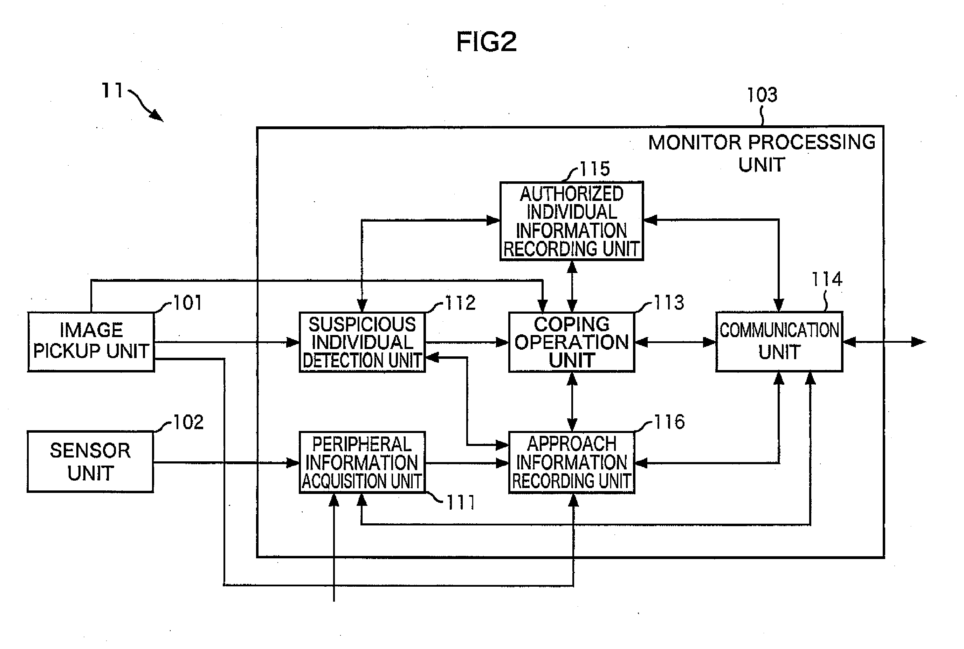

Fig. 2 is a block diagram showing an embodiment of the monitoring system 11 of Fig. 1. The monitoring system 11 comprises an image pickup unit 101, sensor unit 102, and monitor processing unit 103. The image pickup unit 101 and the monitor processing unit 103 perform wireless communication with each other, or are connected with each other via a coaxial cable, video cable, LAN (Local Area Network) cable or the like to perform wire communication with each other.

The image pickup unit 101 supplies image data (also referred to as "monitor image data" hereinafter) of an image obtained by imaging a target of monitoring, or of an image obtained by imaging surrounding monitoring regions, which are the target of monitoring (also referred to as "monitor image" hereinafter) to the monitor processing unit 103.

The sensor unit 102 comprises various sensors. The sensor unit 102 has sensors for sensing climate conditions or environment of the surrounding which is the target of monitoring, such as, for example, an illuminance sensor for sensing brightness, a temperature sensor for sensing temperature, a humidity sensor for sensing humidity, a wind speed sensor for sensing wind speed, an atmosphere pressure sensor for sensing atmosphere pressure, and a rainfall sensor for sensing amount of rainfall. The sensor unit 102 further has sensors for detecting the target of monitoring or the presence, state, or position of an object in the surrounding, which is the target of monitoring, such as, for example, an acceleration sensor for detecting a tilt or vibration of the target of monitoring, a speed sensor for detecting speed of the target of monitoring, an object sensor for detecting the target of monitoring or the presence or state of an object in the surrounding, which is the target of monitoring, and a distance sensor for detecting the distance between a suspicious individual and the target of monitoring or the object in the surrounding, which is the target of monitoring.

The sensor unit 102 supplies sensor data (also generically referred to as "monitoring sensor data" hereinafter), which is output from the various sensors provided in the sensor unit 102, to the monitor processing unit 103.

The monitor processing unit 103 comprises a peripheral information acquisition unit 111, a suspicious individual detecting unit 112, a coping operation unit 113, a communication unit 114, an authorized individual information recording unit 115, and an approach information recording unit 116.

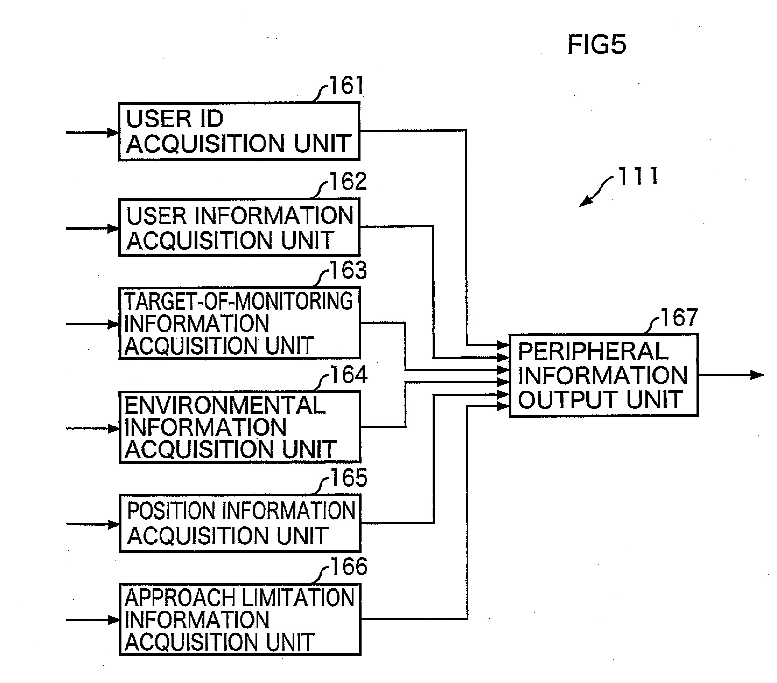

The peripheral information acquisition unit 111 acquires various information on the target of monitoring or various peripheral information of the target of monitoring (generically referred to as "peripheral information" accordingly hereinafter), other than the monitor image data, as described in detail hereinafter with reference to Fig. 5. For example, the peripheral information acquisition unit 111 acquires the monitoring sensor data from the sensor unit 102. The peripheral information acquisition unit 111, for example, acquires the sensor data which is output from the various sensors provided in the target of monitoring. Further, for example, the peripheral information acquisition unit 111 acquires various information from the other monitoring systems 11, center system 12, or terminal devices 13 via the network 14 and communication unit 114.

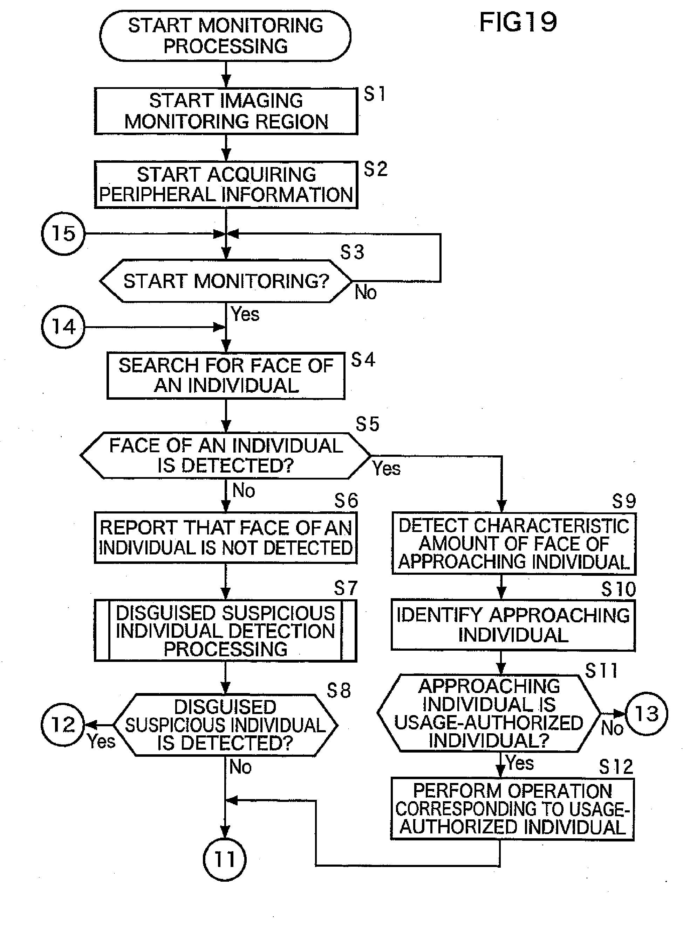

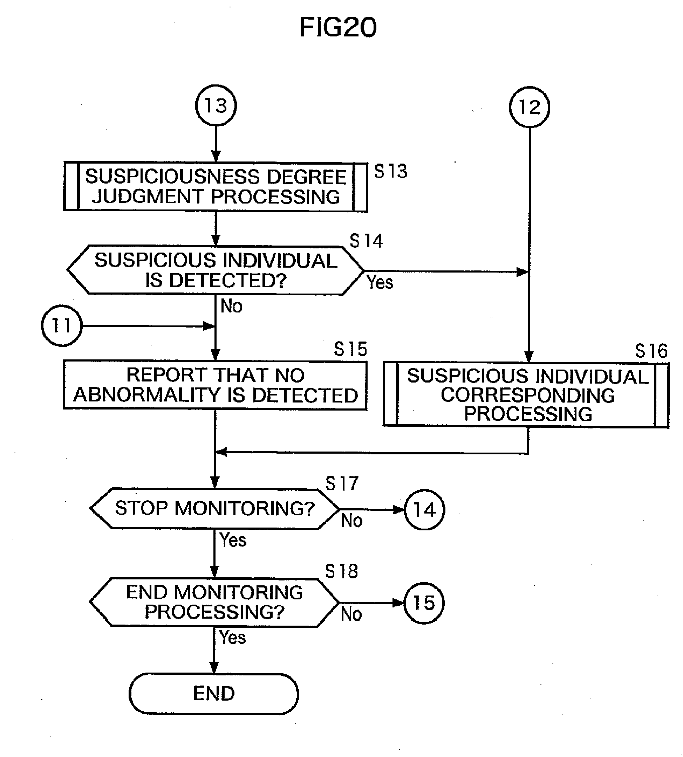

The suspicious individual detecting unit 112 detects an image of the characteristics of the face of an individual (referred to as "face image" hereinafter) from the monitor image data, as described in detail hereinafter with reference to Fig. 19 and Fig. 20. The suspicious individual detecting unit 112 identifies an approaching individual by collating the characteristic amount of the face of an authorized individual, which is recorded on the authorized individual information recording unit 115, and characteristic amount of a previously detected individual, which is recorded on the approach information recording unit 116, with the characteristic amount of the face of the approaching individual, on the basis of the face image. The suspicious individual detecting unit 112 further detects the direction of the face of the approaching individual (referred to as "face direction" hereinafter) and the direction of the line of sight (referred to as "sight line direction" hereinafter) of the approaching individual on the basis the face image and the monitor image.

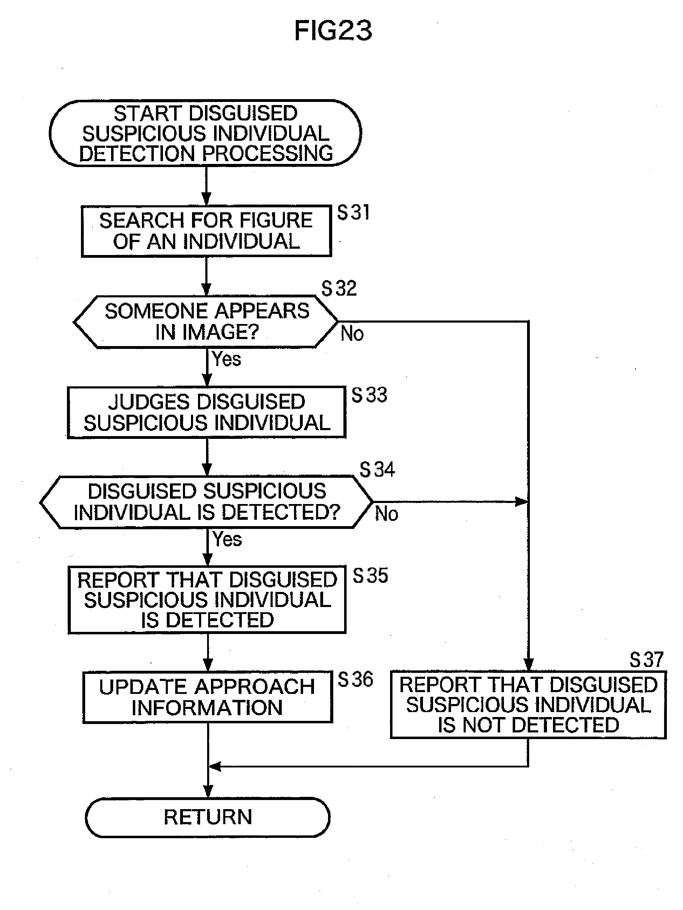

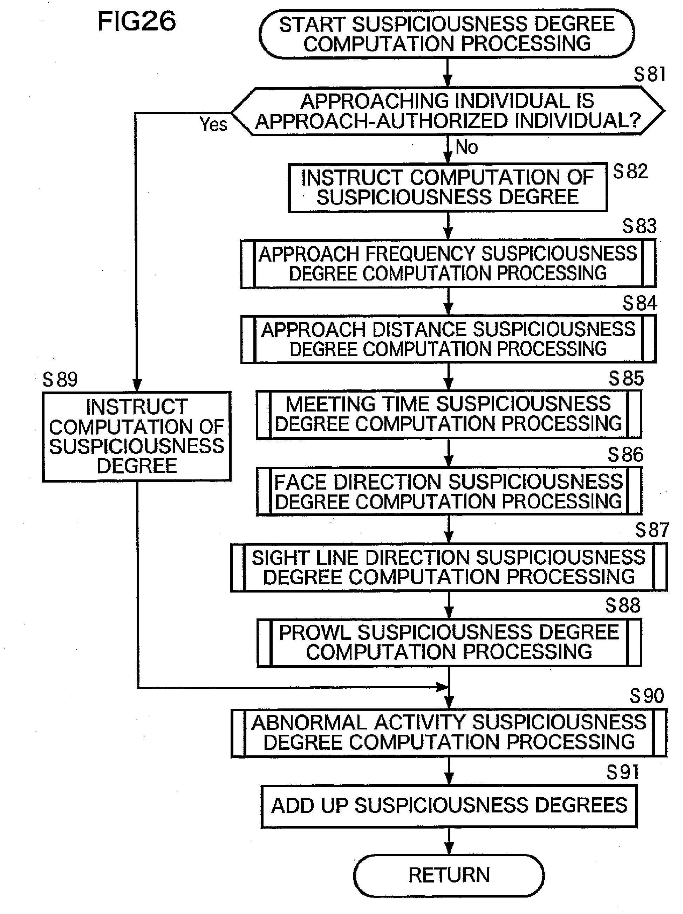

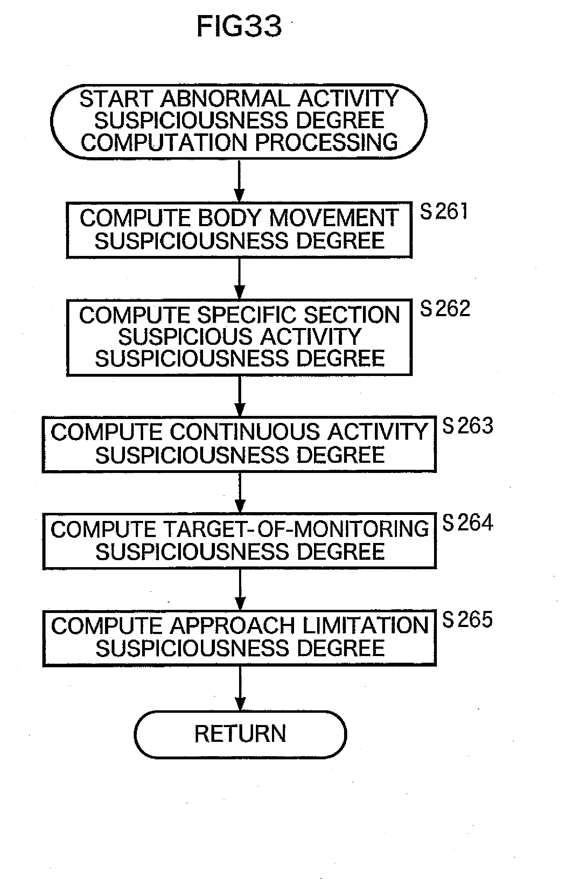

Furthermore, as described hereinafter with reference to Fig. 26, the suspicious individual detecting unit 112 computes the degree of suspiciousness of the identified approaching individual to judge whether the approaching individual is a suspicious individual or not. The suspicious individual detecting unit 112 further detects a disguised suspicious individual, who is an approaching individual with face covered with a ski mask, hood of a jacket, full-face helmet or the like, as described hereinafter with reference to Fig. 23. Also, the suspicious individual detecting unit 112 detects a suspicious activity performed by the approaching individual, as described hereinafter with reference to Fig. 33 and the like.

The suspicious individual detecting unit 112 supplies the coping operation unit 113 with information on the approaching individual, which includes the classification of approaching individuals (usage-authorized individuals, approach-authorized individuals, previously detected individuals, or previously undetected individuals), degree of suspiciousness, or judgment results on whether the approaching individual is a suspicious individual or not (referred to as "approaching individual detection information" hereinafter).

The suspicious individual detecting unit 112 supplies the approach information recording unit 116 with information indicating a result of an identified approaching individual (referred to as "approaching individual identification information" hereinafter), the face image data on the approaching individual, the characteristic amount data on the approaching individual, information indicating the sight line direction and face direction of the approaching individual, information indicating the detail of a suspicious activity performed by the approaching individual, and the approaching individual detection information.

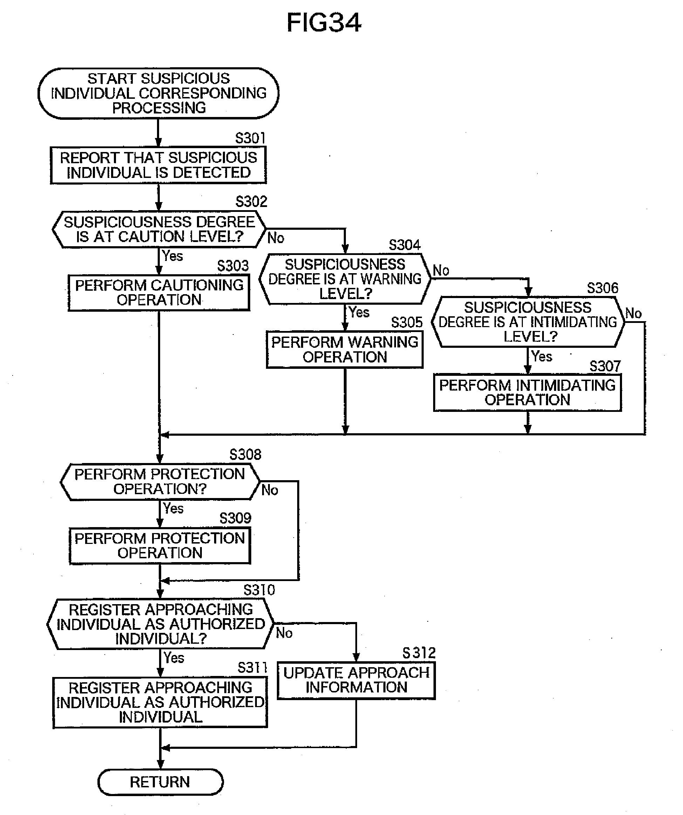

The coping operation unit 113 performs processing for protecting the target of monitoring from a suspicious individual when the suspicious individual is detected, as described hereinafter with reference to Fig. 34. For example, the coping operation information 113 cautions, warns, or intimidates the approaching individual to stay away from the target of monitoring. The coping operation unit 113, for example, also controls the operation of the target of monitoring so as to protect it from the suspicious individual. The coping operation unit 113, for example, also transmits information for reporting that the suspicious individual has been detected, to the other monitoring systems 11, center system 12, or terminal devices 13 via the network 14.

The coping operation unit 113 supplies the approach information recording unit 116 with information indicating the detail of operation performed on the approaching individual. The coping operation unit 113 further uses the command from the user to cause the authorized individual information recording unit 115 to record the information on the approaching individual, which is recorded on the approach information recording unit 116, and registers the detected approaching individual as the usage-authorized individual or approach-authorized individual.

The coping operation unit 113 acquires information indicating the commands for executing the processing from the other monitoring systems 11, center system 12, or terminal devices 13 via the network 14 and communication unit 114. The coping operation unit 113 also transmits information for reporting a state of monitoring of the monitoring system 11, to the other monitoring systems 11, center system 12, or terminal devices 13 via the communication unit 114 and network 14, according to need.

The coping operation unit 113 also displays the monitor image based on the monitor image data, according to need.

The communication unit 114 is connected to the network 14 by performing wire communication or wireless communication, and performs communication with the other monitoring systems 11, center system 12, or terminal devices 13 connected to the network 14. It should be noted that the communication unit 114 may perform communication with the other monitoring systems 11, center system 12, or terminal devices 13 without using the network 14.

In the communication performed by the communication unit 114, in the case of the wireless communication, a standard of wireless LAN (Local Area Network) which is defined by IEEE (Institute of Electrical and Electronic Engineers) 802.11 (802.11a, 802.11b, 802.11g, and the like), a communication standard of a portable telephone or PHS (Personal Handyphone System) such as W-CDMA (Wideband Code Division Multiple Access) or PIAFS (Personal Handyphone System Internet Access Forum Standard), or a standard of Bluetooth® can be applied. In the case of the wire communication, on the other hand, in the communication performed by the communication unit 114, a standard of Ethernet© or the like which is defined by IEEE 802.3 or the like can be applied.

The authorized individual information recording unit 115 and the approach information recording unit 116 are provided with nonvolatile memories such as EEPROM (Electrically Erasable and Programmable Read Only Memory), HDD (Hard Disk Drive), MRAM (Magnetoresistive Random Access Memory, magnetoresistive memory), FeRAM (Ferroelectric Random Access Memory, ferroelectric memory), OUM (Ovonic Unified Memory) and the like. It should be noted that the memories provided in the authorized individual information recording unit 115 and the approach information recording unit 116 may be configured with other memories respectively or with the same memory.

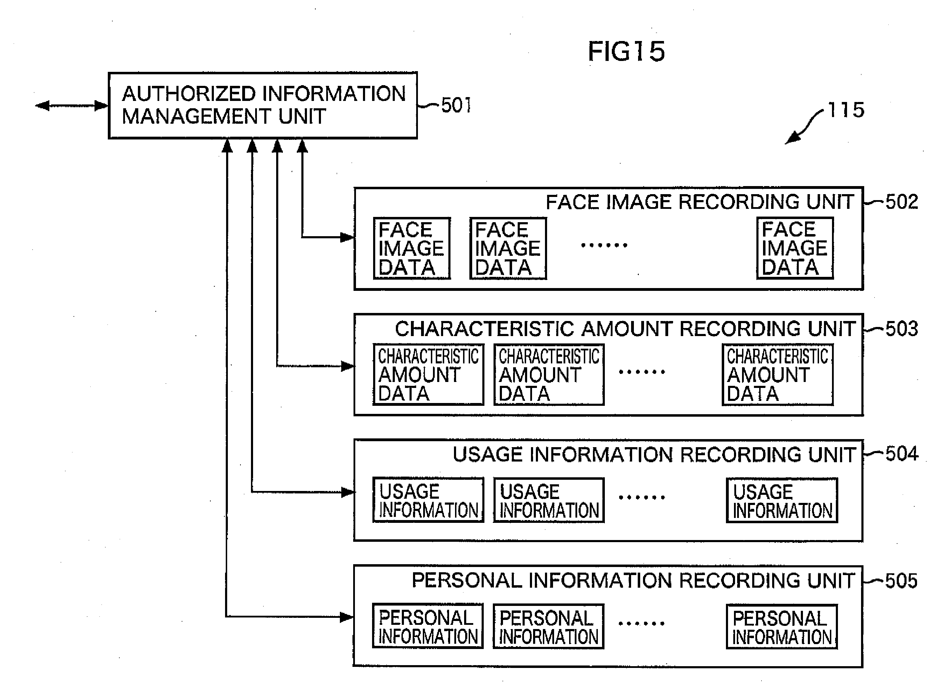

The authorized individual information recording unit 115 records and manages information on an authorized individual, as described hereinafter with reference to Fig. 15.

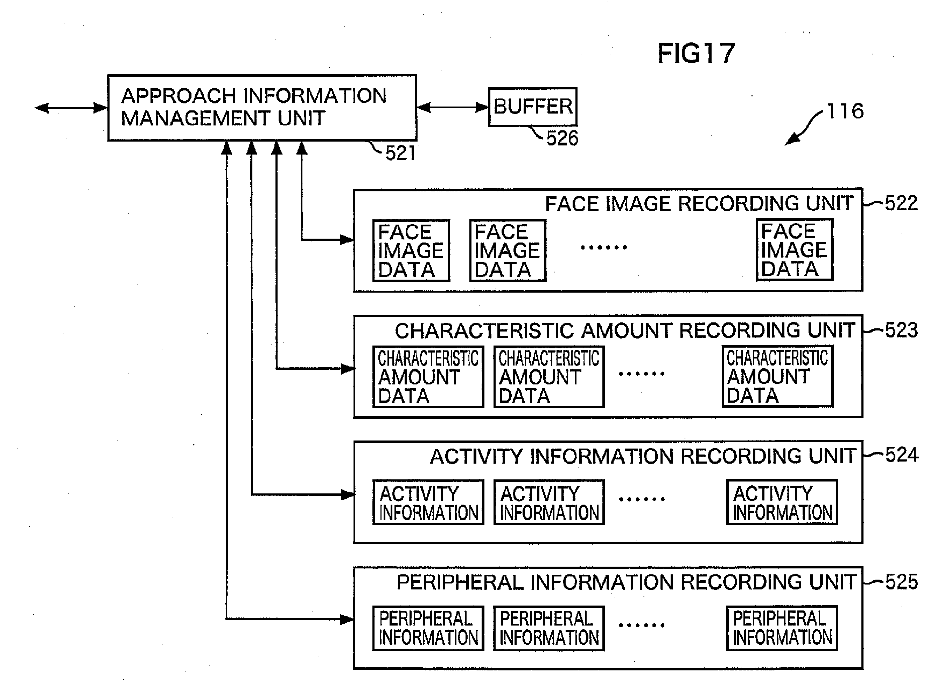

The approach information recording unit 116 records and manages approach information, as described hereinafter with reference to Fig. 17. The approach information recording unit 116 also temporarily records the monitor image data supplied from the image pickup unit 101. The approach information recording unit 116 also temporarily records the peripheral information supplied from the peripheral information acquisition unit 111.

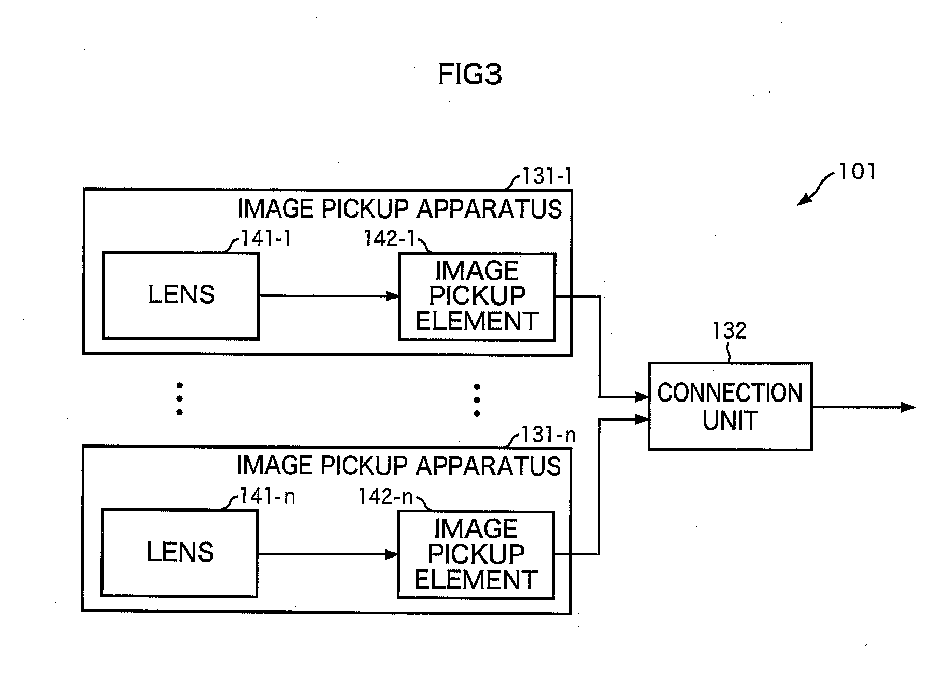

Fig. 3 is a block diagram showing a configuration example of a function of the image pickup unit 101 shown in Fig. 2. The image pickup unit 101 comprises n number of image pickup apparatus 131-1 through 131-n and a connection unit 132. The image pickup apparatus 131-1 through 131-n and the connection unit 132 perform wire communication or wireless communication with each other. The image pickup apparatus 131-1 through 131-n are simply referred to as "image pickup apparatus 131" hereinafter unless otherwise distinguished individually.

The image pickup apparatus 131 is set so as to image the target of monitoring or a predetermined surrounding region of the target of monitoring. The image pickup apparatus 131 images the target of monitoring in an extremely wide dynamic range of approximately 170dB by using a logarithm conversion type image pickup element, and supplies the imaged image data (monitor image data) to the connection unit 132.

The connection unit 132 supplies the monitor image data supplied from the image pickup apparatus 131-1 through 131-n and the data of a camera No. for discriminating the image pickup apparatus 131-1 through 131-n, which perform imaging, to the suspicious individual detecting unit 112, coping operation unit 113, and approach information recording unit 116.

The image pickup apparatus 131-1 through 131-n comprise lenses 141-1 through 141-n and image pickup elements 142-1 through 142-n respectively. The lenses 141-1 through 141-n are simply referred to as "lens 141" unless otherwise distinguished individually, and the image pickup elements 142-1 through 142-n are simply referred to as "image pickup element 142" unless otherwise distinguished individually.

The light which is emitted from the subj ect imaged by the image pickup apparatus 131 (or light reflected from the subject) enters the lens 141, and is focused onto a light detection surface of the image pickup element 142, which is not shown.

The image pickup element 142 is a logarithm conversion type image pickup element such as an HDRC (High Dynamic Range CMOS (Complementary Metal Oxide Semiconductor)). The image pickup element 142 converts the light from the subject, which is focused by the lens 141, into the charge corresponding to the brightness (illuminance) of the light which has entered the lens, and accumulates the converted charge. The image pickup element 142 further has, for example, a plurality of MOSFET (Metal Oxide Semiconductor Field Effect Transistor), and generates an analog electric signal, which is obtained by converting the accumulated charge into a voltage value, which is substantially proportional to the logarithm (logarithm of the intensity of light from the subject) of the number of charges (intensity of current), for each pixel by using a subthreshold characteristic. Further, the image pickup element 142 A/D-converts the analog electric signal into digital image data, and supplies the converted digital image data to the connection unit 132.

In this manner, the image pickup apparatus 131 outputs the digital image data having the pixel value proportional to the logarithm of the brightness of the light entered the lens from the subject (amount of incident light). It should be noted that the logarithm conversion type image pickup element is disclosed in detail in, for example, Japanese Translation of PCT No. H7-506932 and the like.

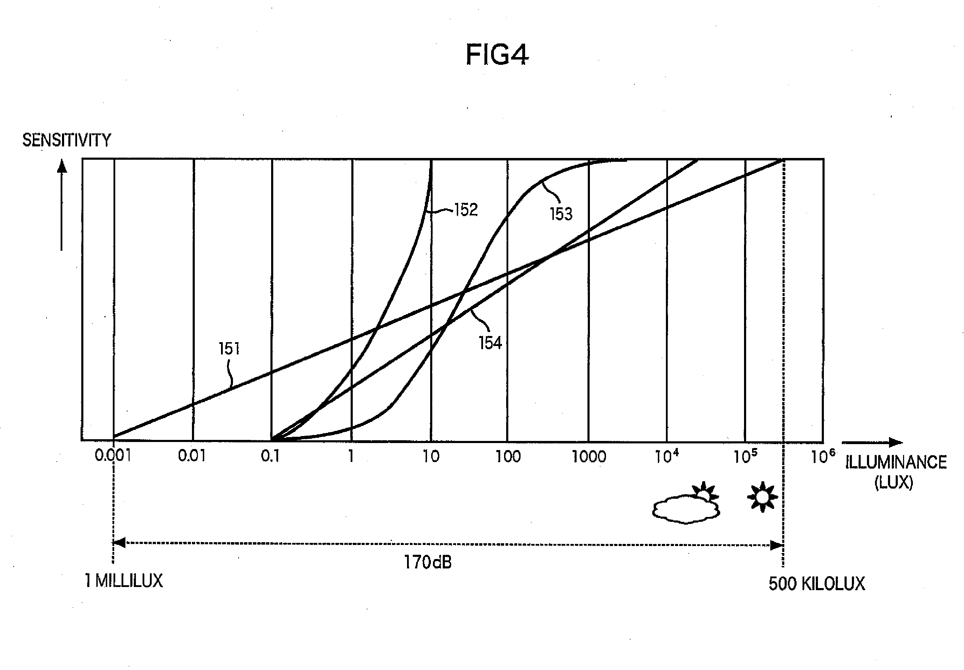

Fig. 4 is a graph showing the sensitivity characteristic of the image pickup element 142, CCD image pickup element, silver salt film, and human eye. The horizontal axis in Fig. 4 indicates logarithmic values of the illuminance of the incident light (the unit is lux), and the vertical axis in the figure indicates the sensitivity with respect to the illuminance of the incident light. Line 151 indicates the sensitivity characteristic of the image pickup element 142, line 152 indicates the sensitivity characteristic of the CCD image pickup element, line 153 indicates the sensitivity characteristic of the silver salt film, and line 154 indicates the sensitivity characteristic of the human eye.

As shown in Fig. 4, in the CCD image pickup element the dynamic range is narrower than the human eye. Therefore, in the image pickup apparatus using the CCD image pickup element, it is necessary to adjust the aperture or shutter speed so that the illuminance of the incident light falls within the dynamic range of the CCD image pickup element.

However, if the range of the illuminance of the light from the subject exceeds the dynamic range of the CCD image pickup element, luminosity clipping occurs in which the pixel value of the pixels in a bright region on the subject is limited to the maximum value of the pixel value which can be output by the CCD image pickup element, or the pixel value of the pixels in a dark region on the subject is limited to the minimum value of the pixel value which can be output by the CCD image pickup element. Further, if the amount of the incident light is adjusted, for example,' the pixel values fluctuate due to the adjustment of the amount of the incident light, such that the amount of incident light, which corresponds to a region in which the luminance of the subject does not fluctuate, fluctuates, and the pixel value of this region fluctuates. Specifically, in the image pickup apparatus using a conventional CCD image pickup element, the pixel values fluctuate due to reasons other than fluctuation of the luminance of the subject or movement of the subject.

On the other hand, as described above, the image pickup element 142 outputs the image data from the pixel value which is substantially proportional to the logarithm of the amount of the incident light, whereby the subject can be imaged in a dynamic range of approximately 170dB between approximately 1 millilux and approximately 500 kilolux which is higher than the luminance of the sun, the dynamic range being wider than the CCD image pickup element, silver salt film, and human eye, without saturating the photodiode configuring the image pickup element 142 and the capacity of the MOSFET or the like.

Therefore, the image pickup apparatus 131 using the image pickup element 142, luminosity clipping does not occur in the luminosity range which can be recognized by a human, thus it is not necessary to adjust the amount of the incident light by adjusting the aperture or shutter speed. Specifically, the image pickup apparatus 131 can faithfully image the detailed luminosity distribution of the subject without adjusting the amount of the incident light.

For example, when imaging the front part of a vehicle from the inside of the vehicle during the day, even when the sun light enters the field angle, an image captured by the image pickup apparatus 131 can be an image in which the luminosity distributions of the sun and the road ahead is reproduced faithfully, without adjusting the amount of incident light. Moreover, when imaging the front part of the vehicle from the inside of the vehicle during the nighttime, even when the vehicle is illuminated by the headlights of an oncoming vehicle, an image captured by the image pickup apparatus 131 can be an image in which the luminosity distribution of the region on the headlights of the former vehicle, which is not illuminated by the headlights of the oncoming vehicle, is reproduced faithfully, without adjusting the amount of incident light.

In the CCD image pickup element and the silver salt film, the sensitivity characteristics are not proportional to the logarithm of the illuminance of the incident light due to the gamma characteristic or the like as indicated with the line 152 and line 153, but the sensitivity characteristic in the image pickup element 142 is substantially proportional to the logarithm of the illuminance of the incident light.

In this manner, the image pickup apparatus 131 using the image pickup element 142 is not influenced by the occurrence of the luminosity clipping, adjustment of the amount of the incident light, and the gamma characteristics, thus the pixel values of the data of the image captured by the image pickup apparatus 131 fluctuate so as to reflect the fluctuation of the luminance of the subject and the movement of the subject substantially faithfully. Specifically, the difference value between each pixel of difference data which is the difference in the image data between frames becomes a value in which the fluctuation of the luminance of the subject and the movement of the subject are reflected substantially faithfully. Therefore, by using the image pickup apparatus 131, extraction of an image of a predetermined subject (for example, the face of an individual), authentication of the face of the individual, and detection of movement of the subject are performed easily, and the accuracy of these operations is improved.

The image pickup apparatus 131 (image pickup element 142) having a dynamic range of approximately 170dB has been described above. However, when it is assumed that the fluctuation range of the luminance of the monitoring region is narrower than the dynamic range, an image pickup apparatus which uses an image pickup element having a dynamic range corresponding to the fluctuation range (for example, 100dB, 120db or the like) may be use.

Next, an example of the position for setting the image pickup apparatus 131 is explained. For example, when the target of monitoring is a vehicle, the image pickup apparatus 131 is set so as to image the inside of the vehicle, the left side, right side, front side, and rear side of the vehicle. Moreover, for example, the image pickup apparatus 131 is set in the position so that the face of a suspicious individual can be imaged when the suspicious individual looks into the target of monitoring. For example, when the target of monitoring is a sedan, the image pickup apparatus 131 is set in a position so as to be able to capture an image of the face of the individual who approaches the four doors on the right and left of the vehicle which are the passages to forcibly enter the vehicle or which are likely to be juggled abusively, the trunk, or the hood.

The image pickup apparatus 131 is preferably set in a position which is a point of weakness for the target of monitoring, such as a position where the face of an individual who approaches a section which can be hardly seen by people can be imaged securely. Furthermore, the image pickup apparatus 131 is preferably set in a position in a section where only a malicious suspicious individual would try to enter, so as to securely image the face of the approaching individual who enters the section.

Under the assumption that a suspicious individual senses the presence of the image pickup apparatus 131 beforehand, another image pickup apparatus 131 may be set. For example, when the image pickup apparatus 131 is set in the vicinity of a hallway or a door of a vehicle, the suspicious individual is likely to approach the target of monitoring, avoiding the field angle of the image pickup apparatus 131. Therefore, in order to image the face of the suspicious individual, it is effective to set another image pickup apparatus 131 in a position on a passage which is taken by the suspicious individual to approach the target of monitoring without entering the field angle of the image pickup apparatus 131 set in the vicinity of the hallway or the door of the vehicle.

Moreover, the image pickup apparatus 131 may be set in a position for imaging the face of a suspicious individual, when the suspicious individual is led by using means for causing the face of the suspicious individual to approach the target of monitoring. As the leading means, there is, for example, a false keyhole or cylinder lock, a false document describing the operating instructions, state, cautions, or warnings of the target of monitoring or monitoring system 11, and an operation unit of the target of monitoring or monitoring system 11 (button, handle, keyboard and the like).

The cassis of the image pickup apparatus 131 may have a prominent color or shape, flashing light may be emitted from the image pickup apparatus 131, or sound may be output, thereby purposefully causing the suspicious individual to pay attention to the image pickup apparatus 131, thus the probability of imaging the face of the suspicious individual can be improved. On the other hand, the image pickup apparatus 131 may be set in a position where it can be hidden so that it is not sensed by the suspicious individual. Further, a combination of the image pickup apparatus 131 for getting the attention and the hidden image pickup apparatus 131 may be set.

Fig. 5 is a block diagram showing a configuration example of a function of the peripheral information acquisition unit 111 shown in Fig. 2. The peripheral information acquisition unit 111 comprises a user ID acquisition unit 161, user information acquisition unit 162, target-of-monitoring information acquisition unit 163, environmental information acquisition unit 164, position information acquisition unit 165, approach limitation information acquisition unit 166, and peripheral information output unit 167.

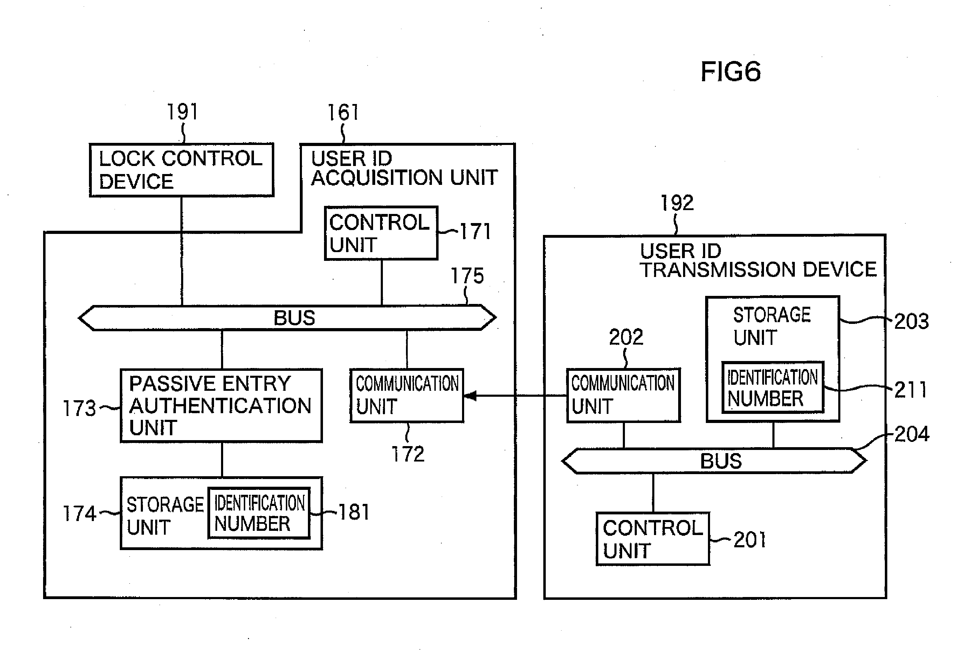

The user ID acquisition unit 161 receives information indicating a user ID for authenticate the user (referred to as "user ID information" hereinafter), the information being input by the user by means of, for example, a user ID transmission device 171, which is described hereinafter with reference to Fig. 6. The user ID acquisition unit 161 supplies the user ID information to the peripheral information output unit 167. The user ID is, for example, used by the monitoring system 11 to identify that an approaching individual is the user and to authenticate the user without using the face images.

The user information acquisition unit 162 acquires information on the user of the monitoring system 11 (referred to as "user information" hereinafter) from the other monitoring systems 11, center system 12, or terminal devices 13 via the network 14 and communication unit 114, and supplies the acquired user information to the peripheral information output unit 167.

The user information is, for example, the address, schedule and the like of the user. For example, the monitoring system 11 perceives whether or not the user is present in the vicinity of the target of monitoring on the basis of the address or schedule of the user, and judges whether or not an approaching individual is a suspicious individual on the basis of whether or not the user is present in the vicinity of the target of monitoring. Accordingly, the accuracy of detecting a suspicious individual can be improved. Further, when the user ID information is received, the monitoring system 11 can judge whether or not the user ID information is transmitted by the user, on the basis of whether or not the user is present in the vicinity of the target of monitoring.

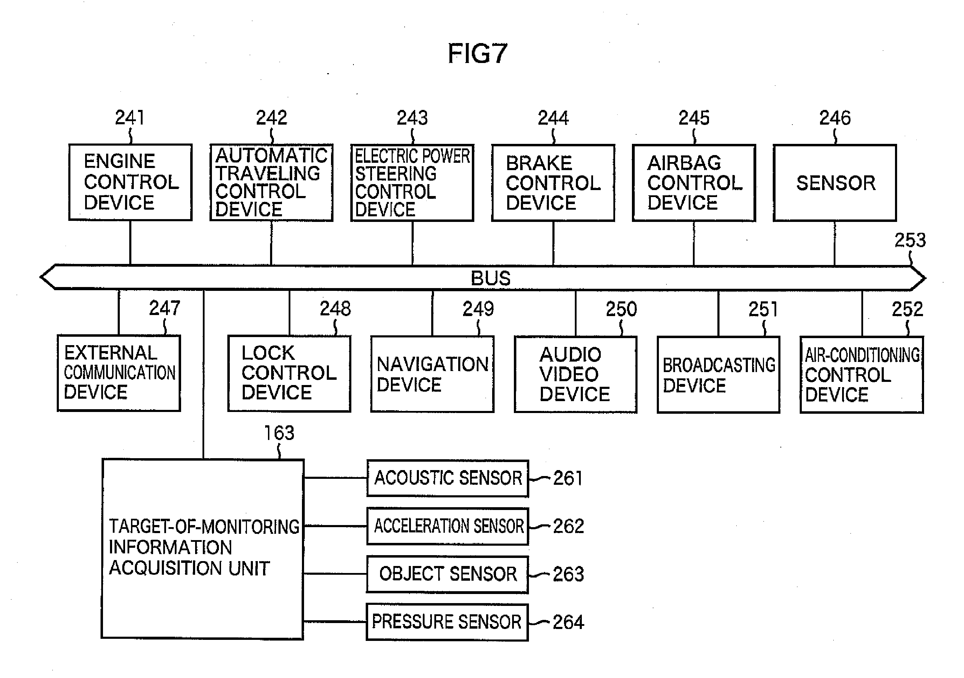

The target-of-monitoring information acquisition unit 163, as described in detail hereinafter with reference to Fig. 7, acquires information on a target of monitoring (referred to as "target-of-monitoring information" hereinafter) from the target of monitoring or from the various sensors provided in the target of monitoring, and supplies the acquired target-of-monitoring information to the peripheral information output unit 167.

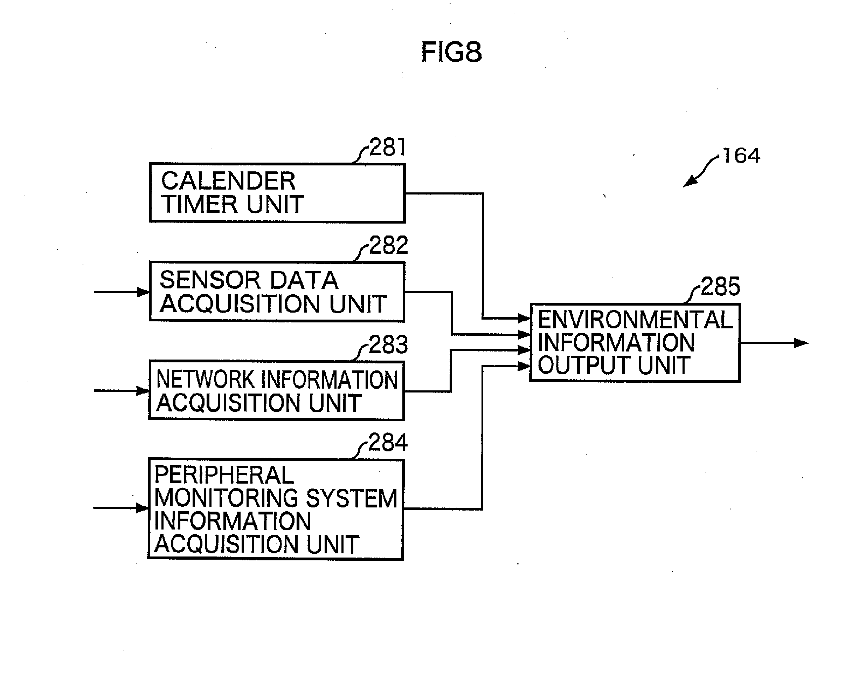

The environmental information acquisition unit 164, as described in detail hereinafter with reference to Fig. 8, acquires information on the surrounding environment of the target of monitoring (referred to as "environmental information" hereinafter), and supplies the acquired environmental information to the peripheral information output unit 167.

The position information acquisition unit 165 acquires information on a position of the target of monitoring (referred to as "position information" hereinafter), and supplies the acquired position information to the peripheral information output unit 167.

For example, the position information acquisition unit 165 is configure with a GPS (Global Positioning System) receiver. For example, the position information acquisition unit 165 as the GPS receiver is attached to a target of monitoring, and acquires information indicating the latitude and longitude of a current position of the target of monitoring.

Further, for example, the position information acquisition unit 165 is configured with a reader/writer for RFID (Radio Frequency Identification). For example, the position information acquisition unit 165 as the reader/writer is attached to the target of monitoring, and receives a wireless signal transmitted from the RFID which is set in a predetermined position, thereby perceiving the current position of the target of monitoring. Accordingly, even in an indoor place or basement where the GPS receiver cannot receive electric radiation sent from a geodetic satellite, the position of the target of monitoring can be perceived.

The approach limitation information acquisition unit 166 acquires information supplied from approach limitation means for limiting the approach toward the target of monitoring (referred to as "approach limitation information" hereinafter), and supplies the approach limitation information to the peripheral information output unit 167.

For example, the approach limitation means is a gate or door which are passed through when approaching the target of monitoring. For example, the approach limitation information acquisition unit 166 acquires sensor data from an object sensor for detecting passage of an individual, the object sensor being provided in the gate or door which is the approach limitation means, and sensor data from a sensor open/close sensor for detecting opening/closing of the gate or door.

Further, for example, when an individual intrudes into an area in which the target of monitoring is present, the approach limitation means is an alarm device or the like which warns the intruder to leave by sounding an alarm. For example, the approach limitation information acquisition unit 166 acquires data indicating that the alarm device is activated, from the alarm device which is the approach limitation means.

The peripheral information output unit 167 supplies the peripheral information having the user ID information, user information, target-of-monitoring information, environmental information, position information, or approach limitation information to the communication unit 114 or the approach information recording unit 116.

Fig. 6 shows an embodiment of a case in which the user ID acquisition unit 161 shown in Fig. 5 is provided as a receiver of a passive entry system for controlling release of the door lock of a vehicle.

The user ID acquisition unit 161, which is the passive entry system receiver, comprises a control unit 171, communication unit 172, passive entry authentication unit 173, and storage unit 174. The control unit 171, communication unit 172, and passive entry authentication unit 173 are connected to one another via a bus 175. Further, a lock control device 191 for controlling locking and unlocking of the door lock of the vehicle is connected to the bus 175.

The control unit 171 control processing of each part of the user ID acquisition unit 161.

The communication unit 172 receives the user ID information transmitted by a signal of a predetermined frequency from a user ID transmission device 192, and supplies the received user ID information to the passive entry authentication unit 173.

The passive entry authentication unit 173 collates the user ID indicated in the user ID information with an identification number 181 stored in the storage unit 174. When the user ID information matches the identification number 181, it is authenticated that the user ID transmitted from user ID transmission device 192 is of the user who owns a vehicle which is the target of monitoring, and information indicating that the user authentication has succeeded is supplied to the lock control device 191.

The lock control device 191 releases the door lock of the vehicle when receiving the information indicating that the user authentication has succeeded.

The user ID transmission device 192, which is a passive entry system transmission device, comprises a control unit 201, communication unit 202, and storage unit 203.

The control unit 201 controls processing of each unit of the user ID transmission device 191.

The communication unit 202 transmits the user ID information in which an identification number 211 stored in the storage unit 203 is set in the user ID, as a signal of a predetermined frequency, to the outside on a regular basis. For example, when the user with the user ID transmission device 192 approaches a vehicle which is the target of monitoring, the user ID information transmitted from the communication unit 202 of the user ID transmission device 192 on a regular basis is received by the communication unit 172 of the user ID acquisition unit 161. The passive entry authentication unit 173 acquires the user ID information from the communication unit 173, and, when the user ID indicated in the user ID information matches the identification number 181, supplies the information indicating that the user authentication has succeeded to the lock control device 191. The lock control device 191 releases the door lock of the vehicle when the user pulls the door knob of the vehicle and presses a predetermined switch provided on the door knob side.

Fig. 7 is a block diagram showing an example in which the target-of-monitoring information acquisition unit 163 in Fig. 5 is connected to each device of the vehicle in order to acquire various information (target-of-monitoring information) from the vehicle which is the target of monitoring. In the example shown in Fig. 7, the target-of-monitoring information acquisition unit 163 is connected to an engine control device 241, automatic traveling control device 242, electric power steering control device 243, brake control device 244, airbag control device 245, sensor 246, external communication device 247, lock control device 248, navigation device 249, audio video device 250, broadcasting device 251, and air-conditioning control device 252 via a bus 253. The target-of-monitoring information acquisition unit 163 is further connected to an acoustic sensor 261, acceleration sensor 262, object sensor 263, pressure sensor 264 which are provided in the vehicle.

The engine control device 241 supplies various parameters used in control of the engine of the vehicle, and information having information indicating operation states of the engine, such as activation, stop, speed and the like of the engine, to the target-of-monitoring information acquisition unit 163 via the bus 253.

The automatic traveling control deice 242 supplies various parameters used in control of automatic traveling of the vehicle, and information having information indicating a state of automatic traveling, to the target-of-monitoring information acquisition unit 163 via the bus 253.

The electric power steering control unit 243 supplies various parameters used in control of the electric power steering of the vehicle, and information having information indicating an operation state of the electric power steering, to the target-of-monitoring information acquisition unit 163 via the bus 253.

The brake control device 244 supplies a parameter used in control of the brake of the vehicle, and information having information indicating an operation state of the brake of the vehicle, to the target-of-monitoring information acquisition unit 163 via the bus 253.

The airbag control device 245 supplies a parameter used in control of the airbags of the vehicle, and information having information indicating an operation state of the airbags of the vehicle, to the target-of-monitoring information acquisition unit 163 via the bus 253.

The sensor 246 is a sensor for detecting opening and closing of, for example, the doors, door lock, windows, trunk and the like, or a sensor for detecting insertion of a key into a key cylinder, the sensor being equipped in the vehicle. The sensor 246 supplies various data of the sensor to the target-of-monitoring information acquisition unit 163 via the bus 253.

The external communication device 247 is a device for communicating with communication equipment provided externally of the vehicle, such as a wireless machine, a transceiver of a wireless LAN. The external communication device 247 supplies information received from the communication equipment provided externally of the vehicle to the target-of-monitoring information acquisition unit 163 via the bus 253.

The lock control device 248 is a device for controlling, for example, locking and unlocking of the keys to the doors and trunk of the vehicle, and supplies information indicating a locking/unlocking state of the keys to the doors or trunk to the target-of-monitoring information acquisition unit 163 via the bus 253.

The navigation device 249 is, for example, a commercially availably car navigation device, and supplies various information such as information on a current position, the traveling direction, travel distance, a destination, or peripheral information and the like, which are processed by the car navigation device, to the target-of-monitoring information acquisition unit 163 via the bus 253.

The audio video device 250 is, for example, a reproducing device for in-car AV (Audio/Visual) data. The audio video device 250 supplies information indicating an operation state of the audio video device 250, audio data or video data, which is being reproduced by the audio video device 250, to the target-of-monitoring information acquisition unit 163 via the bus 253.

The broadcasting device 251 is, for example, an in-car television set or radio. The broadcasting device 251 supplies information indicating an operation state of the broadcasting device 251, a received broadcasting signal, and the like, to the target-of-monitoring information acquisition unit 163 via the bus 253.

The air-conditioning control device 252 supplies a parameter used in control of the air conditioner equipped in the vehicle, and information such as information indicating an operation state of the air-conditioning control device 252, to the target-of-monitoring information acquisition unit 163 via the bus 253.

The acoustic sensor 261 supplies the target-of-monitoring information acquisition unit 163 with sensor data, which is obtained by converting the amplitude of a vibrating body vibrated by a sound wave into an electric signal, that is, sensor data indicating the loudness and frequency of sound inside and around the vehicle, the position, direction and the like of a sound source.

The acceleration sensor 262 detects acceleration in three axial directions which run at substantially right angles to one another, and supplies the target-of-monitoring information acquisition unit 163 with sensor data based on the detected acceleration, that is, sensor data indicating a tilt or vibration of the vehicle.

The object sensor 263 is, for example, an infrared radiation sensor using light such as infrared light, a microwave sensor using a microwave, an ultrasonic wave sensor using an ultrasonic wave, a proximity sensor using a magnetic field or an electric field, or other sensors for detecting the presence or state of an object in a non-contact fashion. The object sensor 263 supplies sensor data indicating the present or state of an object inside or outside the vehicle, to target-of-monitoring information acquisition unit 163.

The pressure sensor 264 is, for example, attached to a tire of the vehicle, and supplies sensor data indicating air pressure of the tire to target-of-monitoring information acquisition unit 163.

Fig. 8 is a block diagram showing a configuration example of a function of the environmental information acquisition unit 164 shown in Fig. 5. The environmental information acquisition unit 164 comprises a calendar timer unit 281, sensor data acquisition unit 282, network information acquisition unit 283, peripheral monitoring system information acquisition unit 284, and environmental information output unit 285.

The calendar timer unit 281 supplies information indicating current date and time to the environmental information output unit 285.

The sensor data acquisition unit 282 acquires the sensor data items which are output from various sensors provided in the sensor unit 102, and supplies the acquired sensor data to the environmental information output unit 285.

The network information acquisition unit 283 acquires various information from the center system 12 or terminal devices 13 via the network 14 and the communication unit 114, and supplies the acquired information to the environmental information output unit 285. For example, the network information acquisition unit 283 receives crime occurrence information related to the occurrence of a crime in a peripheral region, the data of a face image of a suspicious individual, and the like, which are transmitted from the center system 12 that police and security firms have.

The peripheral monitoring system information acquisition unit 284 acquires various information from the other monitoring systems 11 or a monitoring system which is different from the monitoring systems 11 via the network 14 and the communication unit 114, and supplies the acquired information to the environmental information output unit 285. For example, when a vehicle as the target of monitoring is parked in a parking lot of a building, the peripheral monitoring system information acquisition unit 284 receives face image data on a suspicious individual, which is detected by the monitoring systems monitoring vehicles around the target of monitoring, a building monitoring system, parking lot monitoring system, and the like, from each of the monitoring systems.

The environmental information output unit 285 supplies the peripheral information output unit 167 with the information or data acquired from the calendar timer unit 281, sensor data acquisition unit 282, network information acquisition unit 283, or peripheral monitoring system information acquisition unit 284.

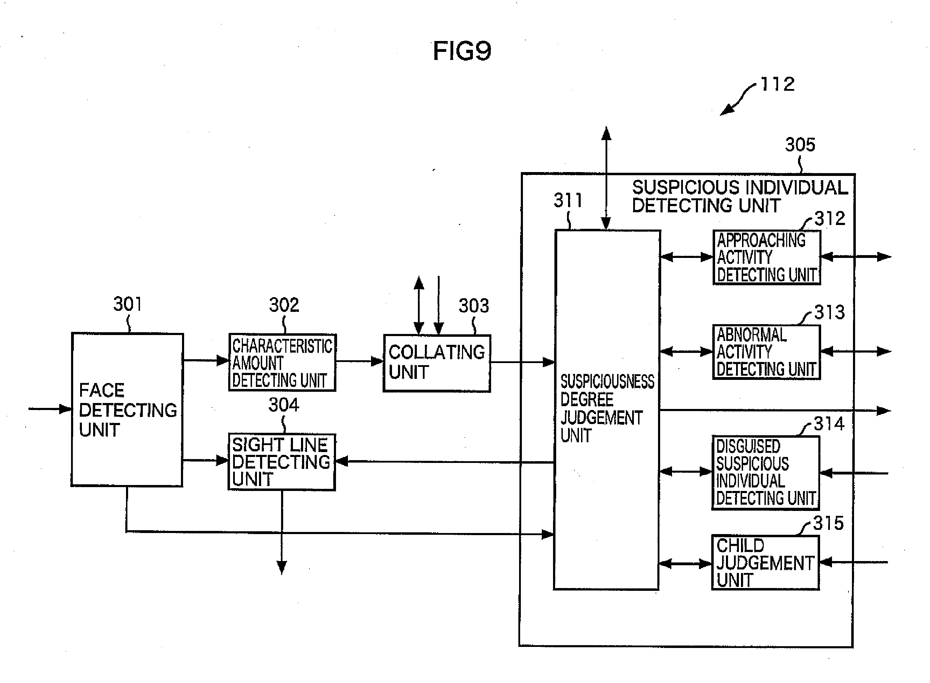

Fig. 9 is a block diagram showing a configuration example of a function of the suspicious individual detecting unit 112 shown in Fig. 2. The suspicious individual detecting unit 112 comprises a face detecting unit 301, characteristic amount detecting unit 302, collating unit 303, sight line detecting unit 304, and suspicious individual detection processing unit 305. The suspicious individual detection processing unit 305 comprises a suspiciousness degree judgment unit 311, approaching activity detecting unit 312, abnormal activity detecting unit 313, disguised suspicious individual detecting unit 314, and child judgment unit 315.

The face detecting unit 301 acquires, from the connection unit 132, monitor image data and data indicating the camera No. of the image pickup apparatus 131 which has captured the data of a monitor image. As described hereinafter with reference to Fig. 19 and Fig. 20, the face detecting unit 301 detects an image having the characteristics of the face of an individual, i.e. a face image, from the monitor image data. The face detecting unit 301 supplies the characteristic amount detecting unit and the sight line detecting unit 304 with the monitor image data from which the face of an approaching individual is detected and the data indicating the camera No. of the image pickup apparatus 131 which has captured the data of the monitor image. When the face of an individual is not detected from the monitor image data, the face detecting unit 301 supplies the suspiciousness degree judgment unit 311 with information for reporting that the face of an individual is not detected.

The characteristic amount detecting unit 302 detects characteristic amount of the face of the approaching individual on the basis of the face image data, as described hereinafter with reference to Fig. 19 and Fig. 20. The characteristic amount detecting unit 302 supplies the collating unit 303 with characteristic amount data indicating the detected characteristic amount, and the face image data used for detecting the characteristic amount.

The collating unit 303, as described hereinafter with reference to Fig. 19 and Fig. 20, identifies an approaching individual by collating the characteristic amount data of the face of an authorized individual, which is recorded on the authorized individual information recording unit 115, and characteristic amount data on a previously detected individual, which is recorded on the approach information recording unit 116, with the characteristic amount data on the face of the approaching individual. The collating unit 303 further identifies an approaching individual on the basis of the user ID contained in the peripheral information supplied from the peripheral information acquisition unit 111. The collating unit 303 further supplies the suspiciousness degree judgment unit 311 with the approaching individual identification information indicating a result of identifying an approaching individual. The collating unit 303 further supplies the face image dada and the characteristic amount data on the approaching individual to the approach information recording unit 116.

The sight line detecting unit 304, as described hereinafter with reference to Fig. 23, detects the face direction and sight line direction of the approaching individual on the basis of the face image data and monitor image data on the approaching individual. The sight line detecting unit 304 supplies information indicating the face direction and sight line direction of the approaching individual to the approach information recording unit 116.

The suspicious individual detection processing unit 305 detects a suspicious activity of the approaching individual, computes the degree of suspiciousness, and detects a disguised suspicious individual on the basis of the monitor image data and peripheral information.

The suspiciousness degree judgment unit 311 supplies the sight line detecting unit 304 with information for instructing detection of the face direction and sight line direction of the approaching individual. The suspiciousness degree judgment unit 311 further supplies the disguised suspicious individual detecting unit 314 with information for instructing execution of processing of detecting a disguised suspicious individual, and acquires a detection result from the disguised suspicious individual detecting unit 314. The suspiciousness degree judgment unit 311 further supplies the child judgment unit 315 with information for instructing execution of child judging for judging whether or not the approaching individual is a child, and acquires a judgment result from the child judgment unit 315. The suspiciousness degree judgment unit 311 supplies the approaching activity detecting unit 312 and the abnormal activity detecting unit 313 with the approaching individual identification information and information for instructing computation of the degree of suspiciousness of the approaching individual, and acquires the information indicating the computed degree of suspiciousness from the approaching activity detecting unit 312 and the abnormal activity detecting unit 313.

The suspiciousness degree judgment unit 311 judges whether the approaching individual is a suspicious individual or not on the basis of the approaching individual identification information, the result of detection of a disguised suspicious individual, the result of child judgment, and the degree of suspiciousness. The suspicious judgment unit 311 supplies the coping operation unit 113 and the approach information recording unit 116 with the approaching individual detection information related to the detected approaching individual. The suspiciousness degree judgment unit 311 further supplies the approaching individual identification information to the approach information recording unit 116. The suspiciousness degree judgment unit 311 also supplies the approach information recording unit 116 with information for instructing update of the approach information.

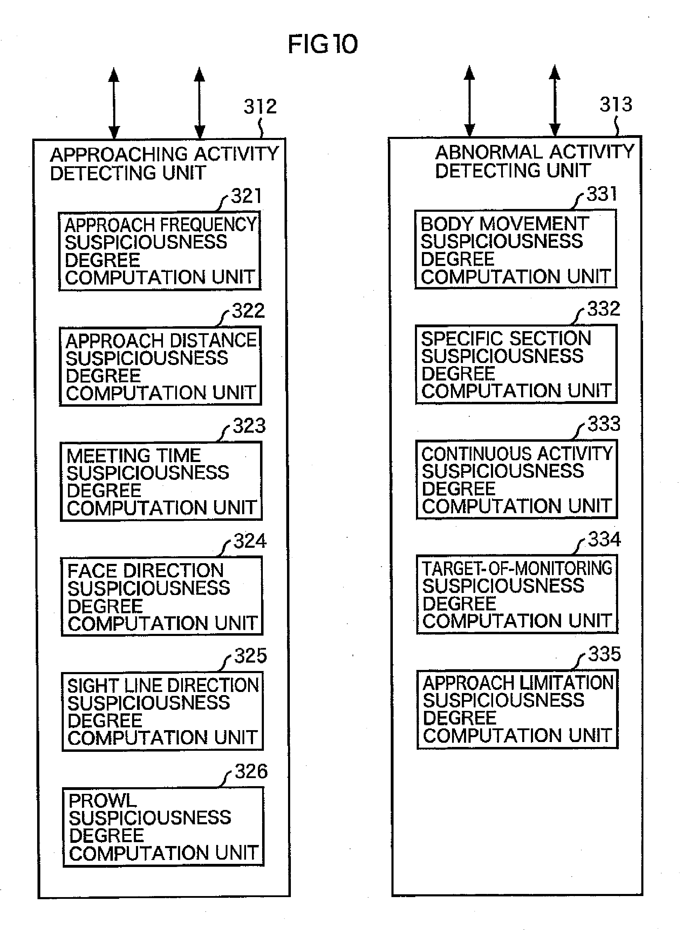

The approaching activity detecting unit 312, as described in detail with reference to Fig. 10, computes the degree of suspiciousness in an approaching activity performed by an approaching individual against the target of monitoring, on the basis of the monitor image data, peripheral information, and information indicating the face direction and sight line direction of the approaching individual, and supplies the suspiciousness degree judgment unit 311 with information indicting the computed degree of suspiciousness. The approaching activity detecting unit 312 further supplies the approach information recording unit 116 with information for instructing recording of a suspicious activity performed by the detected approaching individual.

The abnormal activity detecting unit 313, as described in detail with reference to Fig. 10, computes the degree of suspiciousness in an abnormal activity, other than the approaching activity, performed by an approaching individual, on the basis of the monitor image data and the peripheral information, and supplies information indicating the computed degree of suspiciousness to the suspiciousness degree judgment unit 311. The abnormal activity detecting unit 313 further supplies the approach information recording unit 116 with information for instructing recording of the suspicious activity performed by the detected approaching individual.

The disguised suspicious individual detecting unit 314, as described hereinafter with reference to Fig. 23, performs processing of detecting a disguised suspicious individual on the basis of the monitor image data. The disguised suspicious individual detecting unit 314 supplies information indicating a result of detection to the suspiciousness degree judgment unit 311.

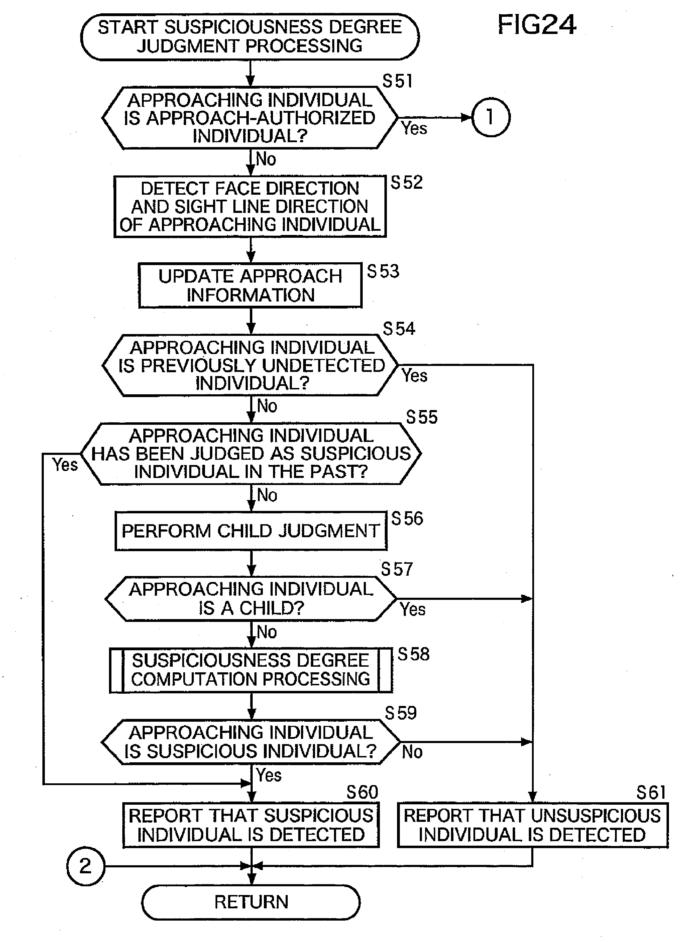

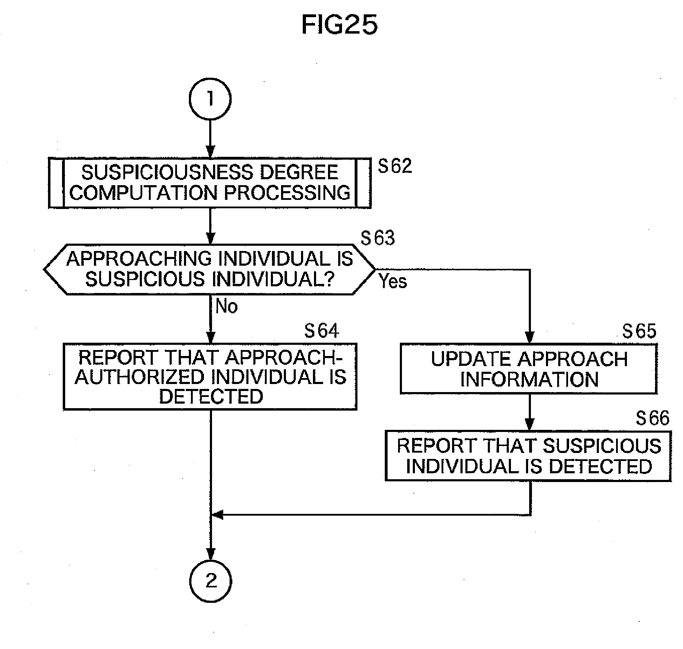

The child judgment unit 315, as described hereinafter with reference to Fig. 24 and Fig. 25, judges whether or not the approaching individual is a child. The child judgment unit 315 supplies information indicating a result of judgment to the suspiciousness degree judgment unit 311.

Fig. 10 is a block diagram showing a configuration example of a function of the approaching activity detecting unit 312 and the abnormal activity detecting unit 313 shown in Fig. 9. The approaching activity detecting unit 312 comprises an approach frequency suspiciousness degree computation unit 321, approach distance suspiciousness degree computation unit 322, meeting time suspiciousness degree computation unit 323, face direction suspiciousness degree computation unit 324, sight line direction suspiciousness degree computation unit 325, and prowl suspiciousness degree computation unit 326.

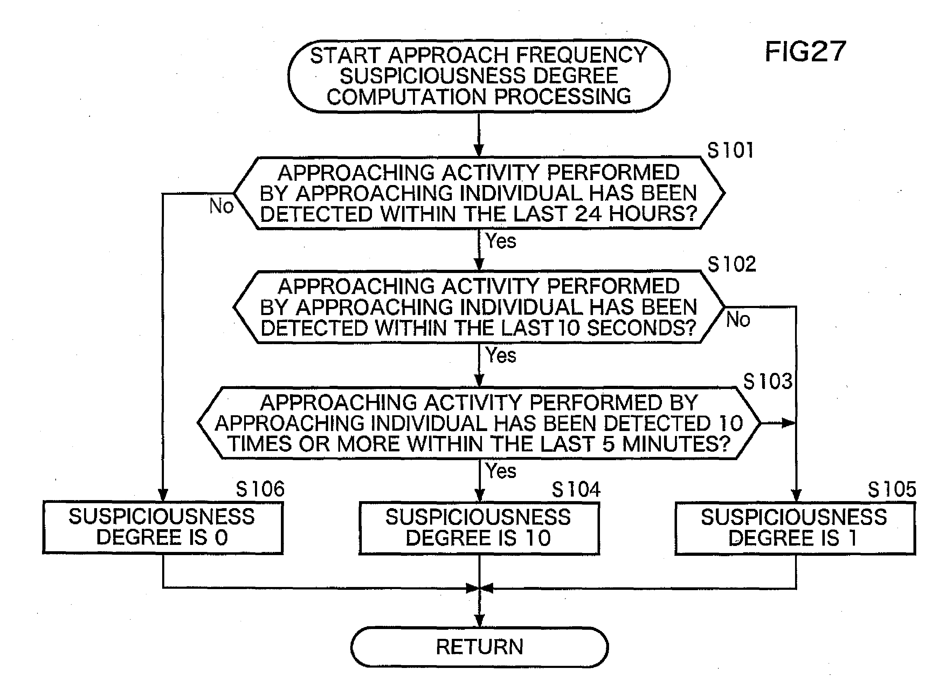

The approach frequency suspiciousness degree computation unit 321, as described hereinafter with reference to Fig. 27, computes the degree of suspiciousness in frequency of approach performed by the approaching individual, on the basis of the frequency with which the approaching individual approaches the target of monitoring within a predetermined period of time (with which the image of the face of the approaching individual is detected within a predetermined period of time), and supplies the computed degree of suspiciousness to the suspiciousness degree judgment unit 311.

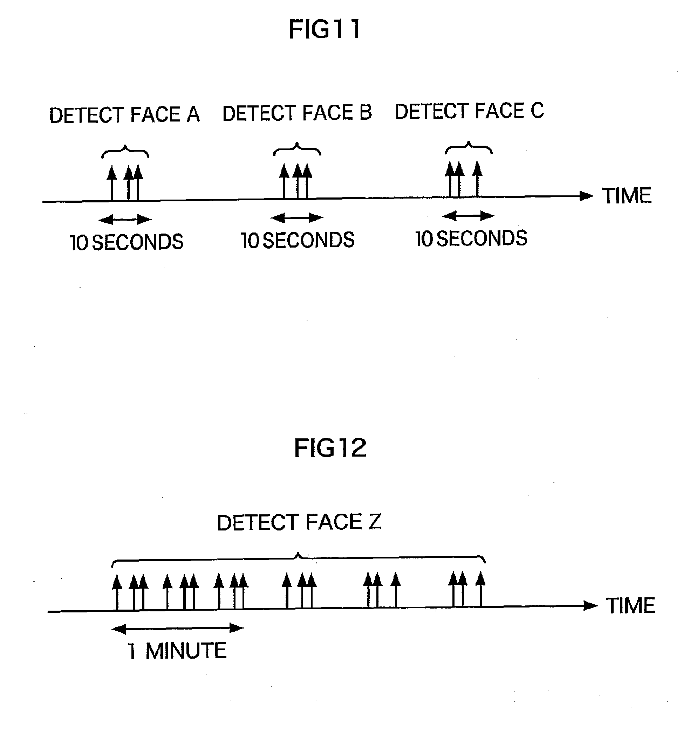

Here, with reference to Fig. 11 and Fig. 12, the detail of the approach frequency suspiciousness degree is described. Fig. 11 is a figure showing an example of frequency with which a face is detected by the monitoring system 11 when the target of monitoring is a vehicle and an ordinary passerby with a face A through a face C passes the vehicle. On the other hand, Fig. 12 is a figure showing an example of frequency with which a face is detected by the monitoring system 11 when a suspicious individual with a face Z attempts to perform a suspicious activity on the vehicle or attempts to make a preliminary inspection before performing the suspicious activity on the vehicle. The horizontal axes in Fig. 11 and Fig. 12 indicate hours, and time indicated with an upward arrow is time at which a face is detected.

As shown in Fig. 11, when an ordinary passerby passes the vehicle, the face of the passerby is repeatedly detected by the monitoring system 11 for a period of time in which the passerby passes the vehicle (for example, approximately 10 seconds). On the other hand, as shown in Fig. 12, when a suspicious activity attempts a suspicious activity on the vehicle, the face of the suspicious individual is detected by the monitoring system 11 frequently over a period of time longer than the period of time in which the ordinary passerby passes the vehicle. In this manner, the approach frequency suspiciousness degree is used for detecting activities of approaching the target of monitoring, the activities being performed by a suspicious individual.

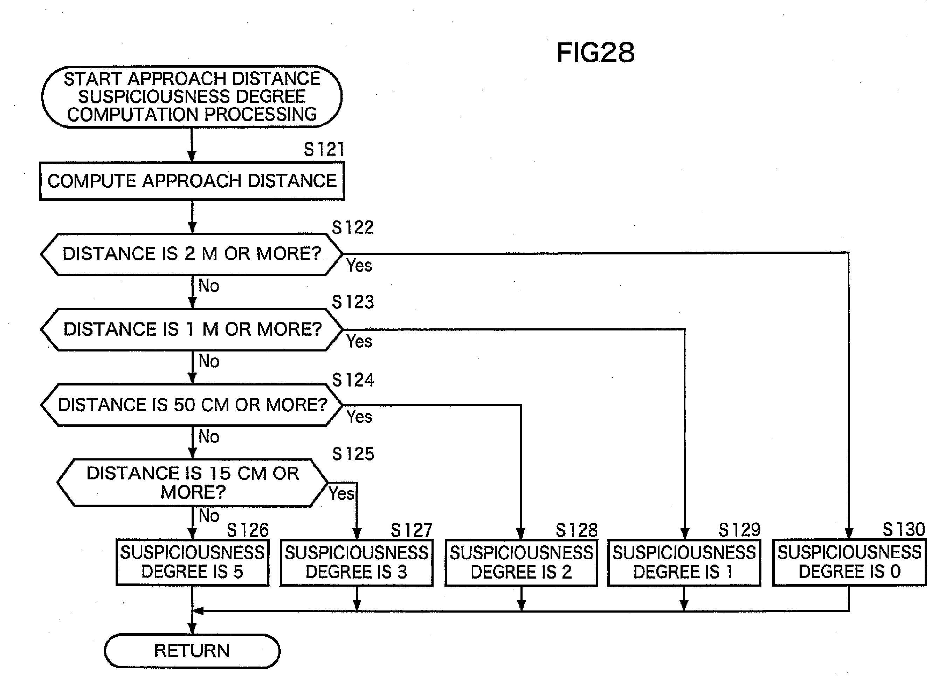

The approach distance suspiciousness degree computation unit 322, as described hereinafter with reference to Fig. 28, computes the degree of suspiciousness in the distance the approaching individual approaches, on the basis of the distance of approach to the target of monitoring, and supplies the computed degree of suspiciousness to the suspiciousness degree judgment unit 311.

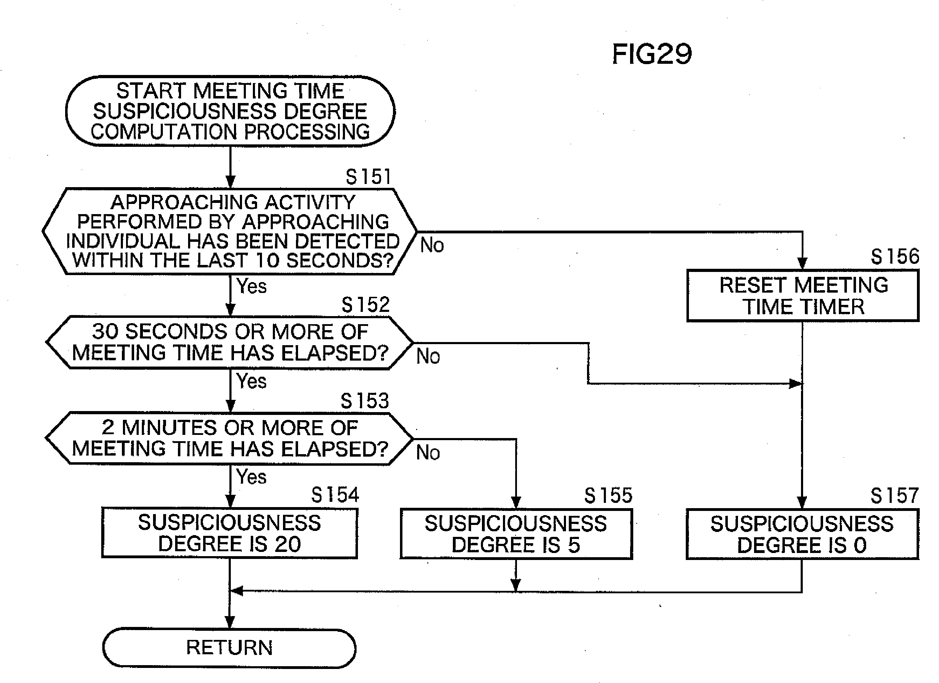

The meeting time suspiciousness degree computation unit 323, as described hereinafter with reference to Fig. 29, computes the degree of suspiciousness in meeting time of the approaching individual, on the basis of the hours in which approach toward the target of monitoring is continuously detected (in which an image of the face of the approaching individual is continuously detected), and supplies the computed degree of suspiciousness to the suspiciousness degree judgment unit 311.

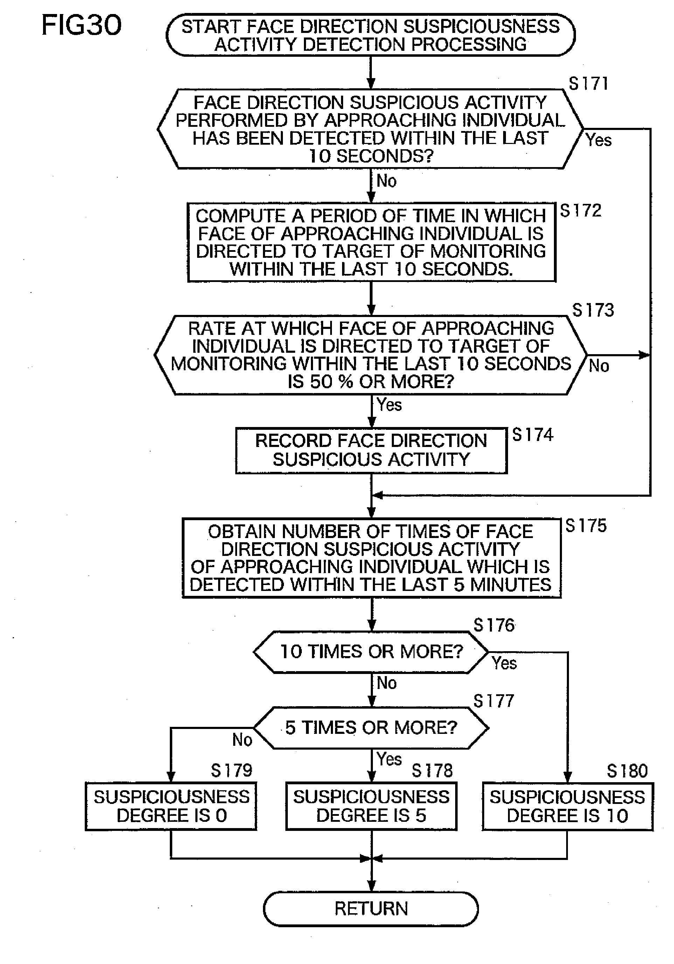

The face direction suspiciousness degree computation unit 324, as described hereinafter with reference to Fig. 30, computes the degree of suspiciousness in the face direction of the face of the approaching individual, on the basis of the number of times or the rate at which the face is directed to the target of monitoring, and supplies the computed degree of suspiciousness to the suspiciousness degree judgment unit 311. Further, if it is detected that the face of the approaching individual is directed to the target of monitoring at a rate of a predetermined value or more (for example, 50%) during a predetermined period of time (for example, 10 seconds), the face direction suspiciousness degree computation unit 324 supplies the approach information recording unit 116 with information for instructing recording of face direction suspicious activity performed by the approaching individual.

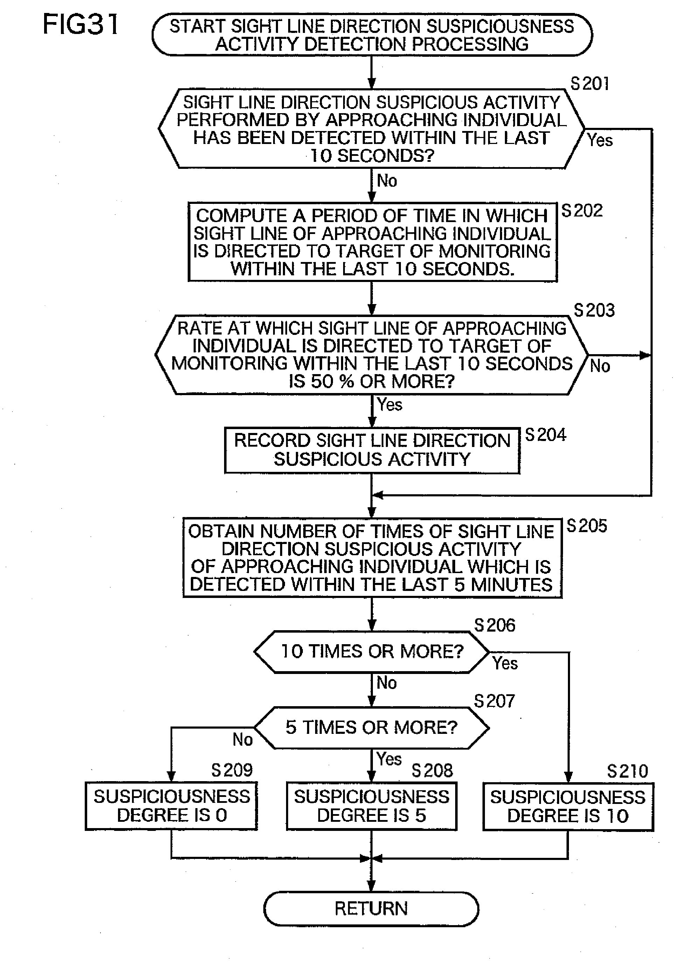

The sight line direction suspiciousness degree computation unit 325, as described hereinafter with reference to Fig. 31, computes the degree of suspiciousness on the basis of the number of times or rate at which the sight line is directed to the target of monitoring, and supplies the computed degree of suspiciousness to the suspiciousness degree judgment unit 311. Further, if it is detected that the sight line of the approaching individual is directed to the target of monitoring at a rate of a predetermined value or more (for example, 50%) during a predetermined period of time (for example, 10 seconds), the sight line direction suspiciousness degree computation unit 325 supplies the approach information recording unit 116 with information for instructing recording of sight line direction suspicious activity performed by the approaching individual.

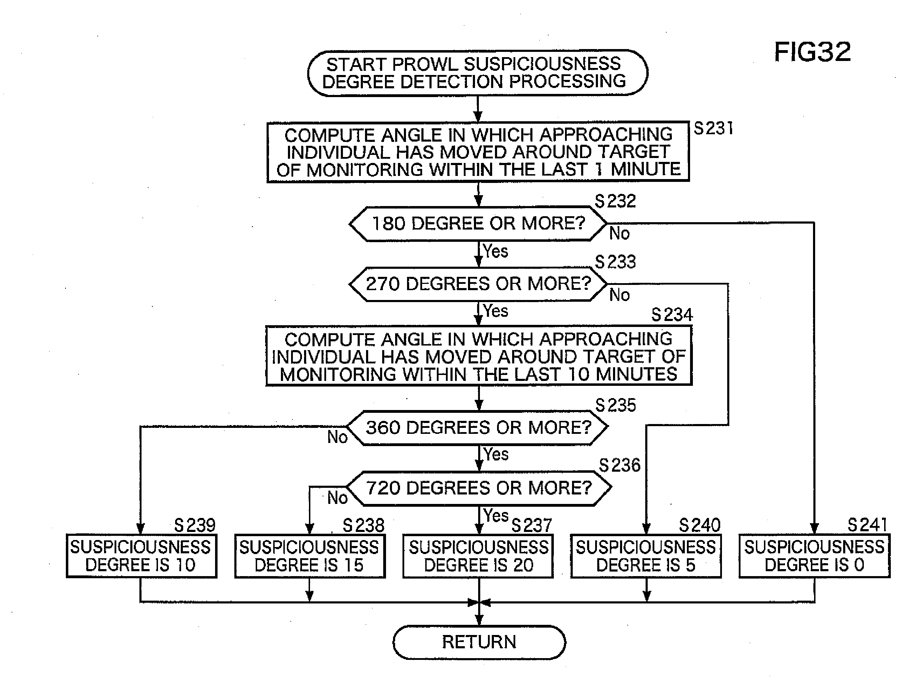

The prowl suspiciousness degree computation unit 326, as described hereinafter with reference to Fig. 32, computes the degree of suspiciousness in prowling activities performed by the approaching individual, on the basis of an angle in which the approaching individual moves around the target of monitoring, and supplies the computed degree of suspiciousness to the suspiciousness degree judgment unit 311.

The abnormal activity detecting unit 313 comprises a body movement suspiciousness degree computation unit 331, specific section suspiciousness degree computation unit 332, continuous activity suspiciousness degree computation unit 333, target-of-monitoring suspiciousness degree computation unit 334, and approach limitation suspiciousness degree computation unit 335.

The body movement suspiciousness degree computation unit 331, as described hereinafter with reference to Fig. 33, detects unnatural body movement of the approaching individual, thereby computing the body movement suspiciousness degree of the approaching individual, and supplies the computed degree of suspiciousness to the suspiciousness degree judgment unit 311. When suspicious body movement of the approaching individual is detected, the body movement suspiciousness degree computation unit 331 supplies the approach information recording unit 116 with information for instructing recording of the detail of the body movement.

The specific section suspiciousness degree computation unit 332, as described hereinafter with reference to Fig. 33, detects an activity performed on a specific section of the target of monitoring (for example, a door, trunk or the like of the vehicle), thereby computing the specific section suspiciousness degree of the approaching individual, and supplies the computed degree of suspiciousness to the suspiciousness degree judgment unit 311. Further, when a suspicious activity against the specific section of the target of monitoring is detected, the activity being performed by the approaching individual, the specific section suspiciousness degree computation unit 332 supplies the approach information recording unit 116 with information for instructing recording of the suspicious activity.

The continuous activity suspiciousness degree computation unit 333, as described hereinafter with reference to Fig. 33, computes the degree of suspiciousness in a continuous activity performed by the approaching individual, on the basis of a combination, sequence, and duration time of a series of continuous activities performed by the approaching individual, and supplies the computed degree of suspiciousness to the suspiciousness degree judgment unit 311.

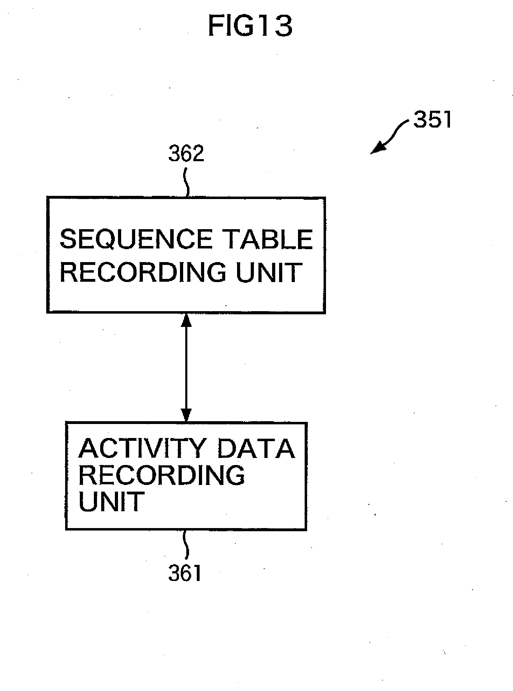

Fig. 13 is a figure showing a configuration example of a function of a continuous activity information recording unit 351 which records data used for computing the continuous activity suspiciousness degree. The continuous activity information recording unit 351 comprises an activity data recording unit 361 and a sequence table recording unit 362.

The activity data recording unit 361 records data indicating the characteristics of the monitor image data and peripheral information. For example, the position and posture of the approaching individual on the monitor image at the time when the approaching individual performs a predetermined activity (unlocking of the door lock of the vehicle, for example), the range of the sensor data values of the various sensors, detection time, and the like are recorded for each of the activities. An activity No. for uniquely discriminating the each of the activities is allocated to each activity.

The sequence table recording unit 362 manages a sequence table in which the detail of the suspicious continuous activities and the degree of suspiciousness are set. The suspicious continuous activities include, for example, when the target of monitoring is a vehicle, activities of approaching the door of the driver's seat, operating the door handle of the driver's seat, approaching a door on the back of the driver's seat, operating the door handle, approaching the trunk, operating the open/close operation unit of the trunk, approaching the backseat behind passenger seat, operating the door handle of the backseat behind the passenger seat, approaching the passenger seat to operate the door handle of the passenger seat, and other activities of continuously operating the operable portions on the vehicle, or activities of approaching the keyhole, directing the face near the keyhole, observing the proximity of the keyhole, bringing an object close to the keyhole, sequentially approaching the four wheels of the vehicle to bring the face or a hand close to the wheels in order to steel the wheel.

In the sequence table, a series of continuous activities is defined by a range of the sequence of the activity numbers of the activities and the duration time of each activity, which are recorded on the activity data recording unit 361, for each of the suspicious continuous activities. Moreover, in the sequence table, the degree of suspiciousness in each of the suspicious continuous activities is set.

When the continuous activity suspiciousness degree computation unit 333 detects that the approaching individual has performed the continuous activities defined in the sequence table, on the basis of the monitor image data and peripheral information, the continuous activity suspiciousness degree computation unit 333 sets the suspiciousness degree of the approaching individual to the suspiciousness degree set in the sequence table. When the continuous activity suspiciousness degree computation unit 333 further detects suspicious continuous activities performed by the approaching individual, the continuous activity suspiciousness degree computation unit 333 supplies the approach information recording unit 116 with information for instructing recording of the continuous activities.

It should be noted that the information on suspicious continuous activities to be detected is registered easily by configuring automatically recording the information on the suspicious continuous activities on the activity data recording unit 361 and sequence table recording unit 362 on the basis of the monitor image data and peripheral information which are acquired when, for example, user schematically executes suspicious continuous activities which can be assumed beforehand.

The target-of-monitoring suspiciousness degree computation unit 334, as described hereinafter with reference to Fig. 33, detects abnormality on the target of monitoring, thereby computing the degree of suspiciousness of the approaching individual with respect to the target of monitoring, and supplies the computed degree of suspiciousness to the suspiciousness degree judgment unit 311.

The approach limitation suspiciousness degree computation unit 335, as described hereinafter with reference to Fig. 33, computes the approach limitation suspiciousness degree of the approaching individual, on the basis of the approach limitation information supplied from the approach limitation means, and supplies the computed degree of suspiciousness to the suspiciousness degree judgment unit 311.

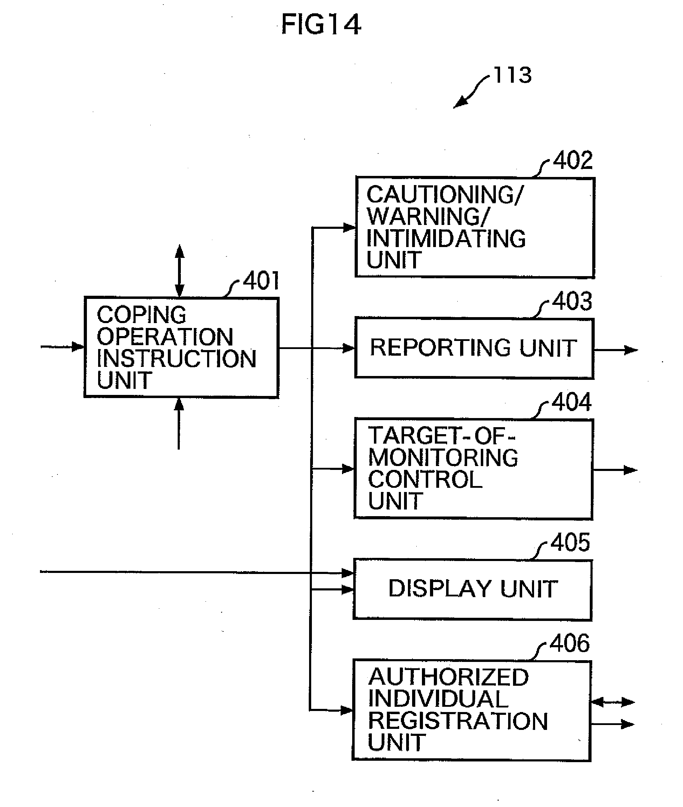

Fig. 14 is a block diagram showing a configuration example of a function of the coping operation unit 113 shown in Fig. 2. The coping operation unit 113 comprises a coping operation instruction unit 401, cautioning/warning/intimidating unit 402, reporting unit 403, target-of-monitoring control unit 404, display unit 405, and authorized individual registration unit 406.

The coping operation instruction unit 401 acquires the approaching individual detection information from the suspiciousness degree judgment unit 311. The coping operation instruction unit 401 acquires information indicating the commands for executing the processing from the other monitoring systems 11, center system 12, or terminal devices 13 via the network 14 and communication unit 114. The coping operation instruction unit 401 supplies information for instructing execution of various processing to the cautioning/warning/intimidating unit 402, reporting unit 403, target-of-monitoring control unit 404, display unit 405, and authorized individual registration unit 406, on the basis of the approaching individual detection information or the information indicating the commands for executing the processing. And the coping operation instruction unit 401 supplies information instructing to the update of information on approach to the approach information recording unit 116.

The cautioning/warning/intimidating unit 402 has a display device with an LED (Light Emitting Diode) or the like and a sound output device with a speaker or the like, and, as described hereinafter with reference to Fig. 34, cautions, warns or intimates the approaching individual to leave the target of monitoring by emitting LED or outputting sound.

The reporting unit 403 transmits information for reporting a state of monitoring of the monitoring system 11, to the other monitoring systems 11, center system 12, or terminal devices 13 via the communication unit 114 and network 14.

The target-of-monitoring control unit 404, as described hereinafter with reference to Fig. 34, controls operation of the target of monitoring in order to protect the target of monitoring from a suspicious individual, when the suspicious individual is detected. As described hereinafter with reference to Fig. 19 and Fig. 20, when the approaching individual is identified as a usage-authorized individual, the target-of-monitoring control unit 404 further controls the operation of the target of monitoring to improve the convenience of the monitoring system for the usage-authorized individual.

The display unit 405 is configured with, for example, a CRT (Cathode Ray Tube) display, LCD (Liquid Crystal Display), or the like. The display unit 405 acquires the monitor image data and the data indicating the camera No. of the image pickup apparatus 131 which has captured the data of a monitor image, from the connection unit 132. The display unit 405 also displays a monitor image corresponding to the monitor image data or displays various messages and information on the basis of the control of the coping operation instruction unit 401.

The authorized individual registration unit 406, as described hereinafter with reference to Fig. 34, acquires the face image data and characteristic amount data related to the approaching individual, who is judged as a suspicious individual, from the approach information recording unit 116, and causes the authorized individual information recording unit 115 to record the face image data and characteristic amount data. Accordingly, the approaching individual who is judged as a suspicious individual is registered a usage-authorized individual or approach-authorized individual.

Fig. 15 is a block diagram showing a configuration example of a function of the authorized individual information recording unit 115 shown in Fig. 2. The authorized individual information recording unit 115 comprises an authorized information management unit 501, face image recording unit 502, characteristic amount recording unit 503, usage information recording unit 504, and personal information recording unit 505.

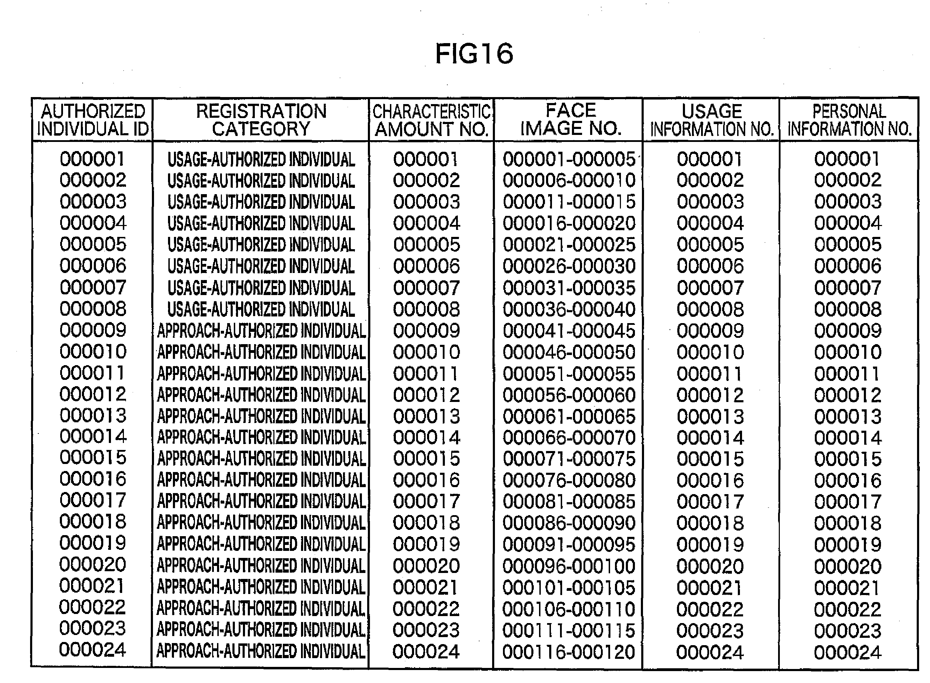

The authorized information management unit 501 manages an authorized individual information table which is described hereinafter with reference to Fig. 16, and updates the authorized individual information table on the basis of an instruction sent from each unit of the monitoring systems 11. The authorized information management unit 501 further causes the face image recording unit 502, characteristic amount recording unit 503, usage information recording unit 504, and personal information recording unit 505 to record data which is instructed to be written, on the basis of a data write instruction sent from each unit of the monitoring system 11. The authorized information management unit 501 further reads data, which is instructed to be read, from the face image recording unit 502, characteristic amount recording unit 503, usage information recording unit 504, and personal information recording unit 505 on the basis of a data read instruction sent from each unit of the monitoring system 11, and supplies the read data to the each unit.

The face image recording unit 502 records the face image data of each authorized individual. It should be noted that the face image recording unit 502 can record a plurality of face image data items for one authorized individual. A unique face image No. for uniquely discriminating the face image data items is allocated to the face image data.

The characteristic amount recording unit 503 records the characteristic amount data indicating the characteristics of each authorized individual. The characteristic amount data includes data indicating a face or the position of each part of the face such as eyes, nose, mouth, eyebrows, ears, moles, fleck, and the like, the shape and size of the face, the proportion of the size of the each portion of the face, the colors of the skin, hair, eyes and the like, the shape of the iris, and the shape of the bone structure estimated by appearance. A unique characteristic amount No. for uniquely discriminating the characteristic amount data items is allocated to the characteristic amount data.

The usage information recording unit 504 records usage information of each authorized individual. The usage information is information indicating a range of use of the target of monitoring which is permitted for each authorized individual. For example, if the target of monitoring is a vehicle, the usage information includes information indicating a range of use of the vehicle which is permitted for each usage-authorized individual, the range of use including driving of the vehicle, getting into the vehicle, approaching the vehicle, passing the proximity of the vehicle, and the like. Furthermore, when an approaching individual is identified as a usage-authorized individual, the usage information has information indicating the processing which is performed automatically by the monitoring system 11 (for example, processing of automatically releasing the door lock of the vehicle), in order to improve the convenience of the monitoring system for the usage-authorized individual. Moreover, a unique usage information No. for uniquely discriminating the usage information items is allocated to the usage information.

The personal information recording unit 505 records personal information of each authorized individual. The personal information includes, for example, the name, address, phone number, age, occupation, gender and the like of the authorized individual. A unique personal information No. for uniquely discriminating the personal information items is allocated to the personal information.

Fig. 16 is a figure showing an example of the authorized individual information table which is managed by the authorized individual information management unit 501. The records on the authorized individual information table include, for example, an authorized individual ID, registration category, the characteristic amount No., face image No., usage information No., and personal information No. It should be noted that the records on the authorized individual information table are also simply referred to as "authorized individual information" hereinafter.

The authorized individual ID is an ID allocated to each authorized individual in order to uniquely discriminate the authorized individuals managed on the authorized individual information table.

The registration category is data indicating whether an individual is the usage-authorized individual or approach-authorized individual.

The characteristic amount No., face image No., usage information No., and personal information No. indicate the characteristic amount No., face image No., usage information No., and personal information No. of the characteristic amount data corresponding to each authorized individual.

Fig. 17 is a block diagram showing a configuration example of a function of the approach information recording unit 116 shown in Fig. 2. The approach information recording unit 116 comprises an approach information management unit 521, face image recording unit 522, characteristic amount recording unit 523, activity information recording unit 524, peripheral information recording unit 525, and buffer 526.

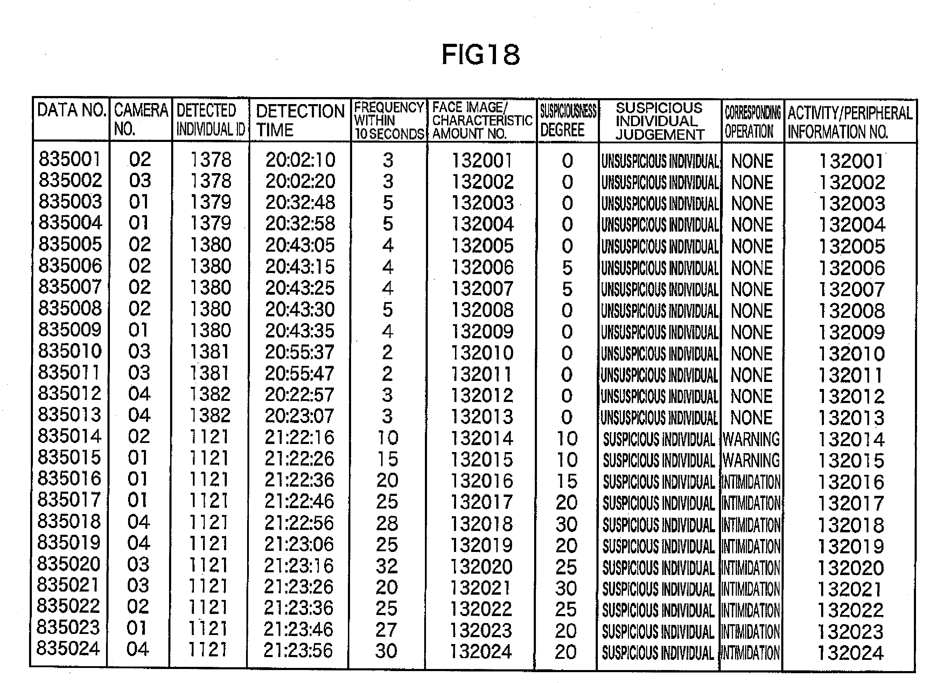

The approach information management unit 521 manages an approach information table which is described hereinafter with reference to Fig. 18, and updates the approach information table on the basis of an instruction sent from each unit of the monitoring systems 11. The approach information management unit 521 further causes the face image recording unit 522, characteristic amount recording unit 523, activity information recording unit 524, peripheral information recording unit 525, and buffer 526 to record data which is instructed to be written, on the basis of a data write instruction sent from each unit of the monitoring system 11. The approach information management unit 521 further reads data, which is instructed to be read, from the face image recording unit 522, characteristic amount recording unit 523, activity information recording unit 524, peripheral information recording unit 525, and buffer 526 on the basis of a data read instruction sent from each unit of the monitoring system 11, and supplies the read data to the each unit.

The face image recording unit 522 records face image data related to each approaching individual, the face image being imaged by the image pickup apparatus 131.

The characteristic amount recording unit 523 records characteristic amount data which is data indicating the characteristics of the face of each approaching individual detected from the face image data. The characteristic amount data includes data which is same as the abovementioned characteristic amount data of an authorized individual.

A unique face image/characteristic amount No. for uniquely discriminating the data items is allocated to a pair of the face image data and characteristic amount data.

The activity information recording unit 524 records activity information indicating the detail of a suspicious activity performed when an approaching individual is detected. The activities recorded as the activity information include, for example, face direction suspicious activity, sight line direction suspicious activity, suspicious body movement, suspicious activity on a specific section, and a suspicious continuous activity.

The peripheral information recording unit 525 records peripheral information acquired by the peripheral information acquisition unit 111 when an approaching individual is detected.

A unique activity/peripheral information No. for uniquely discriminating the data items is allocated to a pair of activity information 533 and peripheral information 534.

The buffer 526 temporarily records various information or data required in processing performed by the monitoring system 11.

Fig. 18 is a figure showing an example of the approach information table managed by the approach information management unit 521. The records on the approach information table include, for example, a data No., camera No., detected individual ID, detection time, frequency within 10 seconds, face image/characteristic amount No., suspiciousness degree, suspicious individual judgment, coping operation, and activity/peripheral information No. It should be noted that the records on the approach information table are also simply referred to as "approach information" hereinafter. When the same approaching individual is continuously detected by the monitoring system 11, new approach information is added every predetermined period of time (for example, 10 seconds) (referred to as "unit time" hereinafter). In the explanation hereinafter, the unit time of the approach information is 10 seconds.

The data No. is a number allocated for uniquely discriminating the approach information items managed by the approach information table.

The camera No. is a number of the image pickup apparatus 131 which captures an image of the face of an approaching individual.

The detected individual ID is a number allocated for uniquely discriminating previously detected individuals who have been detected by the monitoring system 11 in the past.

The detection time indicates a time at which recording of the approach information is started.

The frequency within 10 seconds indicates the number of times the face of the approaching individual is detected in a unit time (in this case, 10 seconds) when the approach information is recorded.

The face image/characteristic amount No. indicates a face image/characteristic amount No. of the face image data and characteristic amount data corresponding to each approach information item. Specifically, the face image/characteristic amount No. indicates a face image/characteristic amount No. of the face image data and characteristic amount data on the approaching individual wherein the approach information is recorded.

The suspiciousness degree is data indicating the degree of suspiciousness of the approaching individual.

The suspicious individual judgment is data indicating whether the approaching individual is judged as a suspicious individual or an unsuspicious individual.

The coping operation indicates the type of operation performed by the monitoring system 11 against the approaching individual (for example, no coping operation, caution, warning, intimidating, and the like).

The activity/peripheral information No. indicates an activity/peripheral information No. of the activity information and peripheral information corresponding to each approach information item. Specifically, the activity/peripheral information No. indicates an activity/peripheral information No. of the activity information and peripheral information related to the approaching individual when the approach information is recorded.

Next, the processing executed by the monitoring system 11 is described with reference to Fig. 19 through Fig. 39.

First of all, monitoring processing executed by the monitoring system 11 is described with reference to Fig. 19 and Fig. 20. It should be noted that this processing is started when, for example, supply of electric power to the monitoring system 11 is started.
in a step S1, the image pickup unit 101 starts imaging a monitoring region. Specifically, each of the image pickup apparatus 131 of the image pickup unit 101 starts imaging the monitoring region, and supplies the data of an imaged monitor image to the connection unit 132. The connection unit 132 starts supply of the monitor image data and the data indicating the camera No. of the image pickup apparatus 131 which has captured the data of the monitor image to the face detecting unit 301, display unit 405, and approach information management unit 521. The approach information management unit 521 relates the acquired monitor image data to the camera No., and temporarily records the related monitor image data and the camera No. in the buffer 526 for a predetermined period of time (for example, for three minutes).

In a step S2, the peripheral information acquisition unit 111 starts acquisition of the peripheral information, and starts to supply the acquired peripheral information to the approach information management unit 521. The approach information management unit 521 temporarily stores the acquired peripheral information in the buffer 526 for a predetermined period of time (for example, for three minutes) .

In a step S3, the monitoring system 11 judges whether to start monitoring. For example, the monitoring system 11 determines to start monitoring once acquiring a command for starting monitoring, which is input by the user operating an unshown operation unit of the monitoring system 11, and the processing proceeds to a step S4. For example, when the target of monitoring is a vehicle, the monitoring system 11 determines to start monitoring when the monitoring start conditions of the monitoring system 11 are established, i.e. when the target-of-monitoring information acquisition unit 163 has detected that the door lock of the vehicle is locked when the key is not yet inserted into the key cylinder of the vehicle. Then the processing proceeds to the step S4.

In the step S4, the face detecting unit 301 searches for the face of an individual from the monitor image data. Specifically, the face detecting unit 301 searches for an image having the characteristics of the face of an individual, i.e. a face image, from the monitor image data, by using a method such as a template matching method or a neural network method. It should be noted that the face detection processing performed by the face detecting unit 301 is not limited to a particular method.

In a step S5, the face detecting unit 301 judges whether the face of an individual is detected or not from the monitor image data, on the basis of a result of the processing of the step S4. If it is judged that the face of an individual is not detected in the monitor image data, the processing proceeds to a step S6.

In the step S6, the face detecting unit 301 reports to the suspiciousness degree judgment unit 311 that the face of an individual is not detected. Specifically, the face detecting unit 301 supplies the suspiciousness degree judgment unit 311 with information for reporting that the face of an individual is not detected from the monitor image data. The suspiciousness degree judgment unit 311 supplies the disguised suspicious individual detecting unit 314 with information for instructing execution of disguised suspicious individual detection processing.

In a step S7, the disguised suspicious individual detecting unit 314 performs the disguised suspicious individual detection processing. The detail of the disguised suspicious individual detection processing is described hereinafter with reference to Fig. 23. The disguised suspicious individual detection processing is executed in the monitoring region, and information indicating a result of the detection is supplied to the suspiciousness degree judgment unit 311.

In a step S8, the suspiciousness degree judgment unit 311 judges whether a disguised suspicious individual is detected from the monitoring region, on the basis of a result of the processing of the step S6. If it is judged that a disguised suspicious individual is not detected, in other words, if the presence of an individual is not detected from the monitoring region, the processing proceeds to a step S15.

If it is judged in the step S8 that a disguised suspicious individual is detected, the processing proceeds to a step S16.

If it is judged in the step S5 that the face of an individual is detected from the monitor image data, the processing proceeds to a step S9.

In the step S9, the characteristic amount detecting unit 302 detects characteristic amount of the face of an approaching individual. Specifically, the face detecting unit 301 extracts an image of the face of the approaching individual from the monitor image data, and supplies the characteristic amount detecting unit 302 with the image data obtained by extracting the image of the face of the approaching individual (face image data).

The characteristic amount detecting unit 302 detects the characteristic amount, which includes a face or the position of each part of the face such as eyes, nose, mouth, eyebrows, ears, moles, fleck, and the like, the shape and size of the face, the proportion of the size of the each portion of the face, the colors of the skin, hair, eyes and the like, the shape of the iris, and the shape of the bone structure estimated by appearance. The characteristic amount detecting unit 302 supplies the collating unit 303 with the characteristic amount data indicating the characteristic amount of the face of the approaching individual, and the face image data which is used for detecting the characteristic amount.

It should be noted that the characteristic amount detecting unit 302 may detect characteristic amount different from the abovementioned characteristic amount, or select characteristic amount to be detected in accordance with a state.

In a step S10, the collating unit 303 identifies an approaching individual. Specifically, the collating unit 303 acquires the characteristic amount data of a usage-authorized individual from the characteristic amount recording unit 503 via the authorized individual information management unit 501. The collating unit 303 collates the characteristic amount data of the usage-authorized individual with the characteristic amount data on the approaching individual. When the characteristic amount data on the usage-authorized individual that matches the characteristic amount data on the approaching individual is detected, the collating unit 303 identifies the approaching individual as the usage-authorized individual having the matching characteristic amount data, on the basis of a predetermined judgment condition.

When the approaching individual is not identified as the usage-authorized individual, the collating unit 303 acquires the characteristic amount data on an approach-authorized individual from the characteristic amount recording unit 503 via the authorized individual information management unit 501. The collating unit 303 collates the characteristic amount data on the approach-authorized individual with the characteristic amount data on the approaching individual. When the characteristic amount data on the approach-authorized individual that matches the characteristic amount data on the approaching individual is detected, the collating unit 303 identifies the approaching individual as the approach-authorized individual having the matching characteristic amount data, on the basis of a predetermined judgment condition.

When the approaching individual is not identified as the usage-authorized individual or approach-authorized individual, the collating unit 303 acquires the characteristic amount data on a previously detected individual from the characteristic amount recording unit 523 via the approach information management unit 521. The collating unit 303 collates the characteristic amount data on the previously detected individual with the characteristic amount data on the approaching individual. When the characteristic amount data on the previously detected individual that matches the characteristic amount data on the approaching individual is detected, the collating unit 303 identifies the approaching individual as the previously detected individual having the matching characteristic amount data, on the basis of a predetermined judgment condition.

When the approaching individual is not identified as the usage-authorized individual, approach-authorized individual, or previously detected individual, the collating unit 303 judges that the approaching individual as a previously undetected individual.

When the approaching individual is the usage-authorized individual or approach-authorized individual, the collating unit 303 supplies the suspiciousness degree judgment unit 311 with the approaching individual identification information which includes the authorized individual ID of the approaching individual. Further, when the approaching individual is the previously detected individual, the collating unit 303 supplies the suspiciousness degree judgment unit 311 with the approaching individual identification information which includes the detected individual ID of the approaching individual. Moreover, when the approaching individual is the previously undetected individual, the collating unit 303 supplies the suspiciousness degree judgment unit 311 with the approaching individual identification information which indicates that the approaching individual is the previously undetected individual.

The method used by the collating unit 303 to identify an approaching individual includes the following methods:
(1) a method of using the position, shape or size of each portion of the face, such as a face, eyes, nose, mouth, eyebrows, ears, moles, fleck, and the like;
(2) a method of using the proportion of the size of the each portion of the face;
(3) a method of using the colors of the skin, hair, eyes and the like;
(4) a method of using the shape of the iris; and
(5) a method of using the shape of the bone structure estimated by appearance.

The method of identifying an approaching individual, which is performed by the face detecting unit 301 is not limited to a specific method, thus a method different from the abovementioned methods may be used, or a combination of a plurality of methods may be used.

Further, the collating unit 303 may use the abovementioned user ID with reference to Fig. 6 to identify the usage-authorized individual. The both user ID and face image may be used to identify the usage-authorized individual. A suspicious individual who attempts to use the user ID inappropriately can be detected by using the both user ID and face image.

In a step S11, the suspiciousness degree judgment unit 311 judges whether the approaching individual is the usage-authorized individual, on the basis of the approaching individual identification information. If it is judged that the approaching individual is the usage-authorized individual, the processing proceeds to a step S12.

In the step S12, the coping operation unit 113 performs operation corresponding to the usage-authorized individual. Specifically, the suspiciousness degree judgment unit 311 supplies the coping operation instruction unit 401 with a user ID of a detected approaching individual and the approaching individual detecting unit including the information indicating that the approaching individual with the usage-authorized individual. The coping operation instruction unit 401 acquires usage information of the approaching individual via the authorized individual information management unit 501. The coping operation instruction unit 401 supplies the target-of-monitoring control unit 404 with information for instructing execution of processing which is automatically executed when the usage-authorized individual indicated in the usage information is detected. The target-of-monitoring control unit 404 controls operation of the target of monitoring on the basis of an instruction of the coping operation instruction unit 401.

For example, when the target of monitoring is a vehicle, the target-of-monitor control unit 404 can automatically release the door lock of the vehicle or start the engine of the vehicle. Furthermore, for example, when the target of monitoring is a house, the target-of-monitor control unit 404 automatically releases the lock of the house.

Thereafter, the processing proceeds to the step S15.

If it is judged in the step S11 that the approaching individual is not the usage-authorized individual, in other words, if it is judged that the approaching individual is the approach-authorized individual, previously detected individual, or previously undetected individual, the processing proceeds to a step S13.

In the step S13, the suspicious individual detecting unit 112 performs suspiciousness degree judgment processing. The detail of the suspiciousness degree judgment processing is described hereinafter with reference to Fig. 24 and Fig. 25. Through this processing, the degree of suspiciousness of the approaching individual is computed, and it is judged whether or not the approaching individual is a suspicious individual. The approaching individual detection information related to the detected approaching individual is supplied from the suspiciousness degree judgment unit 311 to the coping operation instruction unit 401.

In a step S14, the coping operation instruction unit 401 judges whether a suspicious individual is detected or not, on the basis of the approaching individual detection information. If it is judged that a suspicious individual is not detected, the processing proceeds to the step S15.

In the step S15, the reporting unit 403 reports that no abnormality is detected. Specifically, the reporting unit 403 transmits information indicating that no abnormality is detected, to the center system 12 via the communication unit 114 and network 14 on a regular basis.

For example, if the fact that no abnormality is detected is ongoingly reported from the monitoring system 11, the center system 12 transmits the information for reporting that no abnormality is detected in the monitoring region, via the network 14, to the terminal device 13 of the monitoring system 11, which his possessed by the user, on a regular basis (for example, five times a day, such as 7:00, 11:00, 15:00, 19:00, and 23:00).

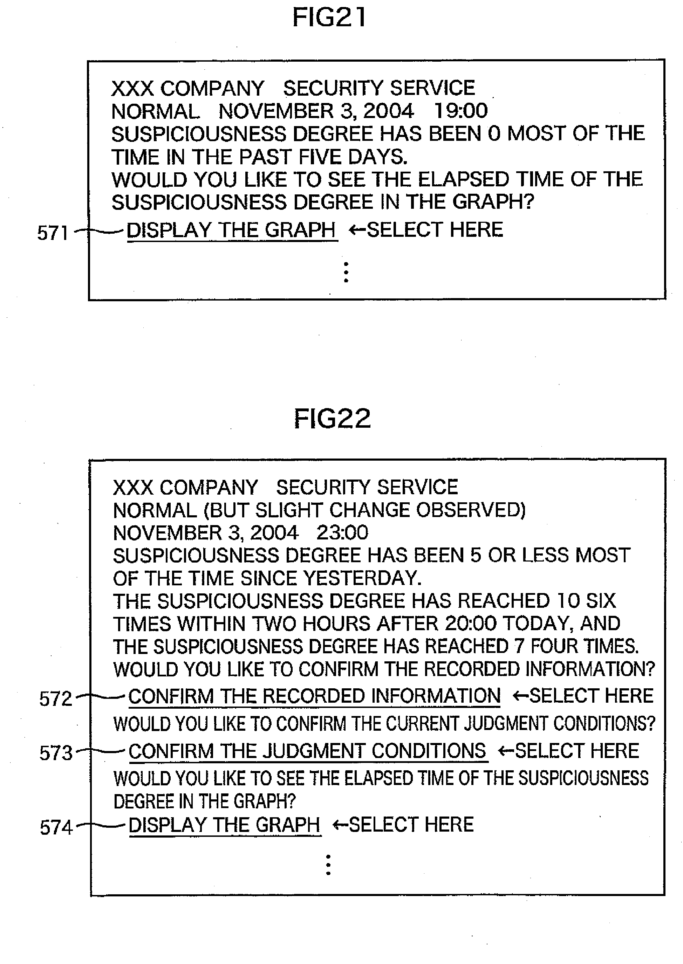

Fig. 21 is shows an example of information displayed at this moment on the terminal device 13. In the example shown in Fig. 21, the name of a company which is a transmission source of the information, and the service name are displayed on the first column, and a result of monitoring and reporting time are displayed on the second column. The details of the result of monitoring are displayed from the third line onward. It should be noted that the user can select a text 571 into which a hyperlink is inserted, thereby downloading a graph, which shows lapse of time of the suspiciousness degree which is computed by the monitoring system 11, from the center system 12 via the network 14, and displaying the graph on the terminal device 13. In this manner, by reporting to the user, on a regular basis, that a state where no abnormality occurs in the monitoring region is lasting, the sense of security can be provided to the user in this case, compared to a case in which only the occurrence of abnormality is reported.

Fig. 22 is shows an example of the information displayed on the terminal device 13 when the degree of suspiciousness has increased after a state of extremely low suspiciousness degree has lasted for a long period of time. In the example shown in Fig. 22, the name of a company which is a transmission source of the information, and the service name are displayed on the first column, and a result of monitoring and reporting time are displayed on the second column. From the third line onward, the details of the result of monitoring performed by the monitoring system 11 are displayed more precisely, compared to the example shown in Fig. 21. These are displayed so that, for example, the transition of an even in which the suspiciousness degree changes can be recognized at a glance.

It should be noted that the user can select a text 572 into which a hyperlink is inserted, thereby downloading information indicating a more detailed result of monitoring (for example, detail of a detected suspicious activity or the like) from the center system 12 via the network 14, and displaying the information on the terminal device 13. Moreover, the user can select a text 573 into which a hyperlink is inserted, thereby downloading information, which indicates a judgment condition of a suspicious individual which is set currently in the monitoring system 11, from the center system 12 via the network 14, and displaying the information on the terminal device 13. The user can further select a text 574 into which a hyperlink is inserted, thereby downloading a graph, which shows lapse of time of the suspiciousness degree from the center system 12 via the network 14, and displaying the graph on the terminal device 13.

It should be noted that the information for reporting the results of monitoring, which are shown in Fig. 21 and Fig. 22, may be transmitted from the monitoring system 11 to the terminal device 13 directly. When the terminal device 13 is a portable telephone, the information reported from the monitoring system 11 may be displayed on a wallpaper of the portable phone in real time so that the user can perceive the monitoring state of the monitoring system 11 in real time.

Returning to Fig. 20, if it is judged that a suspicious individual is detected in the step S14, the processing proceeds to the step S16.

In the step S16, the coping operation unit 113 performs suspicious individual corresponding processing. The detail of the suspicious individual corresponding processing is described hereinafter with reference to Fig. 34. Through this processing, information on a detected suspicious individual is reported to a user, and the suspicious individual is cautioned, warned, or intimidated.

In a step S17, the monitoring system 11 judges whether to stop monitoring. For example, when conditions for stopping monitoring are established, and when the target of monitoring is a vehicle, the monitoring system 11 determines to stop monitoring when the engine of the vehicle is started in a case in which no suspicious individual is detected. Alternatively, when the target of monitoring is a house and when a state of monitoring is canceled by a resident of the house, the monitoring system 11 determines to stop monitoring. Then the processing proceeds to a step S18.

In the step S18, the monitoring system 11 judges whether to end the monitoring processing. If it is judged that the monitoring processing is directed to end, the processing returns to the step S3, and the abovementioned processing operations of the step S3 and onward are executed.

If it is judged that the monitoring processing is ended in the step S18, the monitoring processing ends when, for example, supply of electric power to the monitoring system 11 is stopped.

If it is judged that the monitoring processing is not ended in the step S17, the processing returns to the step S4, and the abovementioned processing operations of the step S4 and onward are executed.

Next, the detail of the disguised suspicious individual detection processing of the step S7 in Fig. 19 is described with reference to the flowchart of Fig. 23.

In a step S31, the disguised suspicious individual detecting unit 314 searches for the figure of an individual from the monitor image data. Specifically, in the step S4 of Fig. 18, the disguised suspicious individual detecting unit 314 acquires monitor image data from which the face of an individual is not detected, from the buffer 526 via the approach information management unit 521. The disguised suspicious individual detecting unit 314 searches for an image having the characteristics of the individual from the acquired monitor image data.

In a step S32, the disguised suspicious individual detecting unit 314 judges whether an individual appears in the monitor image data, on the basis of a result of the processing of the step S31. If it is judged that an individual appears in the monitor image data, the processing proceeds to a step S33.

In the step S33, the disguised suspicious individual detecting unit 314 judges a disguised suspicious individual. Specifically, when an individual having the characteristics detected in the step S31 is detected at a rate of at least a predetermined value (for example, 50%) during a predetermined of time (for example, 2 minutes), without having the face of the individual detected at all, the disguised suspicious individual detecting unit 314 judges that the individual detected in the step S31 is a disguised suspicious individual.

In a step S34, the disguised suspicious individual detecting unit 314 judges whether a disguised suspicious individual is detected or not, on the basis of a result of the processing performed in the step S33. If it is judged that a disguised suspicious individual is detected, the processing proceeds to a step S35.

In the step S35, the disguised suspicious individual detecting unit 314 reports that a disguised suspicious individual is detected. Specifically, the disguised suspicious individual detecting unit 314 supplies the suspiciousness degree judgment unit 311 with that a disguised suspicious individual is detected.

In the step S35, the approach information management unit 521 updates the approach information, and the disguised suspicious individual detection processing ends. Specifically, the suspiciousness degree judgment unit 311 supplies the approach information management unit 521 with information which includes the detection time when a disguised suspicious individual is detected, and the camera No. of the image pickup apparatus 131 which has imaged the disguised suspicious individual, and which is sued to instruct addition of approach information related to the disguised suspicious individual. The approach information management unit 521 allocates the detected individual ID to the approaching individual who is the detected disguised suspicious individual. Moreover, the approach information management unit 521 adds new approach information to the approach information table, and records the data No., camera No., detected individual ID, detection time, and frequency within 10 seconds.

If it is judged in the step S34 that a disguised suspicious individual is not detected, the processing proceeds to a step S37.

If it is judged in the step S32 that an individual does not appear in the monitor image data, the processing proceeds to the step S37.

In the step S37, the disguised suspicious individual detecting unit 314 reports that a disguised suspicious individual is not detected, and the disguised suspicious individual detection processing ends. Specifically, the disguised suspicious individual detecting unit 314 supplies the suspiciousness degree judgment unit 311 with information indicating that an approaching individual is not detected.

Next, the suspiciousness degree judgment processing of the step S13 of Fig. 20 is described in detail with reference to the flowcharts of Fig. 24 and Fig. 25.

In a step S51, the suspiciousness degree judgment unit 311 judges the approaching individual is an approach-authorized individual or not, on the basis of the approaching individual identification information. If it is judged that the approaching individual is not the approach-authorized individual, the processing proceeds to a step S52.

In the step S52, the sight line detecting unit 304 detects the face direction and sight line direction of the approaching individual. Specifically, the suspiciousness degree judgment unit 311 supplies the sight line detecting unit 304 with information for instructing detection of the face direction and sight line direction of the approaching individual. The sight line detecting unit 304 acquires the face image data on the approaching individual, the monitor image data of before initiating the face image data, and the data indicating the camera No. of the image pickup apparatus 131 which has images the approaching individual, from the face image detecting unit 301.

The sight line detecting unit 304 detects the profiles of the eyes, positions of the ends of the both eyes, and positions of the nares, on the basis of, for example, the face image data in which the approaching individual appears. The sight line detecting unit 304 estimates the position and the radius of the center of the eyeball, on the basis of the positions of the both ends of the eyes and the positions of the nares, and detects the position of the center of iris on the basis of the luminous information on the luminous of the inside of the profile of the eye of the approaching individual. The sight line detecting unit 304 calculates the vector connecting the center of the eyeball and the center of the iris. The sight line detecting unit 304 detects the direction of the sight line of the approaching individual on the basis of the direction of the obtained vector, the position of the face in the monitor image data which is an extraction source of the face image data, and the position of the image pickup apparatus 131 which has imaged the approaching individual.

The sight line direction detecting unit 304 further detects the direction of the face of the approaching individual on the basis of, for example, the positions of the both eyes, nose, and mouth, and the position of the image pickup apparatus 131 which has imaged the approaching individual.

The sight line detecting unit 304 supplies the approach information management unit 521 with the information indicating the sight line direction and the face direction of the approaching individual. The approach information management unit 521 relates the information to the monitor image data which is used in detection of the sight line direction and face direction, and causes the buffer 526 to record the information indicating the sight line direction and face direction.

In the step S53, the approach information management unit 521 updates the approach information. Specifically, the suspiciousness degree judgment unit 311 supplies the approach information management unit 521 with information for instructing update of the approach information along with the approaching individual identification information. The approach information management unit 521 acquires the face image data and characteristic amount data on the approaching individual from the collating unit 303.

If the approaching individual is a previously undetected individual, the approach information management unit 521 allocates the face image/characteristic amount No. to the face image data and characteristic amount data on the approaching individual, causes the face image recording unit 522 to record the face image data, and causes the characteristic amount recording unit 523 to record the characteristic amount data. The approach information management unit 521 further allocates the detected individual ID to the detected approaching individual. The approach information management unit 521 adds new approach information to the approach information table, and records the data No., camera No., detected individual ID, detection time, frequency within 10 seconds, and face image/characteristic amount No.

If the approaching individual is a previously detected individual, the approach information management unit 521 investigates whether the approach information related to the approaching individual is recorded or not within a last predetermined period of time (for example, 10 seconds), on the basis of the approach information table. It should be noted that the fact that the approach information related to the approaching individual has been recorded within the last predetermined period of time is expressed as a fact that the approach information related to the approaching individual is being recorded, and the fact that the approach information related to the approaching individual has not been recorded within the last predetermined period of time is expressed as a fact that the approach information related to the approaching individual is not being recorded. The approach information recorded within the last predetermined period of time is also referred to as "approach information in recording."

If the approach information of the approaching individual is not being recorded, the approach information management unit 521 allocates the face image/characteristic amount No. to the face image data and characteristic amount data on the approaching individual, causes the face image recording unit 522 to record the face image data, and causes the characteristic amount recording unit 523 to record the characteristic amount data. The approach information management unit 521 adds new approach information to the approach information table, and records the data No., camera No., detected individual ID, detection time, frequency within 10 seconds, and face image/characteristic amount No.

If the approach information of the approaching individual is being recorded, the approach information management unit 521 updates the frequency within 10 seconds of the approach information in recording. The approach information management unit 521 further allocates the face image/characteristic amount No. corresponding to the approach information in recording, to the face image data and characteristic amount data on the approaching individual, according to need, causes the face image recording unit 522 to record the face image data, and causes the characteristic amount recording unit 523 to record the characteristic amount data.

The approach information management unit 521 relates the face image data on the approaching individual with the detected individual ID, and cause the buffer 526 to record the related face image data on the approaching individual and the detected individual ID.

Instead of the face image data on the approaching individual, the monitor image data of before initiating the face image data may be recorded in the face image recording unit 522. Further, the both face image data and the monitor image data may be recorded in the face image recording unit 522.

In a step S54, the suspiciousness degree judgment unit 311 judges whether the approaching individual is a previously undetected individual or not, on the basis of the approaching individual identification information. If it is judged that the approaching individual is not a previously undetected individual, the processing proceeds to a step S55.

In the step S55, the suspiciousness degree judgment unit 311 judges whether or not the approaching individual has been judged as a suspicious individual in the past. Specifically, the suspiciousness degree judgment unit 311 acquires the approach information table from the approach information management unit 511. The suspiciousness degree judgment unit 311 investigates whether or not the previously detected individual indicated with the approaching individual ID has been judged as a suspicious individual in the past, on the basis of the approach information table. If the suspiciousness degree judgment unit 311 judges that the approaching individual has been judged as a suspicious individual in the past, on the basis of a result of the investigation, the processing proceeds to a step S56.

In the step S56, the child judgment unit 315 performs child judgment. Specifically, the suspiciousness degree judgment unit 311 supplies the child judgment unit 315 with information for instructing execution of the child judgment. The child judgment unit 315 acquires, via the approach information management unit 521, the monitor image data in which the approaching individual appears from the buffer 526, acquires face image data in which the approaching individual appears from the face image recording unit 522, and acquires the characteristic amount data on the approaching individual from the characteristic amount recording unit.

The child judgment unit 315 judges whether the approaching individual is a child or not, according to the position and size of the face, the height, and the characteristics of the face of the approaching individual in terms of age, on the basis of, for example, the monitor image data, face image data, and characteristic amount data. For example, by setting the image pickup apparatus 131 so that the face of an individual of a predetermined height or higher does not enter the field angle, the child judgment unit 315 estimates the height of the approaching individual on the basis of whether or not the face of the standing individual is detected from the data of the monitor image captured by this image pickup apparatus 131, and judges whether the approaching individual is a child or not.

The child judgment unit 315 supplies the information indicating a result of the judgment to the suspiciousness degree judgment unit 311.

In a step S57, the suspiciousness degree judgment unit 311 judges whether the approaching individual is a child or not, on the basis of the result of judgment generated by the child judgment unit 315. If it is judged that the approaching individual is not a child, the processing proceeds to a step S58.

In the step S58, the suspicious individual detection processing unit 305 performs suspiciousness degree computation processing. The detail of the suspiciousness degree computation processing is described hereinafter with reference to Fig. 26. Through this processing, the degree of suspiciousness of the approaching individual is computed.

In a step S59, the suspiciousness degree judgment unit 311 judges whether the approaching individual is a suspicious individual or not. If the degree of suspiciousness of the approaching individual is a predetermined threshold (for example, 10) or more, the suspiciousness degree judgment unit 311 judges that the approaching individual is a suspicious individual, and the processing proceeds to a step S60.

In the step S60, the suspiciousness degree judgment unit 311 reports that a suspicious individual is detected, and the suspiciousness degree judgment processing ends. Specifically, the suspiciousness degree judgment unit 311 supplies the coping operation instruction unit 401 and the approach information management unit 521 with information which includes the authorized individual ID or detected individual ID of the approaching individual, suspiciousness degree of the approaching individual, information indicating that the approaching individual is a suspicious individual, and the like. The approach information management unit 521 updates the suspicious individual judgment and the suspiciousness degree of the approach information of the approaching individual which is being recorded, on the basis of the approaching individual detection information.

If the approaching individual is judged as an unsuspicious individual in the step S59, in other words when the degree of suspiciousness of the approaching individual is less than the predetermined threshold, the processing proceeds to a step S61.

If the approaching individual is judged as a child in the step S57, the processing proceeds to the step S61.

Incidentally, since a child acts by a different standard than an adult, if the suspiciousness degree judgment is performed on the child by the same judgment standard for the adult, the suspicious individual is likely to be judged as a child. For example, when the target of monitoring is a vehicle, if a child plays in the vicinity of the parking lot, the face of the child is detected repeatedly by the monitoring system 11, and the child is judged as a suspicious individual. In order to avoid such trouble, a child is excluded from the targets of detection by performing the child judgment. In the case of including a child in the targets of detection, the processing operations of the step S57 and the step S58 may be omitted.

If the approaching individual is judged as a previously undetected individual in the step S54, the processing proceeds to the step S61.

In the step S61, the suspiciousness degree judgment unit 311 reports that an unsuspicious individual is detected, and the suspiciousness degree judgment processing ends. Specifically, the suspiciousness degree judgment unit 311 supplies the coping operation instruction unit 401 and the approach information management unit 521 with information which includes the authorized individual ID or detected individual ID of the approaching individual, suspiciousness degree of the approaching individual, information indicating that the approaching individual is an unsuspicious individual, and the like. The approach information management unit 521 updates the suspicious individual judgment and the suspiciousness degree of the approach information of the approaching individual which is being recorded, on the basis of the approaching individual detection information.

If the approaching individual is judged as an approach-authorized individual in the step S51, the processing proceeds to a step S62.

In the step S62, the suspiciousness degree computation processing is performed as in the processing of the step S58 described above.

In a step S63, it is judged whether the approaching individual is a suspicious individual or not, as in the processing of the step S59 described above. If the approaching individual is judged as an unsuspicious individual, the processing proceeds to a step S64. It should be noted that the threshold may be changed in the judgment processing of the step S59, i.e. the judgment processing for judging whether the approaching individual who is an unauthorized individual is a suspicious individual or not, and in the judgment processing of the step S63, i.e. the judgment processing for judging whether the approaching individual who is an approach-authorized individual is a suspicious individual or not.

In the step S64, the suspiciousness degree judgment unit 311 reports that an approach-authorized individual is detected, and the suspiciousness degree judgment processing ends. Specifically, the suspiciousness degree judgment unit 311 supplies the coping operation instruction unit 401 with the approaching individual detection information which includes the authorized individual ID of the approaching individual, and information indicating that the approaching individual is an approach-authorized individual.

If the approaching individual is judged as a suspicious individual in the step S63, the processing proceeds to a step S65.

In the step S65, the approach information management unit 521 updates the approach information. Specifically, the suspiciousness degree judgment unit 311 acquires the face image data and characteristic amount data of the approach-authorized individual, who is the approaching individual, from the face image recording unit 502 and characteristic amount recording unit 503 via the authorized individual information management unit 501. The suspiciousness degree judgment unit 311 supplies the face image data and characteristic amount data on the approaching individual to the approach information management unit 521.

The approach information management unit 521 allocates the face image/characteristic amount No. to the face image data and characteristic amount data on the approaching individual, causes the face image recording unit 522 to record the face image data, and causes the characteristic amount recording unit 523 to record the characteristic amount data. The approach information management unit 521 further allocates the detected individual ID to the detected approaching individual. The approach information management unit 521 adds new approach information to the approach information table, and records the data No., camera No., detected individual ID, detection time, frequency within 10 seconds, and face image/characteristic amount No.

The authorized individual information management unit 501 deletes the authorized individual information of the approach-authorized individual who is judged as a suspicious individual, from the authorized individual information table.

In a step S66, detection of a suspicious individual is reported by means of the same processing as the processing of the step S60 described above, and the suspiciousness degree judgment processing ends.

Next, the suspiciousness degree computation processing operations of the step S58 of Fig. 24 and the step S62 of Fig. 25 are described in detail with reference to the flowchart of Fig. 26.

In a step S81, the suspiciousness degree judgment unit 311 judges whether the approaching individual is an approach-authorized individual or not, on the basis of the approaching individual identification information. If it is judged that the approaching individual is not an approach-authorized individual, the processing proceeds to a step S82.

In the step S82, the suspiciousness degree judgment unit 311 instructs computation of the degree of suspiciousness of the approaching individual. Specifically, the suspiciousness degree judgment unit 311 supplies the approaching activity detecting unit 312 and the abnormal activity detecting unit 313 with the approaching individual identification information and information for instructing computation of the degree of suspiciousness of the approaching individual.

In a step S83, the approach frequency suspiciousness degree computation unit 321 performs approach frequency suspiciousness degree computation processing. The detail of the approach frequency suspiciousness degree computation processing is described hereinafter with reference to Fig. 27. Through this processing, the approach frequency suspiciousness degree of the approaching individual is computed, and data indicating the computed suspiciousness degree is supplied to the suspiciousness degree judgment unit 311.

In a step S84, the approach distance suspiciousness degree computation unit 322 performs approach distance suspiciousness degree computation processing. The detail of the approach distance suspiciousness degree computation processing is described hereinafter with reference to Fig. 28. Through this processing, the approach distance suspiciousness degree of the approaching individual is computed, and data indicating the computed suspiciousness degree is supplied to the suspiciousness degree judgment unit 311.

In a step 585, the meeting time suspiciousness degree computation unit 323 performs meeting time suspiciousness degree computation processing. The detail of the meeting time suspiciousness degree computation processing is described hereinafter with reference to Fig. 29. Through this processing, the meeting time suspiciousness degree of the approaching individual is computed, and data indicating the computed suspiciousness degree is supplied to the suspiciousness degree judgment unit 311.

In a step S86, the face direction suspiciousness degree computation unit 324 performs face direction suspiciousness degree computation processing. The detail of the face direction suspiciousness degree computation processing is described hereinafter with reference to Fig. 30. Through this processing, the face direction suspiciousness degree of the approaching individual is computed, and data indicating the computed suspiciousness degree is supplied to the suspiciousness degree judgment unit 311.

In a step S87, the sight line direction suspiciousness degree computation unit 325 performs sight line direction suspiciousness degree computation processing. The detail of the sight line direction suspiciousness degree computation processing is described hereinafter with reference to Fig. 31. Through this processing, the sight line direction suspiciousness degree of the approaching individual is computed, and data indicating the computed suspiciousness degree is supplied to the suspiciousness degree judgment unit 311.

In a step S88, the prowl suspiciousness degree computation unit 326 performs prowl suspiciousness degree computation processing. The detail of the prowl suspiciousness degree computation processing is described hereinafter with reference to Fig. 32. Through this processing, the prowl suspiciousness degree of the approaching individual is computed, and data indicating the computed suspiciousness degree is supplied to the suspiciousness degree judgment unit 311.

Thereafter, the processing proceeds to a step S90.

If the approaching individual is judged as an approach-authorized individual in the step S81, the processing proceeds to a step S89.

In the step S89, the suspiciousness degree judgment unit 311 instructs computation of the degree of suspiciousness of the approaching individual. Specifically, the suspiciousness degree judgment unit 311 supplies the abnormal activity detecting unit 313 with the approaching individual identification information and information for instructing computation of the degree of suspiciousness of the approaching individual.

In the step S90, the abnormal activity detecting unit 313 performs abnormal activity suspiciousness degree computation processing. The detail of the abnormal activity suspiciousness degree computation processing is described hereinafter with reference to Fig. 33. Through this processing, the abnormal activity suspiciousness degree of the approaching individual is computed, and data indicating the computed suspiciousness degree is supplied to the suspiciousness degree judgment unit 311.

In a step S91, the suspiciousness degree judgment unit 311 adds up the degrees of suspiciousness, and the suspiciousness degree computation processing ends. Specifically, the suspiciousness degree judgment unit 311 adds up the degrees of suspiciousness which are computed in the approaching activity detecting unit 312 and the abnormal activity detecting unit 313 respectively.

Next, the detail of the approach frequency suspiciousness degree computation processing of the step S83 in Fig. 26 is described with reference to the flowchart of Fig. 27.

In a step S101, the approach frequency suspiciousness degree computation unit 321 judges whether an approaching activity performed by an approaching individual has been detected within the last 24 hours. Specifically, the approach frequency suspiciousness degree computation unit 321 acquires the approach information table from the approach information management unit 521. The approach frequency suspiciousness degree computation unit 321 searches for approach information of the approaching individual from the approach information of the last 24 hours, excluding the approach information which is currently being recorded. If approach information of the approaching individual has been recorded within the last 24 hours, the approach frequency suspiciousness degree computation unit 321 judges that an approaching activity performed by approaching individual has been detected within the last 24 hours, and the processing proceeds to a step S102.

In the step S102, the approach frequency suspiciousness degree computation unit 321 judges whether the approaching activity performed by the approaching individual has been detected within the last 10 seconds. Specifically, the approach frequency suspiciousness degree computation unit 321 searches for the approach information of the approaching individual, which is currently being recorded, i.e. the approach information of the approaching individual, the recording of which is started within the last 10 seconds, from the approach information table. If the approach information of the approaching individual, which is currently being recorded, is detected, the approach frequency suspiciousness degree computation unit 321 judges that the approaching activity performed by the approaching individual has been detected within the last 10 seconds, and the processing proceeds to a step S103.

In the step S103, the approach frequency suspiciousness degree computation unit 321 judges whether the approaching activity performed by the approaching individual has been detected at least 10 times within the last 5 minutes. Specifically, the approach frequency suspiciousness degree computation unit 321 counts the number of approach information items of the approaching individual, which are recorded within the last 5 minutes. If the number of approach information items of the approaching individual, which are recorded within the last 5 minutes, is 10 or more, the approach frequency suspiciousness degree computation unit 321 judges that the approaching activity performed by the approaching individual has been detected at least 10 times within the last 5 minutes, and the processing proceeds to a step S104.

In the step S104, the approach frequency suspiciousness degree computation unit 321 judges that the degree of suspiciousness is 10, and the approach frequency suspiciousness degree computation processing ends. Specifically, the approach frequency suspiciousness degree computation unit 321 supplies the suspiciousness degree judgment unit 311 with data indicating that the degree of suspiciousness of the approaching individual is 10.

If it is judged in the step S103 that the approaching activity performed by the approaching individual has not been detected 10 times or more within the last 5 minutes, the processing proceeds to a step S105.

If it is judged in the step S102 that the approaching activity performed by the approaching individual has been detected within the last 10 seconds, the processing proceeds to the step S105.

In the step S105, the suspiciousness degree is judged as 1 by means of the same processing same as that of the step S104 described above, and the approach frequency suspiciousness degree computation processing ends.

If it is judged in the step S101 that the approaching activity performed by the approaching individual has not been detected within the last 24 hours, the processing proceeds to a step S106.

In the step S106, the suspiciousness degree is judged as 0 by means of the same processing same as that of the step S104 described above, and the approach frequency suspiciousness degree computation processing ends.

Through this processing, the degree of suspiciousness can be set on the basis of the frequency with which the approaching individual approaches the target of monitoring within a predetermined period of time. Therefore, a suspicious individual, who, for example, attempts a suspicious activity on a target of monitoring, or approaches the target of monitoring frequently during a short period of time in an attempt to make a preliminary inspection before performing the suspicious activity, can be detected more securely before any damage is incurred.

The judgment conditions and the value of the suspiciousness degree used for explaining this processing is an example, and are preferably set to appropriate conditions and value in accordance with the type of the target of monitoring and the surrounding environment. Further, the user can set the judgment conditions and the value of the suspiciousness degree. In addition, the value of the suspiciousness degree may be changed in accordance with the frequency of a detected approaching activity.

Next, the detail of the approach distance suspiciousness degree computation processing of the step S84 of Fig. 26 is described with reference to the flowchart of Fig. 28.

In a step S121, the face detecting unit 301 computes the approach distance of an approaching individual. Specifically, the approach distance suspiciousness degree computation unit 322 supplies the face detecting unit 301 with information for instructing computation of the approach distance of the approaching individual. The face detecting unit 301 computes the approach distance, which is the distance between the approaching individual and the target of monitoring, on the basis of the monitor image data in which the approaching individual appears. The face detecting unit 301 supplies the approach distance suspiciousness degree computation unit 322 with information indicating the approach distance of the approaching individual.

For example, the face detecting unit 301 computes the approach distance of the approaching individual on the basis of the proportion of the size of the face in the field angle. It should be noted that the size of the face of the approaching individual changes significantly by the approach distance by taking the lens 141 of the image pickup apparatus 131 as a wide angle lens, thus the approach distance can be computed more accurately. Moreover, if the image pickup apparatus 131 has an auto-focus function, the face detecting unit 301 acquires the distance between the approaching individual and the target of monitoring, which is measured by an unshown auto-focus control unit of the image pickup apparatus 131, from the image pickup apparatus 131, and this distance may be taken as the approach distance.

Instead of using the monitor image data, for example, a distance sensor or the like provided in the sensor unit 102 may be used to measure the approach distance.

In a step S122, the approach distance suspiciousness degree computation unit 322 judges whether the approach distance is at least 2 meters. If it is judged that the approach distance is less than 2 meters, the processing proceeds to a step S123.

In the step S123, the approach distance suspiciousness degree computation unit 322 judges whether the approach distance is at least 1 meter. If it is judged that the approach distance is less than 1 meter, the processing proceeds to a step S124.

In the step S124, the approach distance suspiciousness degree computation unit 322 judges whether the approach distance is at least 50 cm. If it is judged that the approach distance is less than 50 cm, the processing proceeds to a step S125.

In the step S125, the approach distance suspiciousness degree computation unit 322 judges whether the approach distance is at least 15 cm. If it is judged that the approach distance is less than 15 cm, the processing proceeds to a step S126.

In the step S126, the approach distance suspiciousness degree computation unit 322 judges that the suspiciousness degree is 5, and the approach distance suspiciousness degree computation processing ends. Specifically, the approach distance suspiciousness degree computation unit 322 supplies the suspiciousness degree judgment unit 311 with data indicating that the suspiciousness degree of the approaching individual is 5.

If it is judged in the step S125 that the approach distance is as at least 15 cm, the processing proceeds to a step S127.

In the step S127, it is judged that the suspiciousness degree is 3 by means of the same processing as the processing of the step 126 described above, and the approach distance suspiciousness degree computation processing ends.

If it is judged in the step S124 that the approach distance is at least 50 cm, the processing proceeds to a step S128.

In the step S128, it is judged that the suspiciousness degree is 2 by means of the same processing as the processing of the step 126 described above, and the approach distance suspiciousness degree computation processing ends.

If it is judged in the step S123 that the approach distance is at least 1 meter, the processing proceeds to a step S129.

In the step S129, it is judged that the suspiciousness degree is 1 by means of the same processing as the processing of the step 126 described above, and the approach distance suspiciousness degree computation processing ends.

If it is judged in the step S122 that the approach distance is at least 2 meters, the processing proceeds to a step S130.

In the step S130, it is judged that the suspiciousness degree is 0 by means of the same processing as the processing of the step 126 described above, and the approach distance suspiciousness degree computation processing ends.

Through this processing, the suspiciousness degree of the approaching individual can be set on the basis of the distance by which the approaching individual approaches the target of monitoring. Therefore, a suspicious individual, who, for example, attempts a suspicious activity on the target to be approached, or approaches the target of monitoring in an attempt to make a preliminary inspection before performing the suspicious activity, can be detected more securely before any damage is incurred.

It should be noted that the judgment conditions and the value of the suspiciousness degree used for explaining this processing is an example, and are preferably set to appropriate conditions and value in accordance with the type of the target of monitoring and the surrounding environment. Further, the user can set the judgment conditions and the value of the suspiciousness degree.

Next, the detail of the meeting time suspiciousness degree computation processing of the step S85 of Fig. 26 is described with reference to the flowchart of Fig. 29.

In a step S151, the meeting time suspiciousness degree computation unit, 323 judges whether an approaching activity performed by an approaching individual has been detected within the last 10 seconds, by means of the processing same as the processing of the step S102 of Fig. 27, which is performed by the approach frequency suspiciousness degree computation unit 321. If it is judged that the approaching activity performed by the approaching individual has been detected within the last 10 seconds, the processing proceeds to a step S152.

In the step S152, the meeting time suspiciousness degree computation unit 323 judges whether at least 30 seconds of the meeting time has elapsed. Specifically, if at least 30 seconds of the meeting time at which the measuring is started in a step S156, which is described hereinafter, has elapsed, the meeting time suspiciousness degree computation unit 323 judges that at least 30 seconds of the meeting time has elapsed, and the processing proceeds to a step S153. It should be noted that the meeting time is time in which a state, where the face of the approaching individual is detected at least once (for example, 10 seconds), lasts.

In the step S153, through the same processing as the processing of the step S152 described above, it is judged whether at least 2 minutes of the meeting time has elapsed. If it is judged that at least 2 minutes of the meeting time has elapsed, the processing proceeds to a step S154.

In the step S154, the meeting time suspiciousness degree computation unit 323 judges that the suspiciousness degree is 20, and the meeting time suspiciousness degree computation processing ends. Specifically, the meeting time suspiciousness degree computation unit 323 supplies the suspiciousness degree judgment unit 311 with data indicating that the suspiciousness degree of the approaching individual is 20.

If it is judged in the step S153 that the meeting time is less than 2 minutes, the processing proceeds to a step S155.

In the step S155, through the same processing as the processing of the step S154 described above, it is judged that the suspiciousness degree is 5, and the meeting time suspiciousness degree computation processing ends.

If it is judged in the step S152 that the meeting time is less than 30 seconds, the processing proceeds to a step S157.

If it is judged in the step S151 that the approaching activity performed by the approaching individual has been detected within the last 10 seconds, the processing proceeds to the step S156.

In the step S156, the meeting time suspiciousness degree computation unit 323 resets the meeting time timer. Specifically, the meeting time suspiciousness degree computation unit 323 returns the value of the meeting time timer for measuring the meeting time to 0 to restart the measuring the of the meeting time.

In the step S157, through the same processing as the processing of the step S154 described above, it is judged that the suspiciousness degree is 0, and the meeting time suspiciousness degree computation processing ends.

Through this processing, the suspiciousness degree of the approaching individual can be set on the basis of the period of time during which the face of the approaching individual is continuously detected. Therefore, a suspicious individual, who, for example, attempts a suspicious activity on a target to be approached, or remains in the vicinity of the target to be approached for a long period of time in an attempt to make a preliminary inspection before performing the suspicious activity, can be detected more securely before any damage is incurred.

It should be noted that the judgment conditions and the value of the suspiciousness degree used for explaining this processing is an example, and are preferably set to appropriate conditions and value in accordance with the type of the target of monitoring and the surrounding environment. Further, the user can set the judgment conditions and the value of the suspiciousness degree.

Next, the detail of the face direction suspiciousness degree computation processing of the step S85 in Fig. 26 is described with reference to the flowchart of Fig. 30.

In a step S171, the face direction suspiciousness degree computation unit 324 judges whether a face direction suspicious activity performed by an approaching individual has been detected within the last 10 seconds. Specifically, the face direction suspiciousness degree computation unit 324 acquires information indicating the face direction suspicious activity which has been performed by the approaching individual within the last 10 seconds, from the activity information recording unit 524 via the approach information management unit 521. If the face direction suspiciousness degree computation unit 324 cannot acquire the information indicating the face direction suspicious activity which has been performed by the approaching individual within the last 10 seconds, the face direction suspiciousness degree computation unit 324 judges that the face direction suspicious activity performed by the approaching individual has not been detected within the last 10 seconds, and the processing proceeds to a step S172.

In the step S172, the face direction suspiciousness degree computation unit 324 computes a period of time during which the face of the approaching individual is directed toward the target of monitoring within the last 10 seconds. Specifically, the face direction suspiciousness degree computation unit 324 acquires information indicating the face direction of the approaching individual within the last 10 seconds from the buffer 526 via the approach information management unit 521. The face direction suspiciousness degree computation unit 324 computes a period of time during which the face of the approaching individual is directed toward the target of monitoring within the last 10 seconds, on the basis of the acquired information.

In a step S173, the face direction suspiciousness degree computation unit 324 judges whether the rate at which the face of the approaching individual is directed toward the target of monitoring within the last 10 seconds is 50% or more, on the basis of a result of the processing of the step S172. If it is judged that the rate at which the face of the approaching individual is directed toward the target of monitoring within the last 10 seconds is 50% or more, the processing proceeds to a step S174.

In the step S174, the face direction suspiciousness degree computation unit 324 records the face direction suspicious activity performed by the approaching individual. Specifically, the face direction suspiciousness degree computation unit 324 supplies the approach information management unit 521 with information for instructing recording of the face direction suspicious activity performed by the approaching individual. The approach information management unit 521 adds information related to the face direction suspicious activity performed by the approaching individual, to the activity information corresponding to the approach information of the approaching individual, which is currently being recorded.

If it is judged in the step S173 that the rate at which the face of the approaching individual is directed toward the target of monitoring within the last 10 seconds is less than 50%, the processing of the step S174 is skipped, and the processing proceeds to a step S175.

If it is judged in the step S171 that the face direction suspicious activity performed by the approaching individual has been detected within the last 10 seconds, the processing operations from the step S172 through S174 are skipped, and the processing proceeds to the step S175.

In the step S175, the face direction suspiciousness degree computation unit 324 obtains the number of times of the face direction suspicious activity of the approaching individual which has been detected within the last 5 minutes. Specifically, the face direction suspiciousness degree computation unit 324 acquires information indicating the face direction suspicious activity of the approaching individual within the last 5 minutes, from the activity information recording unit 524 via the approach information management unit 521. The face direction suspiciousness degree computation unit 324 obtains the number of times of the face direction suspicious activity of the approaching individual which has been detected within the last 5 minutes, on the basis of the acquired information.

In a step S176, the face direction suspiciousness degree computation unit 324 judges whether the number of times of the face direction suspicious activity of the approaching individual, which has been detected within the last 5 minutes, is at least 10. If it is judged that the number of times of the face direction suspicious activity of the approaching individual, which has been detected within the last 5 minutes, is less than 10, the processing proceeds to a step S177.

In the step S177, the face direction suspiciousness degree computation unit 324 judges whether the number of times of the face direction suspicious activity of the approaching individual, which has been detected within the last 5 minutes, is at least 5. If it is judged that the number of times of the face direction suspicious activity of the approaching individual, which has been detected within the last 5 minutes, is at least 5, the processing proceeds to a step S178.

In the step S178, the face direction suspiciousness degree computation unit 324 judges that the suspiciousness degree is 5, and the face direction suspiciousness degree computation processing ends. Specifically, the face direction suspiciousness degree computation unit 324 supplies the suspiciousness degree judgment unit 311 with data indicating that the suspiciousness degree of the approaching individual is 5.

If it is judged in the step S177 that the number of times of the face direction suspicious activity of the approaching individual, which has been detected within the last 5 minutes, is less than 5, the processing proceeds to a step S179.

In the step S179, the suspiciousness degree is judged as 0 by means of the same processing as the processing of the step S178 described above, the face direction suspiciousness degree computation processing ends.

If it is judged in the step S176 that the number of times of the face direction suspicious activity of the approaching individual, which has been detected within the last 5 minutes, is at least 10, the processing proceeds to a step S180.

In the step S180, the suspiciousness degree is judged as 1 by means of the same processing as the processing of the step S178 described above, the face direction suspiciousness degree computation processing ends.

Through this processing, the suspiciousness degree of the approaching individual can be set on the basis of the number of times and the rate at which the approaching individual directs his face to the target of monitoring. Therefore, a suspicious individual, who, for example, attempts a suspicious activity the target to be approached, or frequently directs his face toward the target of monitoring in an attempt to make a preliminary inspection before performing the suspicious activity, can be detected more securely before any damage is incurred.

It should be noted that the judgment conditions and the value of the suspiciousness degree used for explaining this processing is an example, and are preferably set to appropriate conditions and value in accordance with the type of the target of monitoring and the surrounding environment. Further, the user can set the judgment conditions and the value of the suspiciousness degree.

Next, the detail of the sight line direction suspiciousness degree computation processing of the step S86 in Fig. 26 is described with reference to the flowchart of Fig. 31.

In a step S201, the sight line direction suspiciousness degree computation unit 325 judges whether a sight line direction suspicious activity performed by an approaching individual has been detected within the last 10 seconds. Specifically, the sight line direction suspiciousness degree computation unit 325 acquires information indicating the sight line direction suspicious activity which has been performed by the approaching individual within the last 10 seconds, from the activity information recording unit 524 via the approach information management unit 521. If the sight line direction suspiciousness degree computation unit 325 cannot acquire the information indicating the sight line direction suspicious activity which has been performed by the approaching individual within the last 10 seconds, the sight line direction suspiciousness degree computation unit 325 judges that the sight line direction suspicious activity performed by the approaching individual has not been detected within the last 10 seconds, and the processing proceeds to a step S202.

In the step S202, the sight line direction suspiciousness degree computation unit 325 computes a period of time during which the sight line of the approaching individual is directed toward the target of monitoring within the last 10 seconds. Specifically, the sight line direction suspiciousness degree computation unit 325 acquires information indicating the sight line direction of the approaching individual within the last 10 seconds from the buffer 526 via the approach information management unit 521. The sight line direction suspiciousness degree computation unit 325 computes a period of time during which the sight line of the approaching individual is directed toward the target of monitoring within the last 10 seconds, on the basis of the acquired information.

In a step S203, the sight line direction suspiciousness degree computation unit 325 judges whether the rate at which the sight line of the approaching individual is directed toward the target of monitoring within the last 10 seconds is 50% or more, on the basis of a result of the processing of the step S202. If it is judged that the rate at which the sight line of the approaching individual is directed toward the target of monitoring within the last 10 seconds is 50% or more, the processing proceeds to a step S204.

In the step S204, the sight line direction suspiciousness degree computation unit 325 records the sight line direction suspicious activity performed by the approaching individual. Specifically, the sight line direction suspiciousness degree computation unit 325 supplies the approach information management unit 521 with information for instructing recording of the sight line direction suspicious activity performed by the approaching individual. The approach information management unit 521 adds information related to the sight line direction suspicious activity performed by the approaching individual, to the activity information corresponding to the approach information of the approaching individual, which is currently being recorded.

If it is judged in the step S203 that the rate at which the sight line of the approaching individual is directed toward the target of monitoring within the last 10 seconds is less than 50%, the processing of the step S204 is skipped, and the processing proceeds to a step S205.

If it is judged in the step S201 that the sight line direction suspicious activity performed by the approaching individual has been detected within the last 10 seconds, the processing operations from the step S202 through S204 are skipped, and the processing proceeds to the step S205.

In the step S205, the sight line direction suspiciousness degree computation unit 325 obtains the number of times of the sight line direction suspicious activity of the approaching individual which has been detected within the last 5 minutes. Specifically, the sight line direction suspiciousness degree computation unit 325 acquires information indicating the sight line direction suspicious activity of the approaching individual within the last 5 minutes, from the activity information recording unit 524 via the approach information management unit 521. The sight line direction suspiciousness degree computation unit 325 obtains the number of times of the sight line direction suspicious activity of the approaching individual which has been detected within the last 5 minutes, on the basis of the acquired information.

In a step S206, the sight line direction suspiciousness degree computation unit 325 judges whether the number of times of the sight line direction suspicious activity of the approaching individual, which has been detected within the last 5 minutes, is at least 10. If it is judged that the number of times of the sight line direction suspicious activity of the approaching individual, which has been detected within the last 5 minutes, is less than 10, the processing proceeds to a step S207.

In the step S207, the sight line direction suspiciousness degree computation unit 325 judges whether the number of times of the sight line direction suspicious activity of the approaching individual, which has been detected within the last 5 minutes, is at least 5. If it is judged that the number of times of the sight line direction suspicious activity of the approaching individual, which has been detected within the last 5 minutes, is at least 5, the processing proceeds to a step S208.

In the step S208, the sight line direction suspiciousness degree computation unit 325 judges that the suspiciousness degree is 5, and the sight line direction suspiciousness degree computation processing ends. Specifically, the sight line direction suspiciousness degree computation unit 325 supplies the suspiciousness degree judgment unit 311 with data indicating that the suspiciousness degree of the approaching individual is 5.

If it is judged in the step S207 that the number of times of the sight line direction suspicious activity of the approaching individual, which has been detected within the last 5 minutes, is less than 5, the processing proceeds to a step S209.

In the step S209, the suspiciousness degree is judged as 0 by means of the same processing as the processing of the step S208 described above, the sight line direction suspiciousness degree computation processing ends.

If it is judged in the step S206 that the number of times of the sight line direction suspicious activity of the approaching individual, which has been detected within the last 5 minutes, is at least 10, the processing proceeds to a step S210.

In the step S210, the suspiciousness degree is judged as 1 by means of the same processing as the processing of the step S208 described above, the sight line direction suspiciousness degree computation processing ends.

Through this processing, the suspiciousness degree of the approaching individual can be set on the basis of the number of times and the rate at which the approaching individual directs his face to the target of monitoring. Therefore, a suspicious individual, who, for example, attempts a suspicious activity the target to be approached, or frequently directs his sight line toward the target of monitoring in an attempt to make a preliminary inspection before performing the suspicious activity, can be detected more securely before any damage is incurred.

It should be noted that the judgment conditions and the value of the suspiciousness degree used for explaining this processing is an example, and are preferably set to appropriate conditions and value in accordance with the type of the target of monitoring and the surrounding environment. Further, the user can set the judgment conditions and the value of the suspiciousness degree.

Next, the detail of prowl suspiciousness degree computation processing of the step S88 in Fig 26 is described with reference to the flowchart of Fig. 32.

In a step S231, the prowl suspiciousness degree computation unit 326 computes the angle in which an approaching individual has moved around the target of monitoring within the last one minute. Specifically, the prowl suspiciousness degree computation unit 326 acquires the monitor image data in which the approaching individual appears within the last one minute, and information indicating the camera No. of the image pickup apparatus 131 which has imaged the approaching individual, from the buffer 526 via the approach information management unit 521. The prowl suspiciousness degree computation unit 326 computes the angle in which an approaching individual has moved around the target of monitoring, on the basis of, for example, transition of the image pickup apparatus 131 which has imaged the approaching individual. For example, when the target of monitoring is a vehicle, four image pickup apparatus 131 are set so that four directions, i.e. front, back, right, and left, can be imaged from the inside of the vehicle, and the prowl suspiciousness degree computation unit 326 computes the angle in which an approaching individual has moved around the vehicle, on the basis of transition of the image pickup apparatus 131 which has imaged the approaching individual.

It should be noted that the prowl suspiciousness degree computation unit 326 may, for example, detect the position of the approaching individual in the monitor image data in which the approaching individual appears, and compute the angle in which an approaching individual has moved around the target of monitoring, on the basis of transition of the position.

In a step S232, the prowl suspiciousness degree computation unit 326 judges whether the angle in which the approaching individual has moved around the target of monitoring within the last one minute is 180 degrees or more, on the basis of a result of the processing of the step S231. If it is judged that the angle
in which the approaching individual has moved around the target of monitoring within the last one minute is 180 degrees or more, the processing proceeds to a step S233.

In the step S233, it is judged whether the angle in which the approaching individual has moved around the target of monitoring within the last one minute is 270 degrees or more, by means of the same processing as the processing of the step S232. If it is judged that the angle in which the approaching individual has moved around the target of monitoring within the last one minute is 270 degrees or more, the processing proceeds to the step S233.

In a step S234, the prowl suspiciousness degree computation unit 326 computes the angle in which the approaching individual has moved around the target of monitoring within the last 10 minutes, by means of the same processing as the processing of the step S231.

In a step S235, it is judged whether the angle in which the approaching individual has moved around the target of monitoring within the last 10 minutes is 360 degrees or more, by means of the same processing as the processing of the step S232. If it is judged that the angle in which the approaching individual has moved around the target of monitoring within the last 10 minutes is 360 degrees or more, the processing proceeds to a step S236.

In the step S236, it is judged whether the angle in which the approaching individual has moved around the target of monitoring within the last 10 minutes is 720 degrees or more, by means of the same processing as the processing of the step S232. If it is judged that the angle in which the approaching individual has moved around the target of monitoring within the last 10 minutes is 720 degrees or more, the processing proceeds to a step S237.

In the step S237, the prowl suspiciousness degree computation unit 326 judges that the suspiciousness degree is 20, and the prowl suspiciousness degree computation processing ends. Specifically, the prowl suspiciousness degree computation unit 326 supplies the suspiciousness degree judgment unit 311 with data indicating that the suspiciousness degree of the approaching individual is 20.

If it is judged in the step S236 that the angle in which the approaching individual has moved around the target of monitoring within the last 10 minutes is less than 720 degrees, the processing proceeds to a step S238.

In the step S238, the suspiciousness degree is judged as 15 by means of the same processing as the processing of the step S237 described above, and the prowl suspiciousness degree computation processing ends.

If it is judged in the step S235 that the angle in which the approaching individual has moved around the target of monitoring within the last 10 minutes is less than 360 degrees, the processing proceeds to a step S239.

In the step S239, the suspiciousness degree is judged as 10 by means of the same processing as the processing of the step S237 described above, and the prowl suspiciousness degree computation processing ends.

If it is judged in the step S233 that the angle in which the approaching individual has moved around the target of monitoring within the last one minute is less than 270 degrees, the processing proceeds to a step S240.

In the step S240, the suspiciousness degree is judged as 5 by means of the same processing as the processing of the step S237 described above, and the prowl suspiciousness degree computation processing ends.

If it is judged in the step S232 that the angle in which the approaching individual has moved around the target of monitoring within the last one minute is less than 180 degrees, the processing proceeds to a step S241.

In the step S241, the suspiciousness degree is judged as 0 by means of the same processing as the processing of the step S237 described above, and the prowl suspiciousness degree computation processing ends.

Through this processing, the suspiciousness degree of the approaching individual can be set on the basis of the angle in which the approaching individual has moved around the target of monitoring. Therefore, a suspicious individual, who, for example, attempts a suspicious activity the target to be approached, or prowls around the target of monitoring in an attempt to make a preliminary inspection before performing the suspicious activity, can be detected more securely before any damage is incurred.

It should be noted that the judgment conditions and the value of the suspiciousness degree used for explaining this processing is an example, and are preferably set to appropriate conditions and value in accordance with the type of the target of monitoring and the surrounding environment. Further, the user can set the judgment conditions and the value of the suspiciousness degree.

Next, the detail of the abnormal activity suspiciousness degree computation process of the step S90 in Fig. 26 is described with reference to the flowchart of Fig. 33.

In a step S261, the body movement suspiciousness degree computation unit 331 computes the body movement suspiciousness degree on the basis of the monitor image data and peripheral information. Specifically, the body movement suspiciousness degree computation unit 331 acquires the monitor image data and peripheral information from the buffer 526 via the approach information management unit 521.

For example, when the target of monitoring is a vehicle, the body movement suspiciousness degree computation unit 331 judges that the suspiciousness degree is 20 when detecting a suspicious body movement of an approaching individual, such as putting a hand, arm, object or the like into a lower part of the vehicle, stretching his arm to the vehicle (for example, stretching his arm to a door handle of the vehicle), and standing near a window of the vehicle and holding some sort of an object above his head.

Moreover, for example, the body movement suspiciousness degree computation unit 331 sets the suspiciousness degree when the position of the face of the approaching individual is detected in a position higher than or lower than the height of an ordinary individual, when the face is tilted at least a predetermined angle (for example 90 degrees), when the direction of the face is upside down, when the approaching individual crouches to be lower than his ordinary stance (for example, a crawling stance), or when the face of the approaching individual repeatedly moves in a vertical direction significantly (for example, four times longer than the length of the face) at least a predetermined number of times (for example, 20 times) within a predetermined period of time (for example, for three minutes), in accordance of the frequency of such activities or duration time.

Further, the body movement suspiciousness degree computation unit 331 judges that the suspiciousness degree is 20 when, for example, detecting that the approaching individual flashes a light on the target of monitoring for a predetermined period of time (for example, for 10 seconds), on the basis of the monitor image data.

The body movement suspiciousness degree computation unit 331 supplies the data indicating the computed suspiciousness degree to the suspiciousness degree judgment unit 311. When detecting a suspicious body movement of the approaching individual, the body movement suspiciousness degree computation unit 331 further supplies the approach information management unit 521 with information for instructing the detail of the suspicious body movement. The approach information management unit 521 adds information related to the suspicious body movement of the approaching individual, to the activity information corresponding to the approach information of the approaching individual, which is currently being recorded.

In a step S262, the specific section suspiciousness degree computation unit 332 computes the specific section suspicious activity suspiciousness degree. Specifically, the specific section suspiciousness degree computation unit 332 acquires the peripheral information from the buffer 526 via the approach information management unit 521. The specific section suspiciousness degree computation unit 332 detects a suspicious activity performed by the approaching activity on a specific section of the target of monitoring, on the basis of the peripheral information.

For example, when the specific section suspiciousness degree computation unit 332 detects that the approaching individual unnaturally approaches a specific section of the target of monitoring, on the basis of the sensor data acquired from the distance sensor installed in the specific section of the target of monitoring, if the target of monitoring is a vehicle, the distance sensor is installed in a door, trunk, and the vicinity of a window. When it is detected that a part of the body of the approaching individual has approached the door, trunk, or window more than a predetermined distance (for example, 10 cm), the suspiciousness degree is judged as 10. Accordingly, the suspiciousness degree of the approaching individual can be set high, the approaching individual attempting to touch a door handle, perform lock-picking, insert a wire, specialized tool or the like into the window frame to release the lock, break the door open by means of a bar or the like, damage the painting of the vehicle by means of a coin, tool or the like, and remove the key cylinder of the trunk.

The specific section suspiciousness degree computation unit 332 supplies the suspiciousness degree judgment unit 311 with data indicating the computed suspiciousness degree. Further, when a suspicious activity performed by the approaching individual on a specific section of the target of monitoring is detected, the specific section suspiciousness degree computation unit 332 supplies the approach information management unit 521 with information for instructing recording of the suspicious activity. The approach information management unit 521 adds information related to the suspicious activity performed by the approaching individual on the specific section of the target of monitoring, to the activity information corresponding to the approach information of the approaching individual, which is currently being recorded.

In a step S263, the continuous activity suspiciousness degree computation unit 333 computes the continuous activity suspiciousness degree. Specifically, the continuous activity suspiciousness degree computation unit 333 acquires the monitor image data and peripheral information from the buffer 526 via the approach information management unit 521. The continuous activity suspiciousness degree computation unit 333 detects a series of continuous activities performed by an approaching individual, on the basis of the monitor image data and peripheral information. When the detected series of continuous activities are registered in the sequence table, the continuous activity suspiciousness degree computation unit 333 judges the suspiciousness degree which is set for the continuous activities as the suspiciousness degree of the approaching individual.

The continuous activity suspiciousness degree computation unit 333 supplies the suspiciousness degree judgment unit 311 with data indicating the computed suspiciousness degree. Further, when a suspicious continuous activity performed by the approaching individual is detected, the continuous activity suspiciousness degree computation unit 333 supplies the approach information management unit 521 with information for instructing recording of the continuous activity. The approach information management unit 521 adds information related to the suspicious continuous activity performed by the approaching individual, to the activity information corresponding to the approach information of the approaching individual, which is currently being recorded.

In a step S264, the target-of-monitoring suspiciousness degree computation unit 334 computes the target-of-monitoring suspiciousness degree. Specifically, the target-of-monitoring suspiciousness degree computation unit 334 acquires the monitor image data and peripheral information from the buffer 526 via the approach information management unit 521. If abnormality in the target of monitoring is detected, the target-of-monitoring suspiciousness degree computation unit 334 computes the target-of-monitoring suspiciousness degree in accordance the detected abnormality on the basis of the monitor image data and peripheral information.

For example, the target-of-monitoring suspiciousness degree computation unit 334 judges that the suspiciousness degree is 30 when the inclination of the vehicle is at least a predetermined value on the basis of the sensor data acquired from the acceleration sensor installed in the vehicle. Further, for example, the target-of-monitoring suspiciousness degree computation unit 334 judges that the suspiciousness degree is 30 when the air pressure of a tire is a predetermined value or less, on the basis of the sensor data acquired from pressure sensor installed in the tire of the vehicle.

The target-of-monitoring suspiciousness degree computation unit 334 supplies the suspiciousness degree judgment unit 311 with data indicating the computed suspiciousness degree.

In a step S265, the approach limitation suspiciousness degree computation unit 335 computes the approach limitation suspiciousness degree, and the abnormal activity suspiciousness degree computation processing ends. Specifically, the approach limitation suspiciousness degree computation unit 335 acquires the peripheral information from the buffer 526 via the approach information management unit 521. The approach limitation suspiciousness degree computation unit 335 computes the approach limitation suspiciousness degree on the basis of the approach limitation information contained in the peripheral information. For example, when the approach limitation mean is a gate or door, and when the approach limitation suspiciousness degree computation unit 335 detects that the approaching individual has passed the approach limitation means, the suspiciousness degree is judged as 5. For example, when the approach limitation mean is an alarm device, and when the approach limitation suspiciousness degree computation unit 335 detects that the alarm device operates continuously for 20 seconds, the suspiciousness degree is judged as 20.

The approach limitation suspiciousness degree computation unit 335 supplies the suspiciousness degree judgment unit 311 with data indicating the computed suspiciousness degree.

Next, the detail of the suspicious individual corresponding processing of the step S16 in Fig. 20 is described with reference to the flowchart of Fig. 34.

In a step S301, the communication unit 403 reports that a suspicious individual is detected. Specifically, the coping operation instruction unit 401 supplies the communication unit 403 with information for instructing reporting of the suspicious individual. The communication unit 403 acquires information on the detected suspicious individual from the approach information management unit 521. The communication unit 403 transmits information for reporting the detection of the suspicious individual to the center system 12 or terminal device 13 via the network 14.

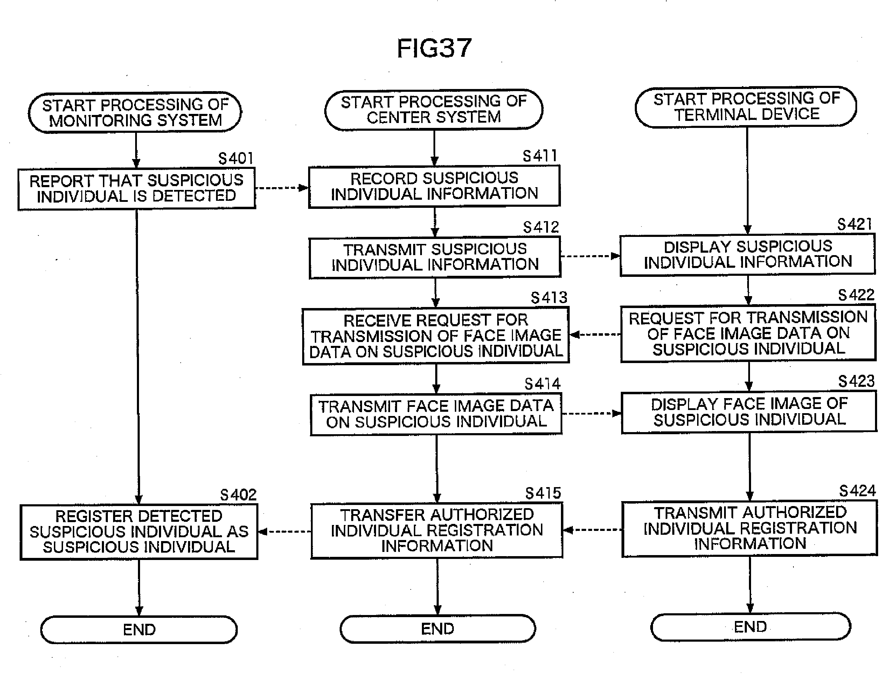

It should be noted that the example of the processing of the center system 12 and of the terminal device 13 which are notified of the detection of the suspicious individual is described hereinafter with reference to Fig. 37 through Fig. 39.

In a step S302, the coping operation instruction unit 401 judges whether the suspiciousness degree of the approaching individual indicates a caution level. The coping operation instruction unit 401 judges that the suspiciousness degree is on the caution level when the suspiciousness degree of the approaching individual is in the range of a predetermined caution level, and the processing proceeds to a step S303.

In the step S303, the coping operation unit 113 performs operation of cautioning. Specifically, the coping operation instruction unit 401 supplies the cautioning/warning/intimidating unit 402 with information indicating the operation of cautioning. For example, when the target of monitoring is a vehicle, the cautioning/warning/intimidating unit 402 emits LED which is set in a noticeable position on the vehicle, thereby cautioning the approaching individual to leave the target of monitoring, and allowing surrounding people other than the approaching individual to pay attention to the target of monitoring and the approaching individual. Moreover, the cautioning/warning/intimidating unit 402 emits LEDs which are arranged in a two dimension, thereby displaying a message for cautioning the approaching individual, such as "this vehicle is being monitored." Furthermore, for example, when the target of monitoring is set in a position where an ordinary passerby does not approach, the cautioning/warning/intimidating unit 402 outputs, by sound, a message for cautioning the approaching individual, such as "an ordinary people are requested not to pass this space. Please stay away from this place." Thereafter, the processing proceeds to a step S308.

If it is judged in the step S302 that the suspiciousness degree is not on the caution level, in other words when the suspiciousness degree is outside the range of the caution level, the processing proceeds a step S304.

In the step S304, the coping operation instruction unit 401 judges whether the suspiciousness degree of the approaching individual indicates a warning level. The coping operation instruction unit 401 judges that the suspiciousness degree is on the warning level when the suspiciousness degree of the approaching individual is in the range of a predetermined warning level, and the processing proceeds to a step S305.

In the step S305, the coping operation unit 113 performs operation of warning. Specifically, the coping operation instruction unit 401 supplies the cautioning/warning/intimidating unit 402 with information indicating the operation of warning. For example, the cautioning/warning/intimidating unit 402 increases the luminance of the LED, shortens the cycle of the illumination, displays a message with a strong expression, such as "this vehicle is being monitored. Unregistered individual is requested to leave," thereby warning the approaching individual to leave the target of monitoring in a strong expression or operation, compared to the case in which the suspiciousness degree is on the caution level. Thereafter, the processing proceeds to a step S308.

If it is judged in the step S304 that the suspiciousness degree is not on the warning level, in other words when the suspiciousness degree is outside the range of the warning level, the processing proceeds a step S306.

In the step S306, the coping operation instruction unit 401 judges whether the suspiciousness degree of the approaching individual indicates an intimidating level. The coping operation instruction unit 401 judges that the suspiciousness degree is on the intimidating level when the suspiciousness degree of the approaching individual is in the range of a predetermined intimidating level, and the processing proceeds to a step S307.

In the step S307, the coping operation unit 113 performs operation of intimidating. Specifically, the coping operation instruction unit 401 supplies the cautioning/warning/intimidating unit 402 with information indicating the operation of intimidating. For example, the cautioning/warning/intimidating unit 402, for example, sounds an alarm at full blast, displays a message or outputs sound indicative of reporting, emits intense light onto the approaching individual, thereby intimidating the approaching individual to leave the target of monitoring. Furthermore, for example, the display unit 405, which is set in a position which can be seen by the approaching individual, is caused to display an image of the approaching individual under control of the coping operation instruction unit 401, whereby the approaching individual is intimidated. Thereafter, the processing proceeds to a step S308.

If it is judged in the step S306 that the suspiciousness degree is not on the intimidating level, in other words when the suspiciousness degree is outside the range of the intimidating level, the processing of the step S307 is skipped, and the processing proceeds to the step S308.

In the step S308, the coping operation instruction unit 401 judges whether to perform protection operation on an approaching individual. Specifically, the coping operation instruction unit 401 judges whether to perform the protection operation, on the basis of the suspiciousness degree of the approaching individual, settings of the monitoring systems 11, and the like. If it is judged to perform the protection operation, the processing proceeds to a step S309.

In the step S309, the coping operation unit 113 performs the protection operation on the approaching individual. For example, the coping operation unit 113 controls operation of the target of monitoring so as to protect the target of monitoring from the approaching individual. Specifically, the coping operation instruction unit 401 supplies the target-of-monitoring control unit 404 with information for instructing control of the operation of the target of monitoring. The target-of-monitoring control unit 404 outputs a control signal for controlling the operation of the target of monitoring to the target of monitoring, and controls the operation of the target of monitoring.

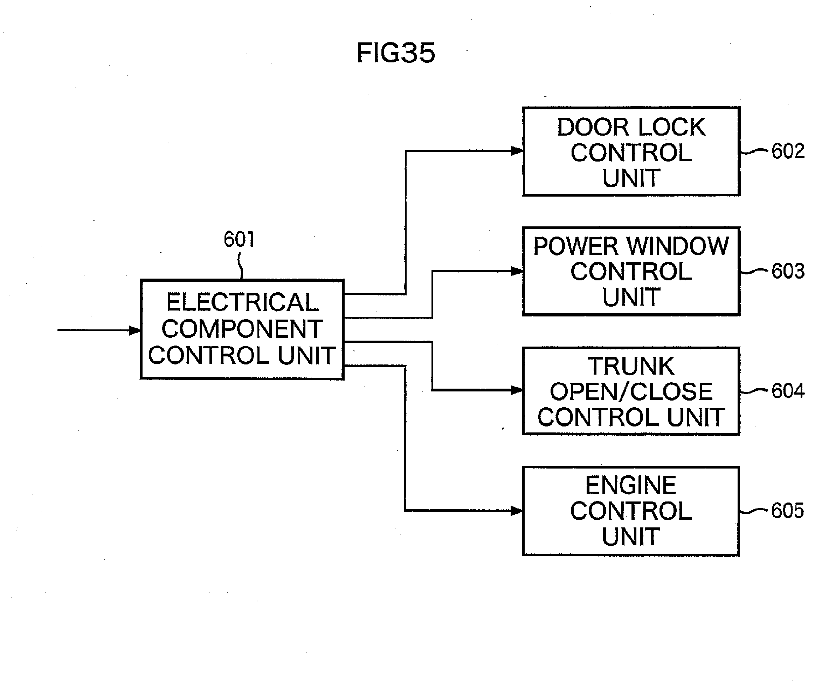

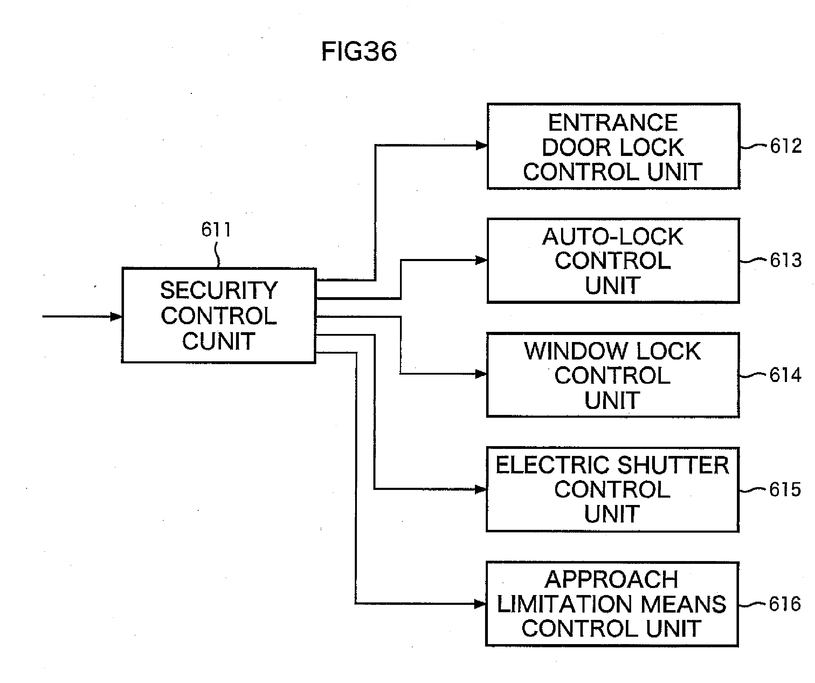

Here, an example of the protection operation performed by controlling the operation of the target of monitoring is explained with reference to Fig. 35 and Fig. 36.

Fig. 35 is a block diagram showing a part of a configuration example of a function of the control unit in a vehicle which is a target of monitoring. In the example shown in Fig. 35, the vehicle as the target of monitoring has an electrical component control unit 601, door lock control unit 602, power window control unit 603, trunk open/close control unit 604, engine control unit 605.

For example, the target-of-monitoring control unit 404 outputs a control signal to the electrical component control unit 601 in the vehicle which is the target of monitoring. The door lock control unit 602 locks the doors of the vehicle under control of the electrical component control unit 601. The power window control unit 603 closes the windows of the vehicle under control of the electrical component control unit 601. The trunk open/close control unit 604 locks the trunk of the vehicle under control of the electrical component control unit 601. The engine control unit 605 stops the engine of the vehicle and also disables the engine from starting under control of the electrical component control unit 601. Accordingly, the vehicle as the target of monitoring can be protected from being stolen, intruded, or damaged by an approaching individual.

Fig. 36 is a block diagram showing a part of a configuration example of a function of the control unit in a security device in a house which is a target of monitoring. In the example shown in Fig. 36, the security device in the house which is the target of monitoring has a security control unit 611, entrance door lock control unit 612, auto-lock control unit 613, window lock control unit 614, electric shutter control unit 615, and approach limitation means control unit 616.

For example, the target-of-monitoring control unit 404 outputs a control signal to the security control unit 611 of the security device in the house which is the target of monitoring. The entrance door lock control unit 612 locks the door of the entrance of the house under control of the security control unit 611. The auto-lock control unit 613 locks, for example, an entrance on the first floor or an apartment building under control of the security control unit 611. The window lock control unit 614 closes the windows of the house and locks the windows under control of the security control unit 611. The electric shutter control unit 615 closes the window of the house or an electric shutter, which is installed in a garage, under control of the security control unit 611. The approach limitation means control unit 616 closes a gate or door, which is the approach limitation means control unit 616, and disables the gate or door from being opened, under control of the security control unit 611. Accordingly, the house as the target of monitoring is protected from being intruded or damaged by an approaching individual.

For example, as the protection operation against the approaching individual, operation of the each part of the monitoring systems 11 may be prepared for starting, while the suspiciousness degree of the approaching individual is low, so as to promptly respond to the case in which the suspiciousness degree is increased.

For example, the coping operation instruction unit 401 supplies, via the communication unit 403, the communication unit 114 with information for instructing establishment of a connection with the network 14. The communication unit 114 establishes connection with the network 14 by means of a predetermined protocol. Accordingly, in the case in which the suspiciousness degree of the approaching individual is increased, a report can be sent promptly to the center system 12 or terminal device 13.

If it is judged in the step S308 that the protection operation is not performed, the processing of the step S309 is skipped, and the processing proceeds to a step S310.

In the step S310, the coping operation instruction unit 401 judges whether to register a detected approaching individual as an authorized individual. Specifically, the user of the monitoring system 11 uses, for example, the terminal device 13 to input a command for registering the detected approaching individual as a usage-authorized individual or approach-authorized individual. When the coping operation instruction unit 401 acquires the command via the network 14 and communication unit 114, the coping operation instruction unit 401 judges that the detected approaching individual is registered as an authorized individual, and the processing proceeds to a step S311.

In the step S311, the authorized individual registration unit 406 registers the detected approaching individual as an authorized individual, and the suspicious individual corresponding processing ends. Specifically, the coping operation instruction unit 401 supplies the authorized individual registration unit 406 with a command for registering the approaching individual as a usage-authorized individual or approach-authorized individual, the command being input by the user. The authorized individual registration unit 406 acquires the face image data and characteristic amount data on the approaching individual via the approach information management unit 521. The authorized individual registration unit 406 supplies the authorized individual information management unit 501 with the acquired image data and characteristic amount data on the approaching individual. If registration of usage information or personal information is instructed by the user, the authorized individual information registration unit 406 supplies the authorized individual information management unit 501 with the usage information or personal information which is input by the user.

The authorized individual information management unit 501 allocates the face image No. to the face image data on the approaching individual, and causes the face image recording unit 502 to record the face image data. The authorized individual information management unit 501 further allocates the characteristic amount No. to the characteristic amount data on the approaching individual, and causes the characteristic amount recording unit 503 to record the characteristic amount data. The authorized individual information management unit 501 further allocates the usage information No. to the usage information of the approaching individual, and causes the usage information recording unit 504 to record the usage information. The authorized individual information management unit 501 further allocates the personal information No. to the personal information of the approaching individual, and causes the personal information recording unit 505 to record the personal information.

Moreover, the authorized individual information management unit 501 allocates the authorized individual ID to the approaching individual who is registered as the usage-authorized individual or approach-authorized individual. The authorized individual information management unit 501 further adds new authorized individual information to the authorized individual information table, and records the authorized individual ID, registration category, the characteristic amount No., face image No., usage information No., and personal information No.

The approach information management unit 521 deletes the approach information of the approaching individual who is registered as the usage-authorized individual or approach-authorized individual, from the approach information table.

An example of the processing of the center system 12 and of the terminal device 13 when registering the approaching individual as an authorized individual is described with reference to Fig. 37.

If it is judged in the step S310 that the detected approaching individual is not registered as an authorized individual, in other words when a command for registering the detected approaching individual as a usage-authorized individual or approach-authorized individual is not input, the processing proceeds to a step S312.

In the step S312, the approach information management unit 521 updates the approach information, and the suspicious individual corresponding processing ends. Specifically, the coping operation instruction unit 401 supplies the approach information management unit 521 with information indicating the corresponding operation performed on the approaching individual. The approach information management unit 521 update data of the corresponding operation of the approach information of the approaching individual, which is being recorded.

Next, with reference to Fig. 37, there is described an example of a flow of the processing inside the network monitoring system 1 in the case where a suspicious individual id detected by the monitoring system 11 and where the suspicious individual is registered as an authorized individual in the monitoring system 11.

First, the processing executed by the monitoring system 11 is described.

In a step S401, the monitoring system 11 reports that a suspicious individual is detected, by means of the same processing as the processing of the step S301 in Fig. 34 described above. Accordingly, the information for reporting the detection of the suspicious individual is transmitted from the monitoring system 11 to the center system 12 via the network 14.

In a step S411 which is described hereinafter, the center system 12 records the information on the suspicious individual who is detected by the monitoring system 11. In a step S415 which is described hereinafter, the center system 12 transfers to the monitoring system 11 information for instructing registration of the suspicious individual as an authorized individual (referred to as "authorized individual registration instruction information" hereinafter), the information being transmitted from the terminal device 13.

In a step S402, the monitoring system 11 registers the detected suspicious individual as an authorized individual, by means of the same processing as the processing of the step S312 in Fig. 34 described above, and the processing ends.

Next, the processing executed by the center system 12 is described.

In the step S411, the center system 12 records the information on the suspicious individual. Specifically, in the step S401, the center system 12 receives information for reporting detection of the suspicious individual via the network 14, the information being transmitted from the monitoring system 11. The center system 12 records the information on the suspicious individual detected by the monitoring system 11, on the basis of the received information.

In a step S412, the center system 12 transmits suspicious individual information. Specifically, the center system 12 creates suspicious individual information to transmit to the terminal device 13, on the basis of the recorded information which has been received from the monitoring system 11 in the past. The center system 12 transmits the created suspicious individual information to the terminal device 13 of the user of the monitoring system 11 via the network 14.

In a step S421 which is described hereinafter, the terminal device 13 receives the suspicious individual information transmitted from the center system 12, and causes the display of the terminal device 13 to display the received suspicious individual information. The user looks at the suspicious individual information displayed on the terminal device 13, and inputs a command for displaying the face image of the suspicious individual. In a step S422 which is described hereinafter, the terminal deice 13 transmits to the center system 12 information for requesting transmission of the face image data on the suspicious individual.

In a step S413, the center system 12 receives a request for transmitting the face image data on the suspicious individual. Specifically, the center system 12 receives information for requesting transmission of the face image data on the suspicious individual, from the terminal device 13 via the network 14.

In a step S414, the center system 12 transmits the face image data on the suspicious individual. Specifically, the center system 12 reads the face image data on the suspicious individual, which is requested by the terminal device 13, and transmits the read face image data on the suspicious individual to the terminal device 13 via the network 14.

In a step S423 which is described hereinafter, the terminal device 13 receives the face image data on the suspicious individual, and displays the face image of the suspicious individual on the display. Then, for example, the user looks at the face image of the suspicious individual, and recognizes that the suspicious individual detected by the monitoring system 11 is an acquaintance of the user, who is not registered in the authorized individual information table. The user inputs, to the terminal device 13, a command for registering the suspicious individual detected by the monitoring system 11 as an authorized individual. In a step S424 which is described hereinafter, the terminal device 13 transmits to the center system 12 the authorized individual registration instruction information based on the input command.

In a step S415, the center system 12 transfers the authorized individual registration instruction information, and the processing ends. Specifically, the center system 12 receives the authorized individual registration instruction information from the terminal device 13 via the network 14. The center system 12 transmits to the monitoring device 11 the received authorized individual registration instruction information, via the network 14.

Next, the processing executed by the terminal device 13 is described.

In the step S421, the terminal device displays the suspicious individual information. Specifically, in the step S412, the terminal device 13 receives the suspicious individual information, which is transmitted from the center system 12, via the network 14. The terminal device 13 displays the received suspicious individual on the display.

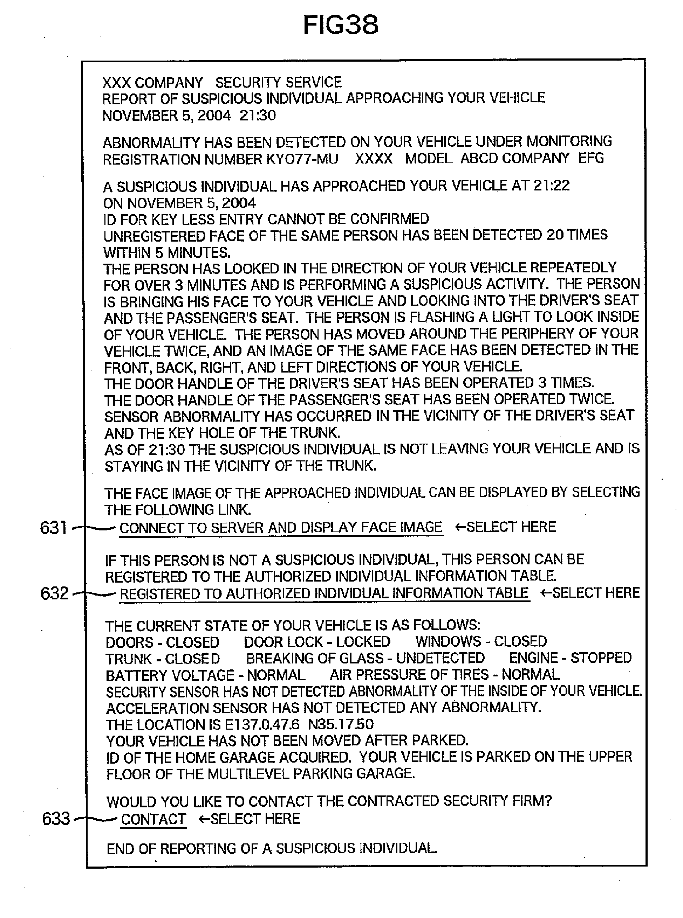

Fig. 38 shows an example of the suspicious individual information displayed by the terminal device 13. In the example of the suspicious individual information shown in Fig. 38, the name of a company which is a report source of the information, and the service name are displayed on the first column, and a result of monitoring and reporting time are displayed on the second column. The details of the result of monitoring including the information on the suspicious individual detected by the monitoring system 11 are displayed from the third line onward.

It should be noted that, in order to protect privacy, a face image of the suspicious individual is not displayed so that the face image of the suspicious individual is not seen easily by a third person. The user can select a text 631 into which a hyperlink is inserted, thereby downloading a face image of the suspicious individual from the center system 12 via the network 14, and displaying the face image on the terminal device 13.

Further, the user can select a text 632 into which a hyperlink is inserted, thereby easily instructing the monitoring system 11 to register the displayed suspicious individual as an authorized individual.

The user can further select a text 633 into which a hyperlink is inserted, thereby easily reporting to a contracted security firm that the suspicious individual is detected by the monitoring system 11, to have a prompt response.

When the terminal device 13 is a portable telephone, an icon or the like may be displayed on a wallpaper of the portable telephone, sound of a specific ring alert may be output, or a vibrator may be vibrated in a specific vibration pattern, whereby the fact that the suspicious individual information is received is reported to the user, and the suspicious individual information is displayed instantly by performing a predetermined operation.

The user selects the text 631 to input to the terminal device 13 a command for displaying the face image of the detected suspicious individual. At this moment, for example, settings may be set such that an individual other than the user cannot display the face image of the suspicious individual easily by, for example, requesting input of a password.

In the step S422, the terminal device 13 requests for transmission of the face image data on the suspicious individual. Specifically, the terminal device 13 transmits to the center system 12 information for requesting transmission of the face image data on the suspicious individual, via the network 14.

In the step S423, the terminal device 13 displays a face image of the suspicious individual. Specifically, in the step S414, the terminal device 13 receives the face image data on the suspicious individual, which is transmitted from the center system 12, via the network 14.. The terminal device 13 displays the received face image of the suspicious individual based on the received face image data, on the display.

The user selects the text 632 of Fig. 38, thereby inputting to the terminal device 13 a command for registering the suspicious individual detected by the monitoring system 11 as an authorized individual.

In the step S424, the terminal device 13 transmits to the center system 12 the authorized individual registration instruction information for instructing registration of the detected suspicious individual as an approach-authorized individual, via the network 14, and the processing of the terminal device 13 ends.

In this manner, if an individual to be registered as an authorized individual is detected as a suspicious individual, the individual detected as a suspicious individual can be registered as an authorized individual simply and promptly. It should be noted that the characteristic amount data registered in this method can be data which is repeatedly used for identifying an approaching individual, and characteristic amount data with high authentication accuracy. Therefore, when registering all the authorized individuals by means of this method, an authorized individual can be identified with a high degree of accuracy.

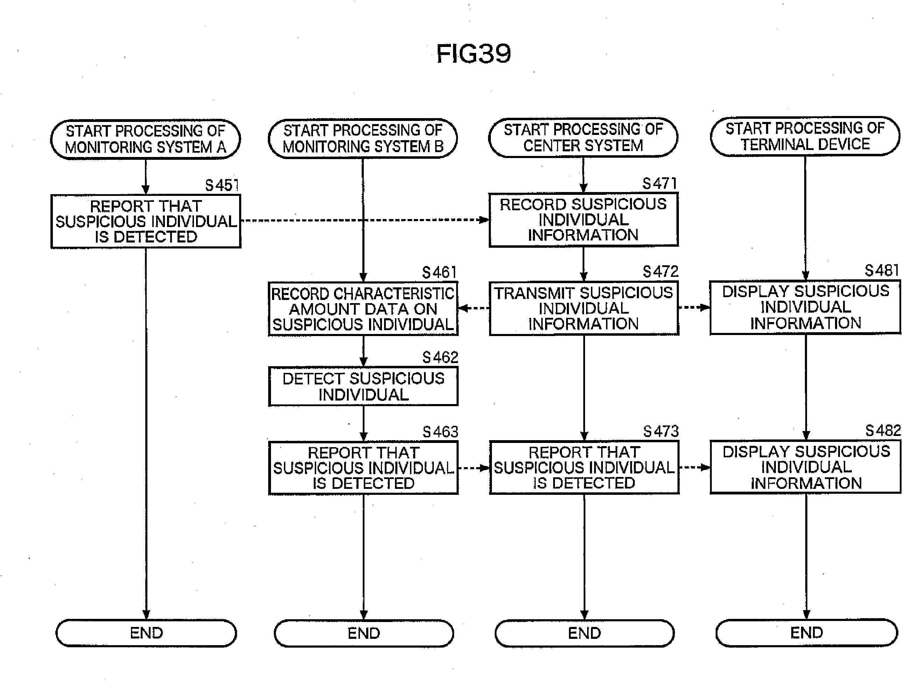

Next, with reference to the flowchart of Fig. 39, there is described an example of a flow of the processing inside the network monitoring system 1 when the information of a suspicious individual is shared by the plurality of monitoring systems 11 . It should be noted hereinafter that, of two monitoring systems 11 used for explaining the flow chart of Fig. 39, one of the monitoring systems 11 is referred to as "monitoring system A" and the other one as "monitoring system B."

First, the processing of the monitoring systemA is described.

In a step S451, the monitoring system A reports that a suspicious individual is detected, by means of the same processing as the processing of the step S301 in Fig. 34 described above, and the processing ends. Accordingly, the information for reporting the detection of the suspicious individual is transmitted from the monitoring system A to the center system 12 via the network 14.

In a step S471 which is described hereinafter, the center system 12 receives the information transmitted from the monitoring system A, and, in a step S472 which is described hereinafter, transmits the suspicious individual information on the suspicious individual detected by the monitoring system A, to the monitoring system B and the terminal device 13 of a user of the monitoring system B.

Next, processing of the monitoring system B is described.

In a step S461, the monitoring system B records the characteristic amount data on the suspicious individual detected by the monitoring system A. Specifically, the monitoring system B receives the suspicious individual information on the suspicious individual detected by the monitoring system A, from the center system 12 via the network 14. The monitoring system B records the characteristic amount data on the suspicious individual which is contained in the suspicious individual information.

Thereafter, the suspicious individual detected by the monitoring system A appears in a monitoring region of the monitoring system B, and is detected by the monitoring system B.

In a step S462, the monitoring system B detects a suspicious individual. Specifically, the monitoring system B detects, on the basis of the characteristic amount data recorded in the step S461, that a detected approaching individual is the suspicious individual detected by the monitoring system A.

In a step S463, the monitoring system B reports that a suspicious individual is detected, by means of the same processing as the processing of the step S301 in Fig. 34 described above, and the processing ends. Accordingly, the information for reporting the detection of the suspicious individual is transmitted from the monitoring system B to the center system 12 via the network 14.

Next, processing performed by the center system 12 is described.

In a step S471, the information on the suspicious individual detected by the monitoring system A is recorded in center system 12 by means of the same processing as the processing of the step S411 of Fig. 37 described above.

In the step S472, the center system 12 transmits the suspicious individual information. Specifically, the center system 12 searches, from among the characteristic amount data items of the suspicious individual which have been accumulated in the past, for data which substantially matches the characteristic amount data on the suspicious individual detected by the monitoring system A. If no data that substantially matching the characteristic amount data is found, the center system 12 judges that a new suspicious individual is detected, and transmits the suspicious individual information of the suspicious individual detected by the monitoring system A, to all of the monitoring systems 11 and terminal devices 13 that are connected to the network 14, via the network 14.

In a step S473, the suspicious individual information of the suspicious individual detected by the monitoring system B is transmitted from the center system 12 to the terminal device 13 of the user of the monitoring system B, by means of the same processing as the processing of the step S412 of Fig. 37 described above, and the processing of the center system 12 ends.

Next, processing of the terminal device 13 of the user of the monitoring system B is described.

In a step S481, the suspicious individual information on the suspicious individual detected by the monitoring system A is displayed on the display of the terminal device 13, by means of the same processing as the processing of the step S421 of Fig. 37 described above.

In a step S428, the suspicious individual information on the suspicious individual detected by the monitoring system B is displayed on the display of the terminal device 13, by means of the same processing as the processing of the step S421 of Fig. 37 described above, and the processing of the terminal device 13 ends.

Accordingly, the monitoring system B can recognize promptly that the detected approaching individual is the suspicious individual detected by the monitoring system A. Moreover, the user of the monitoring system B can promptly known that the suspicious individual detected by the monitoring system A is detected by the monitoring system B as well.

It should be noted that the center system 12 may judge that the suspicious individual detected by the monitoring system A is detected by the monitoring system B as well.

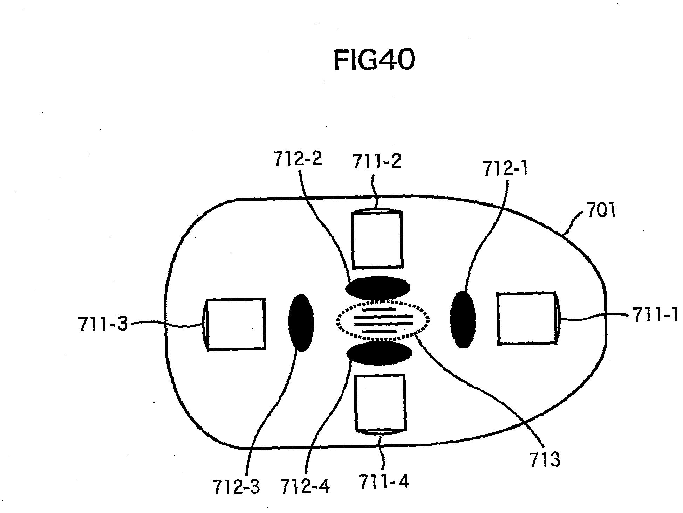

Fig. 40 is a figure schematically showing a configuration example of the appearance of an in-car monitoring device 701 which is an embodiment of the monitoring system 11. The monitoring device 701 is installed, for example, inside a vehicle, and is set in order to protect articles inside the vehicle from damages such as theft, vandalism, and the like. The in-car monitoring device 701 is configured by integrating the image pickup unit and monitor processing unit, and comprises image pickup apparatus 711-1 through 711-4, warning display units 712-1 through 712-4, and a sound warning unit 713. For example, the in-car monitoring device 701 is small enough to carry in one hand.

The image pickup apparatus 711-1 through 711-4 are image pickup apparatus using, for example the logarithm conversion type image pickup element 142 described above. The image pickup apparatus 711-1 through 711-4 are installed so as to be able to image the four directions which run at substantially right angles to one another. Therefore, for example, by setting the monitoring device 701 in the vicinity of the center on the ceiling inside the vehicle, the four directions, i.e. front, back, right, and left, of the vehicle can be monitored.

The warning display units 712-1 through 712-4 comprise, for example, LEDs or lamps, and blink or emit light when a suspicious individual is detected. Accordingly, the suspicious individual can be cautioned, warned, or intimated, and attention of people other than the approaching individual around the vehicle can be caught.

The sound warning unit 713 comprises a speaker or a buzzer, and outputs a warning sound when a suspicious is detected. Accordingly, the suspicious individual can be cautioned, warned, or intimated, and attention of people other than the approaching individual around the vehicle can be caught.

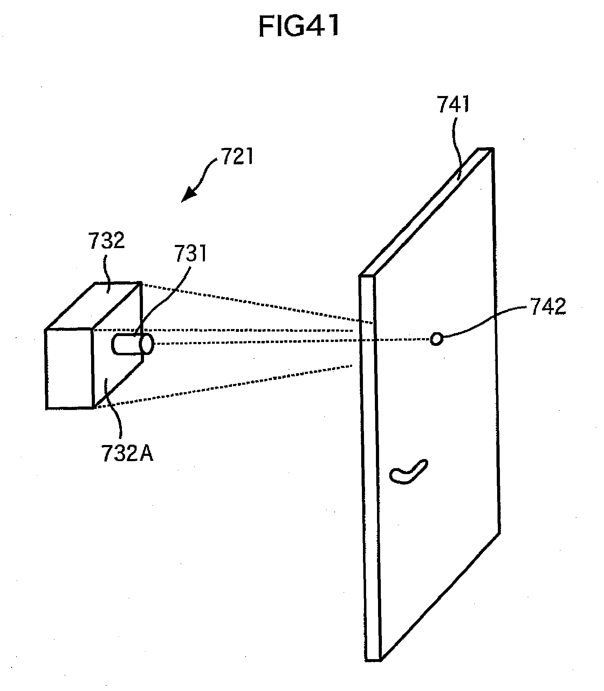

Fig. 41 is a figure schematically showing a configuration example of the appearance of an entrance monitoring system 721 which is another embodiment of the monitoring system 11. The entrance monitoring system 721 is configured by integrating the image pickup unit and monitor processing unit, and comprises an image pickup apparatus 731 and a main body unit 732. The image pickup unit 731 is attached to substantially the center of a surface 732A of the main body unit 732, which has the shape of a rectangular solid.

The image pickup unit 731 is an image pickup apparatus using, for example, the logarithm conversion type image pickup element 142 described above. The main body unit 732 incorporates a monitor processing unit 103.

The entrance monitoring device 721 is installed so that the image pickup unit 731 can image the outside from an inspection window 742 of a door 741 of the entrance, and a suspicious individual who approaches the entrance of a house or an apartment building can be monitored.

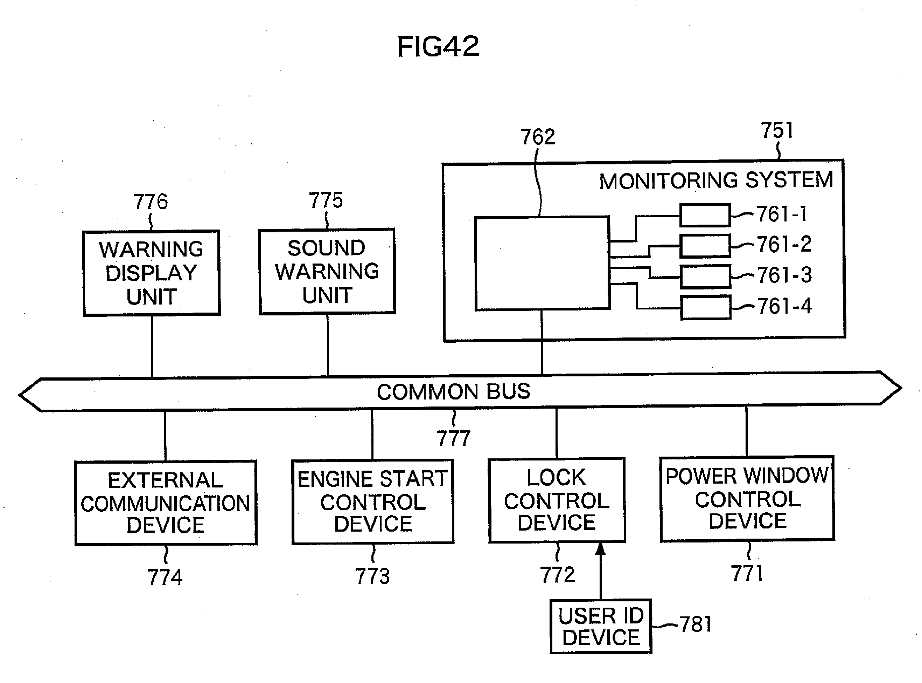

Fig. 42 is a figure showing a configuration example of a monitoring system 751 which is yet another embodiment of the monitoring system 11. The monitoring system 751 comprises an image pickup apparatus 761-1 through 761-4 and a monitor processing unit 762, and is shipped in a manner that it is incorporated in a vehicle.

Each of the image pickup apparatus 761-1 through 761-4 is an image pickup apparatus using, for example, the logarithm conversion type image pickup element 142 described above. The image pickup apparatus 761-1 through 761-4 image a vehicle and a monitoring region around the vehicle, and input data on an imaged monitor image to the monitor processing unit 762.

The monitor processing unit 762 is connected to a power window control device 771, lock control device 772, engine start control device 773, external communication device 774, sound warning unit 775, and warning display unit 776 via a common bus 777. The monitor processing unit 762 performs the above-described monitoring processing with reference to Fig. 19 and Fig. 20 on the basis of the monitor image data.

Furthermore, the monitor processing unit 762 performs control of the vehicle which is the target of monitoring, when a suspicious individual is detected. For example, the monitor processing unit 762 controls the power window unit 771 and closes the windows of the vehicle. The monitor processing unit 762 controls the lock control device 772, which is a receiver of a keyless entry system, and disables a user ID device 781 from releasing the door locks of the vehicle. Furthermore, the monitor processing unit 762 controls the engine start control device 773 and disables the engine of the vehicle from starting. The monitor control device 762 transmits information for reporting a monitoring state to a portable telephone or the like of the user via the external communication device 774.

The monitor processing unit 762 controls the sound warning unit 775 comprising a horn, and outputs a warning sound in order to caution, warn, or intimate the suspicious individual, and catch attention of people other than the approaching individual around the vehicle. The monitor processing unit 762 controls the warning display unit 776 comprising a turn signal, warning light, brake lamp and the like, and allows the warning display unit 776 to blink or flash a light in order to caution, warn, or intimate the suspicious individual, and catch attention of people other than the approaching individual around the vehicle.

In this manner, a suspicious individual can be detected more securely, the occurrence and expansion of damage can be prevented. Moreover, the suspicious individual is cautioned, warned, or intimidated to leave the target of monitoring, the target of monitoring is controlled so as to be protected from the suspicious individual, and a monitoring state is reported to the other monitoring systems 11, center system 12, or terminal devices 13, thus the occurrence and expansion of damage can be prevented. Furthermore, a suspicious individual is detected on the basis of the suspiciousness degree which is computed in various aspects, thus various types of suspicious individuals can be detected securely. By collating the characteristic amount data on an authorized individual and of a previously detected individual with the characteristic amount data on an approaching individual, the approaching individual can be identified, and detection of a suspicious individual can be performed with a high degree of accuracy.

By using the image pickup apparatus 131 which can perform imaging in a wide dynamic range, a monitoring image which is faithful to the subject can be securely imaged regardless of the conditions of the surrounding environment, thus the accuracy of detecting the face of an approaching individual, identifying the face of the approaching individual (face recognition), and detecting movement of the approaching individual is improved, thus detection of a suspicious individual can be performed with a high degree of accuracy. Moreover, the limitation of the usage environment of the image pickup apparatus 131 is small, and fill light or other light is not required in the image pickup apparatus, thus the convenience of the image pickup apparatus is improved. Further, face image data on the approaching individual can be securely acquired regardless of the conditions of the surrounding environment, thus the image is helpful in specifying a suspicious individual at a later time.

An example in which is used the image pickup apparatus 131 using the logarithm conversion type image pickup element 142 is described above. However, if the brightness around the target of monitoring does not fluctuate significantly and the dynamic range of the luminance of the subject is not wide, an image pickup apparatus using the conventional CCD image pickup element or CMOS image pickup element may be used.

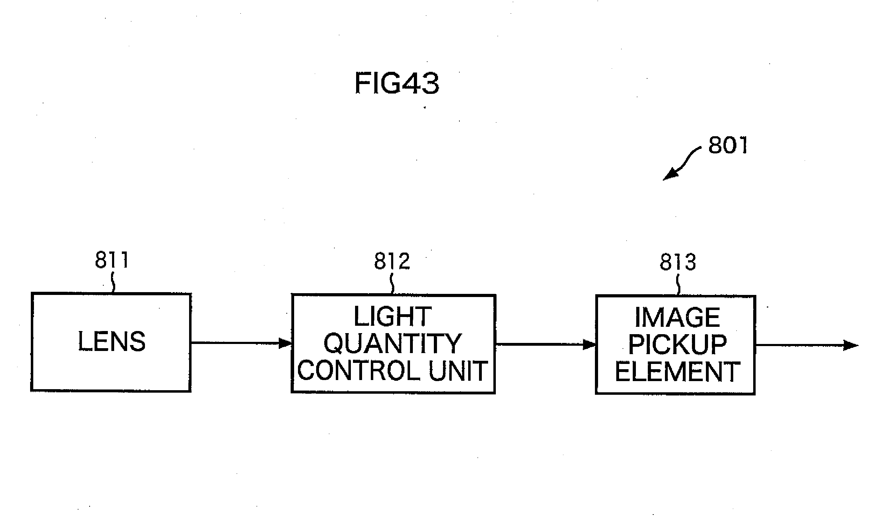

Fig. 43 is a figure showing an example of the configuration of the function of an image pickup apparatus 801 using the conventional CCD image pickup element or CMOS image pickup element. The image pickup apparatus 801 comprises a lens 811, light quantity control unit 812, and image pickup element 813 comprising a CCD image pickup element or CMOS image pickup element. The light quantity control unit 812 controls the aperture or shutter speed of the image pickup apparatus 801, thereby adjusting the intensity of light emitted from the subject and entering the lens 811 (or light reflected from the subject) so that the light quantity falls within the dynamic range of the image pickup element 813. The image pickup element 813 output digital image data substantially proportional to the illuminance of the incident light.

The image pickup apparatus 131 or the image pickup apparatus 801 may be provided with means for controlling the field angle of pan, tilt, zoom, and the like. The field angle may be adjusted on the basis of the peripheral information acquired by the peripheral information acquisition unit 111.

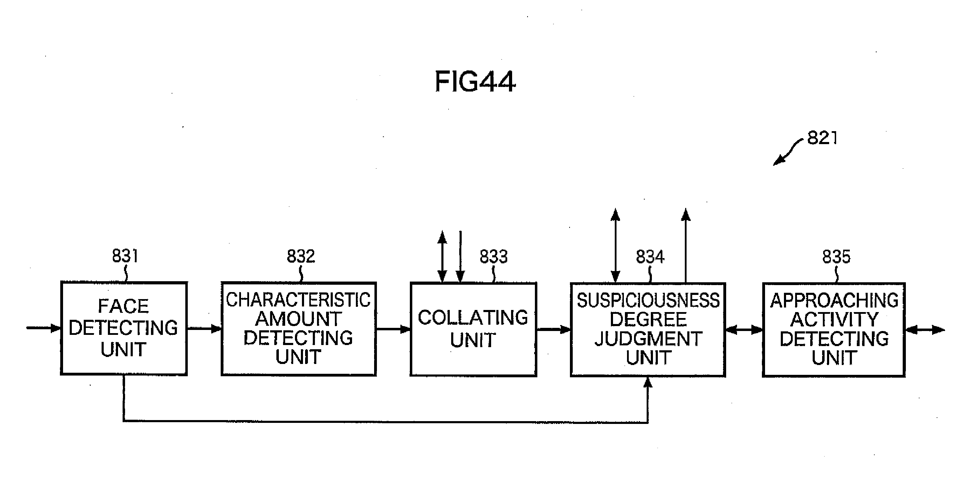

Moreover, in the present invention, instead of using the peripheral information, only the monitor image data can be used to perform monitoring processing. Fig. 44 is a figure showing an example of the configuration of the function of a suspicious individual detecting unit 821 of a case in which only monitor image data is used to perform monitoring processing. The suspicious individual detecting unit 821 comprises a face detecting unit 831, characteristic amount detecting unit 832, collating unit 833, suspiciousness degree judgment unit 834, and approaching activity detecting unit 835. It should be noted that the face detecting unit 831, characteristic amount detecting unit 832, collating unit 833, suspiciousness degree judgment unit 834, and approaching activity detecting unit 835 respectively correspond to the face detecting unit 301, characteristic amount detecting unit 302, collating unit 303, suspiciousness degree judgment unit 311, and approaching activity detecting unit 312 of the suspicious individual detecting unit 112 shown in Fig. 9. By taking this configuration, the approach frequency suspiciousness degree, approach distance suspiciousness degree, meeting time suspiciousness degree, face direction suspiciousness degree, sight line direction suspiciousness degree, and prowl suspiciousness degree of an approaching individual are computed.

The monitor image data and peripheral information acquired from the monitoring system 11 may be transmitted to the center system 12 via the network 14, and the center system 12 may partially or entirely perform the processing of detecting a suspicious individual. Accordingly, the configuration of the monitoring system 11 can be simplified, and miniaturization and low-cost production of the monitoring system can be achieved.

In order to discriminating the face of an individual detected from the monitor image data from the face of an actual individual, the face of an individual on, for example, an advertising display, poster, picture or the like, and the face of a three-dimensional model, it may be judged that the face of the detected individual is not the face of the actual individual if, for example, a motionless state of the detected face lasts for a predetermined period of time. Further, the size of the face may be estimated on the basis of the focus information of the image pickup apparatus 131 and distance information from the distance sensor, and, if the estimated size of the face is extremely big or small compared to the face of an ordinary individual, it may be judged that the detected face is not the face of the actual individual. Also, by investigating the distribution of the pixel values of a face image in the monitor image data from the plurality of image pickup apparatus 131, or by investigating the change of shades occurred due to illumination, reliefs of the face are detected, and when almost no reliefs of the face is detected, it may be judged that the detected face is not the face of the actual individual. Further, by detecting the temperature distribution of the face by means of an infrared thermography device or the like, for example when the temperature of the detected face is extremely high or low compared to the body temperature of an ordinary individual, or when the temperature of the face changes little, it may be judged that the detected face is not the face of the actual individual.

It should be noted that, when an activity of attempting to cause the monitoring system 11 to recognize a false face by means of an advertising display, poster, picture, and three-dimensional model or the like, the suspiciousness degree of the approaching individual may be set high.

Also, as a measure to counter activities where, for example, a sticker is attached to the lens, or where the image pickup apparatus 131 is made useless by putting a cover or the like on the image pickup apparatus 131, the suspiciousness degree of the approaching individual may be set high when it is detected that no changes are observed on a monitor image, that the auto-focus function of the image pickup apparatus 131 focuses at an extremely close range, that images captured by the plurality of image pickup apparatus 131 are not consistent, or that the movement of an object detected by a wireless sensor such as a radio frequency sensor or an infrared radiation sensor is inconsistent with the movement of the subject detected from the monitor image.

If the target of monitoring is set outside, a measure to counter changes of climate may be applied. For example, if the target of monitoring is a vehicle and the image pickup apparatus 131 is set inside the vehicle, as a measure to take when a monitor image cannot be imaged because of snow or frost on the windows of the vehicle, when a radio frequency type object sensor, which is less subject to snow or frost, is used to detect movement of a suspicious individual in a monitoring region, the windshield wiper or an electric heater of the vehicle may be activated to remove the snow or frost on the windows of the vehicle. By automatically removing the snow or frost on the windows of the vehicle, the effect of intimidating a suspicious individual can be obtained. Moreover, after removing the snow or frost on the windows of the vehicle, by emitting intense light to the suspicious individual by means of light-emitting means such as a strobe light, even larger effect of intimidating the suspicious individual can be obtained.

As described above with reference to Fig. 6, when performing user authentication using a user ID, a suspicious individual who attempts to use the user ID inappropriately can be detected by performing the user authentication using a face image as well. However, if an individual who is not registered as a usage-authorized individual borrows the user ID transmission device 171 to perform user authentication, the individual is judged as a suspicious individual.

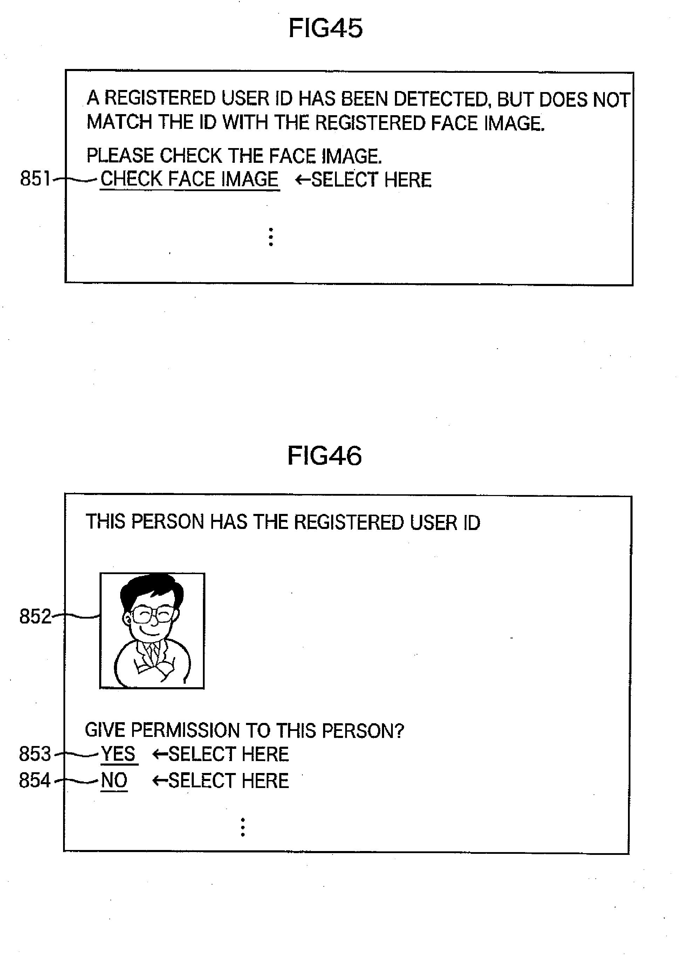

As a measure for such situation, for example, if it is judged that an individual, who has transmitted a user ID using the user ID transmission device 171, is not registered as a usage-authorized individual, the information shown in Fig. 45 is transmitted from the monitoring system 11 to the terminal device 13 of the user. Specifically, the individual who is not registered as a usage-authorized individual reports that the individual requests for user authentication using the user ID. Then, the user selects a text 851 into which a hyperlink is inserted, thereby causing the terminal device 13 to display information including a face image 852 of the individual requesting for user authentication shown in Fig. 46. The user then confirms the face image 852, and judges whether to permit user authentication.

If the user judges that user authentication is permitted and selects a text 853 into which a hypertext is inserted, information indicating permission of user authentication is transmitted from the terminal device 13 to the monitoring system 11, whereby user authentication is permitted. On the other hand, if the user judges that user authentication is not permitted and selects a text 854 into which a hypertext is inserted, information indicating that user authentication is not permitted is transmitted from the terminal device 13 to the monitoring system 11, whereby user authentication is not permitted. In this manner, user authentication can be performed easily when lending the user ID terminal device 171, while ensuring high security.

In addition, the image pickup apparatus used in the present invention may have a structure in which the lens is directly attached to the image pickup element 142. Accordingly, the image pickup apparatus can be realized as a chip of semiconductor, and the monitoring system can be microminiaturized. Accordingly, the monitoring system can be incorporated in small equipment such as a portable telephone, watch and the like.

A suspicious individual who repeatedly appears within a short period of time or a disguised suspicious individual may be identified on the basis of, not only a face image, but also the characteristics of the clothes or personal belongings appearing on the monitor image.

The settings of the judgment conditions used for judging a suspicious individual may be changed as needed by, for example, the user operating the terminal device 13.

It should be noted that the present invention can be applied to various monitoring systems such as in-car monitoring systems ad monitoring systems for a house.

The series of processing operations described above can be executed by hardware, or executed by software. When using software to execute the series of processing operations, a program configuring the software is installed from a network or recording medium into a computer incorporated with specialized hardware, or, for example, a general purpose personal computer capable of executing various functions by installing various programs.

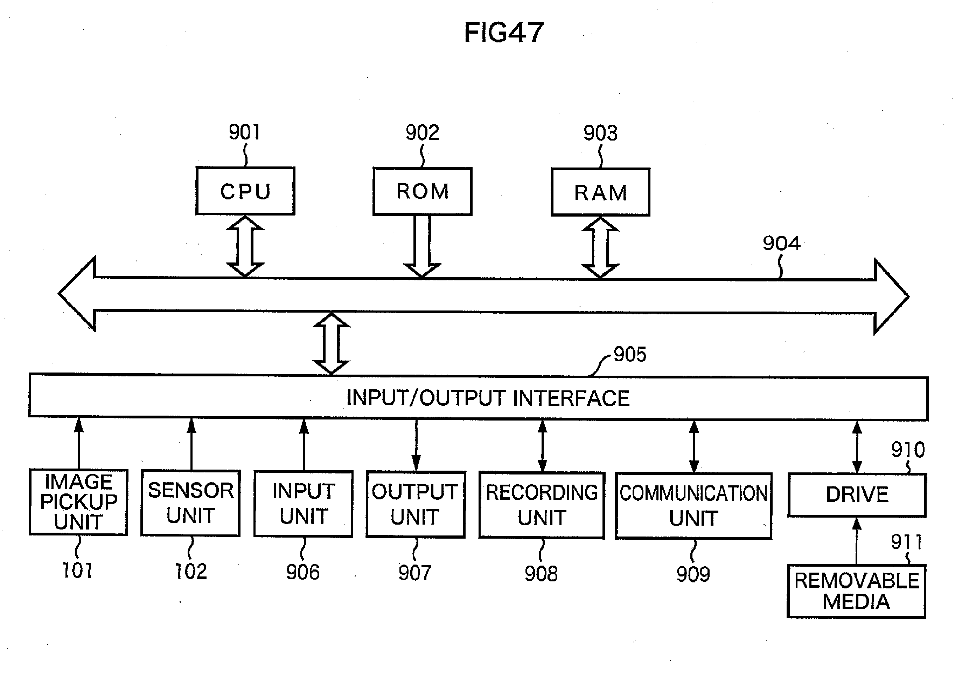

Fig. 47 is a figure showing a configuration example of the inside of a general purpose personal computer 900. A CPU (Central Processing Unit) 901 executes various processing operations according to a program recorded in a ROM (Read Only Memory) 902 or a program loaded into a RAM (Random Access Memory) 903. Data and the like required for the CPU 901 to execute the various processing operations are recorded in the RAM 903 accordingly.

The CPU 901, ROM 902, and RAM 903 are connected with one another via a bus 904. An input/output interface 905 is also connected to the bus 904.

An input unit 906 comprising buttons, switches, a mouse and the like, a display such as CRT (Cathode Ray Tube) or LCD (Liquid Crystal Display), an output unit 907 comprising a speaker and the like, a recording unit 908 comprising a hard disk and the like, and a communication unit 909 comprising a modem, terminal adopter and the like are connected to the input/output interface 905. The communication unit 909 performs communication processing via a network including the Internet.

A drive 910 is connected to the input/output interface 905 according to need, removable media 911 having a magnetic disk, optical disk, magneto-optical disk, semiconductor memory or the like is attached to the input/output interface 905 accordingly, and a computer program which is read from the removable media 911 is installed in the recording unit 908.

Moreover, the image pickup unit 101 and the sensor unit 102 are connected to the input/output interface 905.

The recording medium, which is installed in the computer and records program which is executable by the computer, comprises, as shown in Fig. 47, the removable media 911, which is distributed separately from the device main body in order to provide a user with a program, and which comprises a magnetic disk (including a flexible disk), optical disk (including CD-ROM (Compact Disk-Read Only Memory and DVD (Digital Versatile Disc)), magneto-optical disk (including MD (Mini-Disk)®), semiconductor memory or the like. The recording medium also has a hard disk which is provided to a user in a manner that the hard disk is already incorporated in the device main body, and which is contained in the ROM 903 or recording unit 908 in which a program is recorded.

In the present specification, the steps describing the programs stored in a program storage medium include not only the processing operations executed in chronological order in the described order, but also the processing operation which are not necessarily executed in chronological order but in parallel and independently.

Further, in the present specification, the terms used in the system mean the entire device configured with the plurality of devices and means.

## Claims

1. A monitoring system, comprising:
an image pickup apparatus for imaging monitoring region to output a monitor image;
face detection means for detecting an image of the face of an approaching individual, who approaches an object which is a target of monitoring, from the monitor image;
characteristic amount detection means for detecting amount of characteristics of the approaching individual from the image of the face of the approaching individual;
recording control means for controlling recording of characteristic amount data indicating the characteristic amount of the approaching individual, on recording means;
identifying means for identifying the approaching individual by collating the characteristic amount data on the approaching individual with characteristic amount data on an approaching individual detected in the past and recorded on the recording means; and
judging means for judging whether or not the approaching individual is a suspicious individual, on the basis of the frequency with which the image of the face of the identified approaching individual is detected within a predetermined period of time.

2. The monitoring system according to claim 1, wherein the image pickup apparatus outputs the monitor image comprising pixel values substantially proportional to the logarithm of incident light quantity.

3. A monitoring device, comprising:
face image detection means for detecting an image of the face of an approaching individual, who approaches a target of monitoring, from monitor images obtained by imaging a monitoring region;
characteristic amount detection means for detecting amount of characteristics of the approaching individual from the image of the face of the approaching individual;
first recording control means for controlling recording of characteristic amount data indicating the characteristic amount of the approaching individual, on first recording means;
identifying means for identifying the approaching individual by collating the characteristic amount data on the approaching individual with characteristic amount data on an approaching individual detected in the past and recorded on the first recording means; and
judging means for judging whether or not the approaching individual is a suspicious individual, on the basis of the frequency with which the image of the face of the identified approaching individual is detected within a predetermined period of time.

4. The monitoring device according to claim 3, wherein the judging means further judges whether the approaching individual is a suspicious individual or not, on the basis of a period of time in which the image of the face of the approaching individual is detected continuously.

5. The monitoring device according to claim 3, wherein the judging means further judges whether the approaching individual is a suspicious individual or not, on the basis of the distance between the approaching individual and the object.

6. The monitoring device according to claim 3, further comprising:
sight line detection means for detecting the direction of the line of sight of the approaching individual,
wherein the judging means judges whether the approaching individual is a suspicious individual or not, on the basis of the rate at which the line of sight of the approaching individual focuses on the object within a predetermined period of time.

7. The monitoring device according to claim 3, further comprising:
angle detection means for detecting an angle in which the approaching individual moves around the object, on the basis of the monitor image,
wherein the judging means judges whether the approaching individual is a suspicious individual or not, on the basis of the angle.

8. The monitoring device according to claim 3, further comprising:
disguised suspicious individual detection means for detecting a disguised suspicious individual who is the approaching individual with the face covered, on the basis of a period of time for which a state, in which the approaching individual is rendered in the monitor image but an image of the face of the approaching individual is not detected by the face detection means, lasts.

9. The monitoring device according to claim 3, further comprising protection control means for controlling operation of the object so as to protect the object from a suspicious individual, when judged that the approaching individual is a suspicious individual.

10. The monitoring device according to claim 3, further comprising caution/warning/intimidating means for cautioning, warning, or intimidating the approaching individual to cause the approaching individual to stay away from the object, when judged that the approaching individual is a suspicious individual.

11. The monitoring device according to claim 3, further comprising transmission means for transmitting information on a suspicious individual to other device, when judged that the approaching individual is a suspicious individual.

12. The monitoring device according to claim 3, wherein the identifying means further identifies the approaching individual by collating the characteristic amount data on the approaching individual with characteristic amount data on a non-targeted individual who is not a target of detection of the suspicious individual recorded on second recording means, and the judging means judges that the approaching individual is not a suspicious individual when the approaching individual is identified as the non-targeted individual.

13. The monitoring device according to claim 12, further comprising second recording control means for controlling recording of the characteristic amount data so as to record the characteristic amount data on the approaching individual, who is judged as a suspicious individual, on the second recording means through a user command.

14. The monitoring device according to claim 3, wherein the monitor image is captured by an image pickup apparatus which has a logarithm conversion type image pickup element for outputting a pixel value substantially proportional to the logarithm of incident light quantity by using a subthreshold characteristic of a semiconductor.

15. The monitoring device according to claim 14, wherein the image pickup element outputs a pixel value substantially proportional to the logarithm of incident light quantity by using a subthreshold characteristic of a semiconductor.

16. A monitoring method, comprising the steps of:
detecting an image of the face of an approaching individual, who approaches an object which is a target of monitoring, from monitor images obtained by imaging a monitoring region;
detecting amount of characteristics of the approaching individual from the image of the face of the approaching individual;
controlling recording of characteristic amount data indicating the characteristic amount of the approaching individual, on recording means;
identifying the approaching individual by collating the characteristic amount data on the approaching individual with characteristic amount data on an approaching individual detected in the past and recorded on the recording means; and
judging whether or not the approaching individual is a suspicious individual, on the basis of the frequency with which the image of the face of the identified approaching individual is detected within a predetermined period of time.

17. A program, comprising:
a face image detection step of detecting an image of the face of an approaching individual, who approaches an object which is a target of monitoring, from monitor images obtained by imaging a monitoring region;
a characteristic amount detection step of detecting amount of characteristics of the approaching individual from the image of the face of the approaching individual;
a recording control step of controlling recording of characteristic amount data indicating the characteristic amount of the approaching individual, on recording means;
an identifying step of identifying the approaching individual by collating the characteristic amount data on the approaching individual with characteristic amount data on an approaching individual detected in the past and recorded on the recording means; and
a judging step of judging whether or not the approaching individual is a suspicious individual, on the basis of the frequency with which the image of the face of the identified approaching individual is detected within a predetermined period of time.

18. A recording medium which has recorded therein the program described in claim 17.
